(19) Europäisches Patentamt / European Patent Office / Office européen des brevets

(11) EP 4 278 903 A1

# (12) EUROPEAN PATENT APPLICATION
published in accordance with Art. 153(4) EPC

(43) Date of publication:
**22.11.2023 Bulletin 2023/47**

(21) Application number: **22756296.4**

(22) Date of filing: **18.02.2022**

(51) International Patent Classification (IPC):
***A23L 27/00*** *(2016.01)* ***A23L 27/50*** *(2016.01)*
***A23L 5/10*** *(2016.01)*

(52) Cooperative Patent Classification (CPC):
**A23L 5/10; A23L 27/00; A23L 27/50**

(86) International application number:
**PCT/JP2022/006657**

(87) International publication number:
**WO 2022/176979 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.02.2021 JP 2021025285**
**25.03.2021 JP 2021051168**
**25.03.2021 JP 2021051167**

(71) Applicant: **Kikkoman Corporation**
**Noda-shi, Chiba 278-8601 (JP)**

(72) Inventors:
- **OHNO, Naoto**
  **Noda-shi, Chiba 278-8601 (JP)**
- **KUNITAKE, Yuri**
  **Noda-shi, Chiba 278-8601 (JP)**
- **HANADA, Yoichi**
  **Noda-Shi, Chiba 278-8601 (JP)**
- **OHTA, Akira**
  **Noda-Shi, Chiba 278-8601 (JP)**
- **OKAMURA, Gaku**
  **Noda-Shi, Chiba 278-8601 (JP)**

(74) Representative: **Kramer Barske Schmidtchen Patentanwälte PartG mbB**
**European Patent Attorneys**
**Landsberger Strasse 300**
**80687 München (DE)**

## (54) SOY SAUCE AND SOY SAUCE-LIKE SEASONING HAVING EXCELLENT AROMA, AND METHOD FOR INHIBITING HEATING DEGRADATION ODOR, PACKAGED COMPOSITION HAVING INHIBITED HEATING DEGRADATION ODOR, AND COMPOSITION FOR INHIBITING HEATING DEGRADATION ODOR

(57) An object of the invention is to provide a seasoning which has a flavor inherent in a soy sauce and which can still have a fruity aroma that is hardly felt with conventional soy sauces even after pasteurization, a method for suppressing a heat-deteriorated smell due to a food material to be felt when a container-packed composition containing the food material is heated in a sealed space and the like. The object is achieved by: a soy sauce or a soy sauce-like seasoning in which the content of at least one kind of γ-lactone is 100 ppb to 60,000 ppb; a method for suppressing a heat-deteriorated smell including a step of suppressing a heat-deteriorated smell due to a food material by heating a container-packed composition containing the food material and at least one kind of γ-lactone; and the like.

EP 4 278 903 A1

## Description

TECHNICAL FIELD

The present invention relates to a soy sauce and a soy sauce-like seasoning with an excellent aroma, a method for suppressing a heat-deteriorated smell, a container-packed composition with a suppressed heat-deteriorated smell and a composition for suppressing a heat-deteriorated smell.

BACKGROUND ART

Recently, foods and drinks with a gorgeous aroma such as a fruity aroma are liked. Soy sauces contain 4-hydroxy-2 (or 5)-ethyl-5 (or 2)-methyl-3(2H)-furanone (homofuraneol; HEMF) or the like and thus have a soy sauce-like flavor but lack gorgeousness of aroma.

A soy sauce claimed to have a fruity aroma has been already produced and sold. Such a soy sauce, however, is produced by mixing a fruit, wine or the like, and the flavor thereof is totally different from that of soy sauce. In this regard, a seasoning obtained by adding a flavor to a soy sauce is known. For example, it has been reported that a soy sauce-like seasoning having a fruity aroma can be obtained by externally adding a methyl fatty acid ethyl such as ethyl-2-methylbutanoate to a soy sauce (for example, see Patent Literature 1).

Moreover, a method for improving the soy sauce aroma of a soy sauce characterized by adding a γ-lactone to a soy sauce which has been deteriorated in terms of taste during the processing stage in a concentration range of 0.1 ppt to 10 ppb to recover the aroma inherent in the soy sauce immediately after the production of the soy sauce has been reported (for example, see Patent Literature 2).

In this regard, so far, the present inventors have invented a soy sauce or a soy sauce-like seasoning containing a fatty acid alkyl ester such as ethyl octanoate and ethyl decanoate (for example, see Patent Literature 3).

Here, a method for packing and sealing a food or a seasoning in a heat-resistant container such as a pouch and retort pasteurizing with a retort apparatus is widely used. The retort pasteurization method is a pasteurization method by heating under pressure at a high temperature exceeding 100°C. A general retort pasteurization method is a pasteurization method by heating under pressure to a state in which heat of 120°C for four minutes or the equivalent or higher heat is applied to the centers of the foods in the containers by placing the containers in a retort tank and increasing the temperature of the retort tank to around 120°C using a heating medium such as steam or hot water.

When subjected to a heat pasteurization treatment such as retort pasteurization, foods and seasonings in containers can be stored at normal temperature. The foods and the seasonings packed in a container which have been subjected to a heat pasteurization treatment, however, often generate a peculiar heat-deteriorated smell due to heating in a sealed space. As a result, heated container-packed products have a problem of deteriorated quality.

In this regard, a method for improving the flavor and the aroma of a seasoning and a food using an aroma component, such as an alcohol, a fatty acid ester and a cyclic ether which are used for adding an aroma, has been known so far. As an example using a cyclic ether, a soy sauce-like seasoning characterized by containing 10 μg/mL or more and 100 μg/mL or less of α-methyl-γ-butyrolactone has been known (for example, see Patent Literature 4). A method for producing a food or a drink characterized by using γ-butyrolactone as an active ingredient for improving the taste has been known (for example, see Patent Literature 5).

CITATION LIST

PATENT LITERATURE

Patent Literature 1: JP2016-140321A
Patent Literature 2: JP2014-83028A
Patent Literature 3: JP6343710B
Patent Literature 4: JP6479380B
Patent Literature 5: JP4939464B

SUMMARY OF INVENTION

TECHNICAL PROBLEM

Even when a methyl fatty acid ethyl is added to a soy sauce as described in Patent Literature 1, however, the

fruity aroma of the methyl fatty acid ethyl is weakened by a masking component such as 2-ethyl-6-methylpyrazine in the soy sauce, and there is a problem of the difficulty in stably obtaining a soy sauce having a fruity aroma.

According to the examination of the present inventors, when a γ-lactone is added to a soy sauce in a concentration range of 0.1 ppt to 10 ppb as described in Patent Literature 2, a fruity aroma cannot be added to the soy sauce although the aroma inherent in the soy sauce which has been deteriorated in terms of taste during the processing stage can be recovered.

The fatty acid alkyl ester which is the aroma component contained in the soy sauce or the soy sauce-like seasoning described in Patent Literature 3 has a low boiling point and may vaporize through pasteurization used in a production method of a soy sauce by a brewing process.

Here, the seasonings and the methods described in Patent Literatures 2, 4 and 5 are characterized by adding a lactone, having a cyclic ether, to a seasoning or a food. Accordingly, the seasonings and the methods described in Patent Literatures 2, 4 and 5 do not use the lactone by packing it in a container with the food material before heating to be heated.

Even if the lactone is heated with the food material before heating, the heating is conducted in an open system using a cooking tool such as a pot and a frying pan according to a general cooking method. Moreover, Patent Literatures 2, 4 and 5 do not disclose the phenomenon caused when the lactone is packed in the container with the food material before heating to be heated in a sealed system.

Furthermore, a method for suppressing a heat-deteriorated smell due to a contained food material in a container-packed food and seasoning heated in a sealed space has been rarely known so far.

Thus, a first problem to be solved by the invention is to provide a seasoning which has a flavor inherent in a soy sauce and which can still have a fruity aroma that is hardly felt with conventional soy sauces even after pasteurization.

Moreover, a second problem to be solved by the invention is to provide a method for suppressing a heat-deteriorated smell due to a food material to be felt when a container-packed composition containing the food material is heated in a sealed space. A third problem to be solved by the invention is to provide a heated container-packed composition, a production method thereof and a composition for suppressing a heat-deteriorated smell due to a food material by application of a method for suppressing a heat-deteriorated smell due to a food material.

SOLUTION TO PROBLEM

To solve the first problem, the present inventors have reviewed the components, the production methods and the like of soy sauces, extensively examined the aroma components, which are said to include 1,000 kinds or more and repeated trial and error to obtain a soy sauce and a soy sauce-like seasoning having a fruity aroma. In the process, the inventors have focused on γ-lactones such as γ-nonalactone.

The present inventors have finally succeeded in obtaining a soy sauce and a soy sauce-like seasoning having a sweet fruity aroma like a tropical fruit such as mango, peach and plum using a certain amount of the γ-lactones.

Moreover, the present inventors have found that a liquid fermented seasoning contains γ-nonalactone, which is obtained by a process of: obtaining a soy sauce *moromi* soup by subjecting a soy sauce *moromi,* obtainable by subjecting a soy sauce *koji* to lactic acid fermentation by a soy sauce lactic acid bacterium, to a solid-liquid separation treatment; and then subjecting the obtained soy sauce *moromi* soup to yeast fermentation by a soy sauce yeast (also called a liquid fermentation process below), which is described in Patent Literature 3. However, because a certain amount of γ-nonalactone is hydrolyzed by pasteurization, the obtained liquid fermented seasoning did not contain γ-nonalactone to an extent of exhibiting a fruity aroma after pasteurization.

Thus, the present inventors have repeated trial and error regarding a method for producing a soy sauce and a soy sauce-like seasoning containing γ-nonalactone in an amount which exhibits a fruity aroma after pasteurization. As a result, the inventors have found, surprisingly, that the amount of γ-nonalactone in the obtained liquid fermented seasoning can be increased significantly when the yeast fermentation in the liquid fermentation process is conducted in a sealed system, while the yeast fermentation is conducted in an open system in the general production method of a soy sauce by a brewing process. Moreover, surprisingly, the liquid fermented seasoning obtained in this manner had a fruity aroma even after being subjected to pasteurization.

In this manner, the present inventors have succeeded in creating a soy sauce and a soy sauce-like seasoning containing a certain amount of the γ-lactone as a solution to the first problem of the invention. The invention is an invention which has been completed based on such success examples and findings.

The present inventors also conducted extensive studies to solve the second and third problems and conducted trial and error to obtain a food and a seasoning from which a heat-deteriorated smell based on a contained food material is hardly felt even after a heat treatment such as a heat pasteurization treatment, by appropriately combining many components including aroma components, which are said to include 1,000 kinds or more.

As a result of repeating many failures, the present inventors have found, surprisingly, that by adding thereto the γ-lactone together with the food material, the heat-deteriorated smell based on the food material is suppressed.

Moreover, surprisingly, when the γ-lactones was contained, not only the heat-deteriorated smell but also unpleasant flavors such as a harsh taste, astringency and the smell of the food material, which were felt after a heat treatment, were suppressed, and further a preferable flavor of the food material which was impaired by a heat treatment, such as a soy sauce aroma of the soy sauce, was improved. Based on the findings, the present inventors have succeeded in creating, as solutions to the problems of the invention: a method for suppressing a heat-deteriorated smell including a step of suppressing a heat-deteriorated smell due to a food material by heating a container-packed composition containing the food material and the γ-lactone; a heated container-packed composition and a production method thereof; and a composition for suppressing a heat-deteriorated smell due to a food material. The invention is an invention which has been completed based on such findings and success examples.

Therefore, according to embodiments of the invention, the followings are provided.

[1] A soy sauce or a soy sauce-like seasoning in which the content of at least one kind of γ-lactone selected from the group consisting of γ-lactones represented by the following general formula (I)

[Chem. 1]

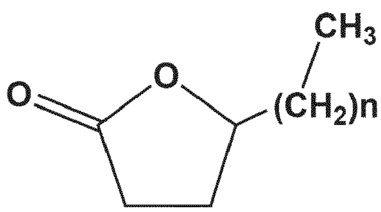

(I)

(in the formula, n represents an integer of 2 to 6)
is 100 ppb to 60,000 ppb.

[2] A method for producing a γ-nonalactone-containing soy sauce including

a step of obtaining a soy sauce *moromi* soup by subjecting a soy sauce *moromi,* obtainable by subjecting a soy sauce *koji* to lactic acid fermentation by a soy sauce lactic acid bacterium, to a solid-liquid separation treatment and

a step of obtaining a γ-nonalactone-containing soy sauce by subjecting the soy sauce *moromi* soup to yeast fermentation by a soy sauce yeast in a sealed system.

[3] The method according to claim 2, wherein the yeast fermentation is yeast fermentation by the soy sauce yeast in a sealed system under a non-stirring condition.

[4] The method described in any one of [2] to [3], wherein the yeast fermentation is yeast fermentation conducted in such a manner that the carbon dioxide volume of the fermented solution is 1 GV to 10 GV

[5] The method described in any one of [2] to [4], wherein the γ-nonalactone-containing soy sauce is a γ-nonalactone-containing soy sauce having a γ-nonalactone content of 100 ppb to 20,000 ppb.

[6] A method for suppressing a heat-deteriorated smell including
a step of suppressing a heat-deteriorated smell due to a food material by heating a container-packed composition containing the food material and at least one kind of γ-lactone selected from the group consisting of γ-lactones represented by the following general formula (I)

[Chem. 2]

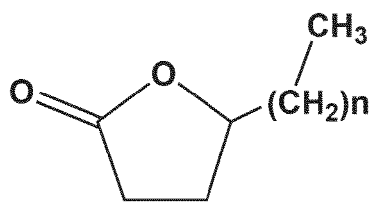

(I)

(in the formula, n represents an integer of 2 to 6).

[7] A method for producing a heated container-packed composition including

a step of obtaining a container-packed composition in which a heat-deteriorated smell due to a food material is suppressed by heating a container-packed composition containing the food material and at least one kind of γ-lactone selected from the group consisting of γ-lactones represented by the following general formula (I)

[Chem. 3]

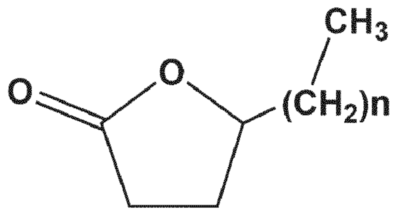

(I)

(in the formula, n represents an integer of 2 to 6).

[8] The method described in any one of [6] to [7], wherein the γ-lactone content is 30 ppb to 3,000 ppb.

[9] The method described in any one of [6] to [8], wherein the food material is at least one kind of food material selected from the group consisting of a seasoning component, a vegetable, meat, seafood and a processed food.

[10] The method described in any one of [6] to [8], wherein the food material is at least one kind of food material selected from the group consisting of a soy sauce, soybean paste, a carrot, beef, pork, chicken, fish and soy protein.

[11] The method described in any one of [6] to [10], wherein the container-packed composition is a container-packed composition for seasoning or a container-packed processed food.

[12] A heated container-packed composition

containing a food material and at least one kind of γ-lactone selected from the group consisting of γ-lactones represented by the following general formula (I)

[Chem. 4]

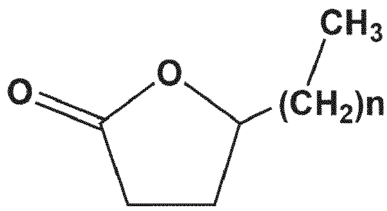

(I)

(in the formula, n represents an integer of 2 to 6),

wherein a heat-deteriorated smell due to the food material is suppressed more than that of a heated container-packed composition that contains the food material and that does not substantially contain the γ-lactone.

[13] A composition for suppressing a heat-deteriorated smell due to a food material,

wherein the composition contains at least one kind of γ-lactone selected from the group consisting of γ-lactones represented by the following general formula (I)

[Chem. 5]

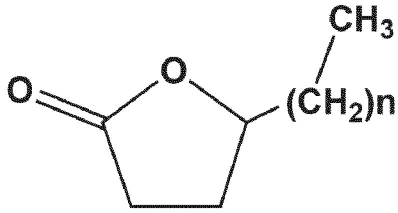

(I)

(in the formula, n represents an integer of 2 to 6) and
the composition is used by packing in a container with a food material before heating to be heated.

[14] The composition described in any one of [12] to [13], wherein the γ-lactone content is 30 ppb to 3,000 ppb.
[15] The composition described in any one of [12] to [14], wherein the food material is at least one kind of food material selected from the group consisting of a seasoning component, a vegetable, meat and seafood.
[16] The composition described in any one of [12] to [14], wherein the food material is at least one kind of food material selected from the group consisting of a soy sauce, beef, pork, chicken, fish and soy protein.
[17] The composition described in any one of [12] and [14] to [16], wherein the container-packed composition is a container-packed composition for seasoning or a container-packed processed food.

ADVANTAGEOUS EFFECTS OF INVENTION

According to the soy sauce and the soy sauce-like seasoning of an embodiment of the invention, a seasoning which has a flavor inherent in a soy sauce and which also has a sweet fruity aroma like a tropical fruit that is hardly felt with conventional soy sauces can be provided. In addition, the soy sauce and the soy sauce-like seasoning of an embodiment of the invention have a fruity aroma even after pasteurization and thus can be produced in both scales of household scale and industrial scale regardless of with or without pasteurization.
According to the method and the composition of an embodiment of the invention, a heat-deteriorated smell due to a food material to be felt when a container-packed composition containing the food material is heated in the space of a sealed container can be suppressed. Moreover, according to the method and the composition of an embodiment of the invention, an unpleasant flavor to be felt when a food material in a sealed container is heat-treated can be suppressed, and a preferable flavor of the food material which is impaired by a heat treatment can be improved. Accordingly, according to the method and the composition of an embodiment of the invention, a heated container-packed seasoning and a heated container-packed processed food with high palatability in which the deterioration of a food material by a heat treatment in a sealed container is reduced and in which the flavor expected in the food material is exhibited are provided.

DESCRIPTION OF EMBODIMENTS

Although details of embodiments of the invention are explained below, the invention is not limited only to the matters of this item and can take various embodiments as long as the objects of the invention are achieved.
Each term in this description is used in the meaning generally used by those skilled in the art in the field of foods unless otherwise specified and should not be interpreted as having an unduly restrictive meaning. Because the suppositions and the theories given in this description have been made based on the findings and the experiences made by the present inventors so far, the invention should not adhere only to such suppositions and theories.
The "content" has the same meaning as concentration and means the ratio of the amount of a component with respect to the total amount of the seasoning or the composition. The total amount of the contents of the components, however, does not exceed 100%. In this description, the unit of the content means "mass% (wt%)" unless otherwise specified.
The "composition" is not particularly limited as a composition having the generally used meaning but is, for example, a composition composed of two or more components in combination.
The term "ppb" is a unit as the generally known meaning, and specifically, 1 ppb is $1/10^9$ and is 1 ng/g in terms of mass and substantially 1 μg/l in terms of mass volume.
The term "ppm" is a unit as the generally known meaning, and specifically, 1 ppm is $1/10^6$ and is 1 μg/g in terms of mass and substantially 1 mg/l in terms of mass volume.
The "to" in a numerical range refers to a range including the values before and after the term, and for example,

"100 ppb to 60,000 ppb" means the range which is 100 ppb or more and 60,000 ppb or less.

The "contain/include" means that an element other than the element(s) which is clearly stated to be contained/included can be added (having the same meaning as "contain/include at least") but includes "consist of" and "consist essentially of". That is, the "contain/include" can mean that the subject matter contains/includes a clearly stated element(s) and any one, two or more kinds of element, consists of a clearly stated element(s) or consists essentially of a clearly stated element(s). The element is a limiting subject matter such as a component, a step, a condition and a parameter or the like.

The term "and/or" means any one of a plurality of related items listed, an arbitrary combination of two or more thereof or a combination of all thereof.

The number of digits of an integer value is the same as that of a significant figure. For example, the significant figure of 1 has one digit, and the significant figure of 10 has two digits. In addition, in a decimal value, the number of digits of a fractional value after the decimal point thereof is the same as that of the significant figure thereof. For example, the number of 0.1 has one digit, and the number of 0.10 has two digits.

The "fruity aroma" means a sweet aroma like a tropical fruit such as mango, peach and plum which is felt only by the nose without drinking or eating. The sweet aroma like a tropical fruit is an aroma which reminds of a tropical fruit unlike the white wine-like sweet aroma made of grapes as a raw material.

The "flavor inherent in a soy sauce" means an aroma of an unheated soy sauce produced by a general brewing process from soybeans and wheat as raw materials which comes up from the inside of the mouth to the nose during drinking or eating, and the flavor inherent in a soy sauce is also called a soy sauce-like taste.

The "fermentation" and the "aging" are not distinguished strictly, and both are sometimes together called fermentation.

The "heat-deteriorated smell" due to a food material refers to an unpleasant smell and a steamed smell (a smell with a damp feeling in the nose) which come up from the inside of the mouth to the nose when a food and a seasoning containing a food material packed in a sealed container such as a retort pouch is eaten after heated and then opened. For example, when the food material is meat, the heat-deteriorated smell refers to a composite smell of the animal smell peculiar to the animal of the lipids in the meat and the unpleasant smell generated by oxidization of the lipids of the meat by heating called warmed-over flavor (wof). When the food material is soy protein, the heat-deteriorated smell refers to a composite smell of the grassy smell of soybeans, the soybean flour-like smell and the peculiar unpreferable smell generated when soybeans are heated in a sealed system. The "suppression of a heat-deteriorated smell due to a food material" refers to making the heat-deteriorated smell generated by a heat treatment not being easily felt but does not prevent the possibility of inhibiting the heat-deteriorated smell from being generated.

The "F value" is the pasteurization effect in all the heat pasteurization treatment steps from heating to cooling indicated with the pasteurization time (minute) at a standard temperature and can be calculated by the following equation (for example, see newsletter of Tokyo Metropolitan Food Technology Research Center No. 15 and the like).

$$F=t\times10\text{^}((T-To)/Z)$$

T: temperature (°C) during heat pasteurization treatment
To: standard temperature (°C)
t: time (minute)
Z: temperature (°C) for making the D value (time (minute) for making the viable bacterial count 1/10) 1/10

The F value changes with the standard temperature and the parameter Z value of the heat resistance of a microorganism. Thus, the F value at a standard temperature of 121.1°C and a Z value of 10°C is called "Fo value". The Fo value is calculated by the following equation (for example, see Heat Pasteurization of Container-Packed Foods (Theory and Application) (issued by Japan Canners Association) and the like).

$$Fo=t\times10\text{^}((T-121.1)/10)$$

The Fo value serves as an indicator of the ability of inactivating microorganisms in wet heat bacterial removal. For example, the Fo value of a heat pasteurization treatment at 110°C for nine minutes is 0.70 when calculated by applying the values to the above equation. In this regard, the value is a value obtained when the temperature instantly reaches 110°C and is instantly cooled after nine minutes. In practice, the Fo value is calculated and output by a heat pasteurizer during the heat pasteurization treatment at certain intervals. Thus, even when the heat pasteurizer shows the Fo value of 0.70, the temperature and the time are not necessarily the above values. Of the heat pasteurization treatments in the Examples described below, the treatments with the Fo values described show heat pasteurization

treatments which were conducted by adjusting the temperature and the time in such a manner that the Fo value shown by the heat pasteurizer became a certain value and to which the temperature and the time calculated by the above equation were added for reference, and the treatments with the temperatures and times described show heat pasteurization treatments which were regulated to maintain for a certain period after reaching the temperature.

[Liquid Seasoning]

The soy sauce and the soy sauce-like seasoning (these are also collectively called a liquid seasoning) of an embodiment of the invention contain at least one kind of γ-lactone selected from the group consisting of γ-lactones represented by the following general formula (I)

[Chem. 6]

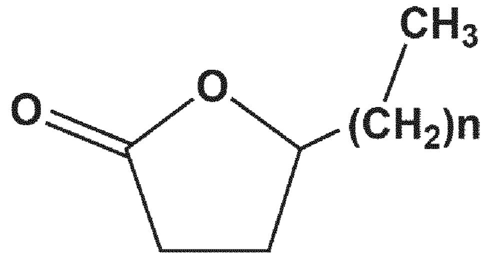

(I)

(in the formula, n represents an integer of 2 to 6.) That is, the liquid seasoning of an embodiment of the invention contains any one kind, two kinds, three kinds, four kinds or five kinds of γ-heptalactone having seven carbon atoms in total because n is 2 in the general formula (I), γ-octalactone having eight carbon atoms in total because n is 3 in the general formula (I), γ-nonalactone having nine carbon atoms in total because n is 4 in the general formula (I), γ-decanolactone having 10 carbon atoms in total because n is 5 in the general formula (I) and γ-undecanolactone having 11 carbon atoms in total because n is 6 in the general formula (I).

The liquid seasoning of an embodiment of the invention can be provided for improving the taste of a food or a drink as a soy sauce and a soy sauce-like seasoning which have a flavor inherent in a soy sauce and which also have an excellent fruity aroma that is hardly felt with conventional soy sauces because the γ-lactone of the general formula (I) is contained. As a result, when the liquid seasoning of an embodiment of the invention is used, a seasoning and a food or a drink having both a flavor of a soy sauce and a fruity aroma can be obtained.

The liquid seasoning of an embodiment of the invention is a seasoning of either a soy sauce or a soy sauce-like seasoning and is not particularly limited as long as the liquid seasoning is used for the purpose of improving the taste when a food material is processed.

Examples of the soy sauce (also referred to as *shoyu*) include those described in the "Quality Labeling Standards for Soy Sauce" and the "Japanese Agricultural Standards for Soy Sauce" in Ministry of Agriculture, Forestry and Fisheries Notification and the like, and specific examples thereof include a *koikuchi* (dark-colored) soy sauce, an *usukuchi* (light-colored) soy sauce, a *shiro* (very light-colored) soy sauce, a *tamari* (rich) soy sauce and a rebrewed soy sauce. Other examples include an unheated soy sauce, a *dashi* (stock) soy sauce, a glazing soy sauce, a *kiage* (just pressed) soy sauce, a fast brewed soy sauce, an amino acid-mixed soy sauce, a soy sauce with a reduced sodium chloride content and a soy sauce with a low sodium chloride content. The soy sauce may be one kind alone or a combination of two or more kinds of those exemplified above.

The soy sauce-like seasoning refers to a seasoning used for the same application as that of the "soy sauce" defined in the Japanese Agricultural Standards and is a seasoning including a soy sauce, a soy sauce processed product and a fermented seasoning. As long as the soy sauce-like seasoning has a flavor inherent in a soy sauce and is used for the same application as that of the "soy sauce", the soy sauce-like seasoning does not have to be obtained using a raw material (for example, soybeans or wheat) derived from a soy sauce *koji.*

The γ-lactone content of the liquid seasoning is an amount with which the liquid seasoning has a fruity aroma. Specifically, the γ-lactone content may be in the range of 100 ppb to 60,000 ppb. In this regard, the γ-lactone content is set in a preferable range depending on the kind of the γ-lactone.

The γ-heptalactone content is 100 ppb to 40,000 ppb and is, in view of a stronger fruity aroma, preferably 100 ppb to 25,000 ppb, more preferably 100 ppb to 10,000 ppb. When the γ-heptalactone content is 50,000 ppb or more, an

unpleasant smell may be felt, and the aroma of the whole liquid seasoning may become unpleasant.

The γ-octalactone content is 100 ppb to 40,000 ppb and is, in view of a stronger fruity aroma, preferably 100 ppb to 25,000 ppb, more preferably 100 ppb to 10,000 ppb. When the γ-octalactone content is 50,000 ppb or more, an unpleasant smell may be felt, and the aroma of the whole liquid seasoning may become unpleasant.

The γ-nonalactone content is 100 ppb to 60,000 ppb and is, in view of a stronger fruity aroma, preferably 100 ppb to 50,000 ppb, more preferably 100 ppb to 25,000 ppb. When the γ-nonalactone content is 100,000 ppb or more, an unpleasant smell may be felt, and the aroma of the whole liquid seasoning may become unpleasant.

The γ-decanolactone content is 100 ppb to 15,000 ppb and is, in view of a stronger fruity aroma, preferably 200 ppb to 10,000 ppb, more preferably 250 ppb to 10,000 ppb. When the γ-decanolactone content is 50,000 ppb or more, an unpleasant smell may be felt, and the aroma of the whole liquid seasoning may become unpleasant.

The γ-undecanolactone content is 100 ppb to 15,000 ppb and is, in view of a stronger fruity aroma, preferably 200 ppb to 10,000 ppb, more preferably 250 ppb to 10,000 ppb. When the γ-undecanolactone content is 50,000 ppb or more, an unpleasant smell may be felt, and the aroma of the whole liquid seasoning may become unpleasant.

A liquid seasoning containing all of γ-heptalactone, γ-octalactone, γ-nonalactone, γ-decanolactone and γ-undecanolactone in amounts in the respective preferable ranges has a fruity aroma and is preferable, and no unpleasant smell is felt. However, the total γ-lactone content of the liquid seasoning of an embodiment of the invention may be in the range of 100 ppb to 60,000 ppb.

Of the γ-lactone contents, one which can add a fruity aroma to a liquid seasoning across a wide range is γ-nonalactone.In fact, according to the findings of the present inventors, a liquid seasoning containing γ-nonalactone has a more preferable sweet fruity aroma like a tropical fruit. Thus, a preferable embodiment of the invention is a liquid seasoning having a γ-nonalactone content of 100 ppb to 60,000 ppb.

In a case where the content of the γ-lactone represented by the general formula (I) in the liquid seasoning is lower than the certain lower limit described above, the amount can be adjusted to the certain amount by adding the γ-lactone represented by the general formula (I) or a material containing the γ-lactone represented by the general formula (I) to the liquid seasoning. The material containing the γ-lactone represented by the general formula (I) is not particularly limited as long as the γ-lactone-containing material can be found to contain the y-lactone represented by the general formula (I) by the measurement method described in the Examples described below.

According to the examination of the present inventors, a commercial unheated soy sauce and a commercial *koikuchi* (dark-colored) soy sauce can contain γ-nonalactone in the range of 0 ppb to 15.6 ppb. Thus, for example, when 84.4 ppb of γ-nonalactone is added to a commercial unheated soy sauce having a γ-nonalactone content of 15.6 ppb, a soy sauce having a γ-nonalactone content of 100 ppb is obtained.

Because the content of the γ-lactone represented by the general formula (I) is the above amount, the liquid seasoning has a fruity aroma which is hardly felt with conventional soy sauces. The fruity aroma of the γ-lactone represented by the general formula (I), however, can be masked by 2-ethyl-6-methylpyrazine inherently contained in conventional soy sauces. Thus, the 2-ethyl-6-methylpyrazine content of the liquid seasoning is, for example, preferably an amount with which the fruity aroma of the γ-lactone represented by the general formula (I) is not suppressed.

In fact, a liquid seasoning obtainable by adding 1,000 ppb of γ-heptalactone, γ-octalactone, γ-nonalactone, γ-decanolactone or γ-undecanolactone to a soy sauce having a 2-ethyl-6-methylpyrazine content of around 2 ppb has a more preferable fruity aroma compared to a liquid seasoning obtainable by adding the γ-lactone to a soy sauce having a 2-ethyl-6-methylpyrazine content of around 10 ppb.

The liquid seasoning is characterized by having a fruity aroma and also having a flavor inherent in a soy sauce due to HEMF or the like due to containing a soy sauce component. Thus, the HEMF content of the liquid seasoning is preferably 20 ppm or more, more preferably 30 ppm or more, further preferably 40 ppm or more. The upper limit of the HEMF content may be appropriately set depending on the desired flavor inherent in a soy sauce and is typically around 400 ppm.

The content of the γ-lactone represented by the general formula (I) in the liquid seasoning can be measured by the method described in the Examples described below. Moreover, according to the method, 2-ethyl-6-methylpyrazine and HEMF can be measured. Thus, the contents of the γ-lactone represented by the general formula (I) above, 2-ethyl-6-methylpyrazine and HEMF are values obtainable by measuring by the method described in the Examples described below or a similar method thereof. Here, for 2-ethyl-6-methylpyrazine and HEMF, the peak areas may be determined using the m/z below.

2-Ethyl-6-methylpyrazine: m/z 121
HEMF: m/z 142

The liquid seasoning of an embodiment of the invention should contain the γ-lactone and can contain various other components as long as the solutions to the problems of the invention are not inhibited. The other components are not particularly limited, but examples thereof include seasoning components and food materials, and specific examples

thereof include vegetable components (radish, carrot, onion, garlic and the like), yeast extracts, meat extracts (chicken extract, pork extract, beef extract, fish extract and the like), fruit juices (apple juice and the like), spices (ginger, red pepper, pepper, basil, oregano and the like), chemical seasonings (monosodium glutamate, sodium inosinate and the like), flavors and the like. One kind thereof alone or a combination of two or more kinds can be used. The other component content can be appropriately set as long as the object of the invention can be achieved.

The liquid seasoning of an embodiment of the invention can be a container-packed liquid seasoning which is packed and sealed in a container, namely a container-packed soy sauce or a container-packed soy sauce-like seasoning. The container is not particularly limited, but examples thereof include packaging containers such as a single-layer or laminate film bag, a retort pouch, vacuum packaging, an aluminum container, a plastic container, a bottle and a can made of a metal such as aluminum, paper, plastic such as PET, glass or the like. The container-packed soy sauce and the container-packed soy sauce-like seasoning can be distributed and sold in the market independently by itself.

The liquid seasoning of an embodiment of the invention can be used in the same manner as a regular liquid seasoning. That is, the liquid seasoning of an embodiment of the invention can be used alone or by mixing or combining with another seasoning component such as a soup stock, an acidulant, an amino acid, a nucleic acid, an organic acid, a protein hydrolysate, a sugar, a *sake,* a sweet *sake,* an alcohol, a thickener, an emulsifier and an inorganic salt in addition to the vegetable component, the yeast extract, the meat extract, the fruit juice, the spice, the chemical seasoning or the flavor described above for a method for cooking or processing various food materials. For example, the liquid seasoning of an embodiment of the invention can be used for various foods such as Japanese foods, Western foods and Chinese foods and can be specifically used for deep-fried foods, grilled slices of meat, *udon*, *soba*, ramen, Hamburg steak, meatballs, simmered chicken and root vegetables, *teriyaki*, curry, stew, hashed beef and the like but it is not limited thereto.

A non-limiting specific embodiment of the liquid seasoning of an embodiment of the invention is, for example, a liquid seasoning in which the contents of the γ-lactones represented by the general formula (I) (here, the total γ-lactone content is 100 ppb to 60,000 ppb) are as follows:

γ-heptalactone content: 100 ppb to 25,000 ppb,
γ-octalactone content: 100 ppb to 25,000 ppb,
γ-nonalactone content: 100 ppb to 50,000 ppb,
γ-decanolactone content: 200 ppb to 10,000 ppb and/or
γ-undecanolactone content: 200 ppb to 10,000 ppb.

Another non-limiting specific embodiment of the liquid seasoning of an embodiment of the invention is, for example, a liquid seasoning in which the contents of the γ-lactones represented by the general formula (I) (here, the total γ-lactone content is 100 ppb to 60,000 ppb) are as follows:

γ-heptalactone content: 100 ppb to 10,000 ppb,
γ-octalactone content: 100 ppb to 10,000 ppb,
γ-nonalactone content: 100 ppb to 25,000 ppb,
γ-decanolactone content: 250 ppb to 10,000 ppb and/or
γ-undecanolactone content: 250 ppb to 10,000 ppb.

The liquid seasoning of an embodiment of the invention can be produced by adding the γ-lactone represented by the general formula (I) or a material containing the γ-lactone to a soy sauce and a seasoning for a soy sauce. For example, by mixing a commercial soy sauce and the γ-lactone represented by the general formula (I), the liquid seasoning of an embodiment of the invention can be produced.

Moreover, the liquid seasoning of an embodiment of the invention may be produced by a method such that a liquid seasoning is obtained in which the content of the γ-lactone represented by the general formula (I) is a certain amount. Such a production method is the production method of a γ-nonalactone-containing soy sauce containing γ-nonalactone described below or the like.

[Production Method of γ-Nonalactone-Containing Soy Sauce]

According to another side of the invention, a method for producing a γ-nonalactone-containing soy sauce, which is a soy sauce containing γ-nonalactone, is provided. The method of an embodiment of the invention includes a step of obtaining a soy sauce *moromi* soup by subjecting a soy sauce *moromi*, obtainable by subjecting a soy sauce *koji* to lactic acid fermentation by a soy sauce lactic acid bacterium, to a solid-liquid separation treatment and a step of obtaining a γ-nonalactone-containing soy sauce by subjecting the soy sauce *moromi* soup to yeast fermentation by a soy sauce yeast in a sealed system.

The outline of the method of an embodiment of the invention is a method including obtaining a soy sauce *moromi* soup by subjecting a soy sauce *moromi,* obtainable after conducting lactic acid fermentation by a method for producing a regular soy sauce, to solid-liquid separation and subsequently subjecting the soy sauce *moromi* soup to yeast fermentation by a soy sauce yeast under certain conditions. In the method of an embodiment of the invention, unlike a method for producing a regular soy sauce, rather than continuously subjecting a soy sauce *moromi* after lactic acid fermentation to yeast fermentation, a soy sauce *moromi* is separated into an insoluble solid part (soy sauce *moromi* concentrate) and a liquid part (soy sauce *moromi* soup) before subjecting to yeast fermentation, and subsequently, yeast fermentation of the soy sauce *moromi* soup is conducted under certain conditions. Therefore, the method includes a step of obtaining a soy sauce *moromi* soup from a soy sauce *moromi* and a step of conducting yeast fermentation. The method preferably includes a step of obtaining a soy sauce *moromi* as a pre-stage. The thus obtained liquid seasoning can be, for example, a soy sauce having a $\gamma$-nonalactone content of 100 ppb to 20,000 ppb.

The step of obtaining a soy sauce *moromi* is not particularly limited as long as the step is a step until a soy sauce *moromi* is obtained in a generally known production method of a soy sauce. In this regard, in the case of a brewing process, a soy sauce is produced by obtaining a soy sauce *koji* by inoculating and culturing a seed *koji* starter including a *koji* mold in a mixture of a protein raw material such as heat-denatured soybeans and a starch raw material such as wheat gelatinized by heating to produce *koji*, subsequently obtaining a soy sauce *moromi* by putting the obtained soy sauce *koji* into a saline solution for lactic acid fermentation and aging, subsequently obtaining an aged *moromi* by subjecting the obtained soy sauce *moromi* to yeast fermentation and aging, subsequently obtaining an unheated soy sauce by subjecting the obtained aged *moromi* to a pressing treatment or a filtration treatment, subsequently pasteurizing the obtained unheated soy sauce and the like.

An embodiment of the step of obtaining a soy sauce *moromi* is, for example, a step of inoculating a seed *koji* starter into a soy sauce raw material that is a mixture of soybeans denatured by steaming, roasted crushed cereal grains and the like, *koji*-producing with aeration at 10°C to 40°C for around one day to four days to obtain a soy sauce *koji* and subsequently subjecting a material obtained by putting the soy sauce *koji* into a saline solution having a sodium chloride concentration of 15% (w/v) to 35% (w/v), preferably 20% (w/v) to 30% (w/v), and further arbitrarily adding a soy sauce lactic acid bacterium thereto to lactic acid fermentation and aging at 10°C to 40°C for 10 days to 200 days, preferably for 15 days to 40 days, while appropriately stirring, thereby obtaining a soy sauce *moromi*, or another step.

The soy sauce raw material is not particularly limited, but examples thereof include soybeans such as whole soybeans and defatted soybeans, cereal grains such as wheat, barley, naked barley and Job's tears, cereal grain gluten, rice, corn and the like.

The seed *koji* starter is not particularly limited as long as it is a *koji* mold that is utilized when producing a regular soy sauce, but examples thereof include microorganisms of the genus *Aspergillus* such as *Aspergillus oryzae*, *Aspergillus sojae* (A. *sojae*) and the like. The soy sauce lactic acid bacterium is not particularly limited as long as it is a soy sauce lactic acid bacterium that is utilized when producing a regular soy sauce, but examples thereof include salt-tolerant lactic acid bacteria such as *Tetragenococcus halophilus* and the like.

In the step of obtaining a soy sauce *moromi,* when the amount of the starch raw material such as wheat and rice is small in the soy sauce raw material, the reducing sugar content becomes small, and thus, there is a possibility that a soy sauce *moromi* with which yeast fermentation may be appropriately conducted cannot be obtained. Therefore, the amount of the starch raw material such as wheat and rice in the soy sauce raw material is preferably such an amount that a soy sauce *moromi* having a high reducing sugar content can be obtained. However, this shall not apply in a case where a soy sauce *moromi* having a high reducing sugar content is obtained by adding a reducing sugar component, for example, glucose, fructose, maltose or the like, to a soy sauce *moromi.* In this regard, the soy sauce *moromi* refers to one which has not been subjected to yeast fermentation, and yeast fermented products such as an unheated soy sauce which are used for a method for producing a rebrewed soy sauce are excluded. Moreover, the soy sauce *moromi* is preferably subjected to lactic acid fermentation, but it does not have to be subjected to lactic acid fermentation.

In the step of obtaining a soy sauce *moromi* soup, a soy sauce *moromi* soup is obtained by removing an insoluble solid content derived from a soy sauce raw material such as soybeans and wheat from a soy sauce *moromi* (lactic acid fermented product) containing the insoluble solid content. The method for obtaining a soy sauce *moromi* soup by removing the insoluble solid content from a soy sauce *moromi* is not particularly limited, including, for example: a generally known solid-liquid separation method or the like; specifically, a pressing treatment, a filtration treatment or the like that is generally used in a method for producing a soy sauce; more specifically, a pressing treatment using a press machine, a filtration treatment using a filter material such as diatomaceous earth and a filter cloth; a pressing filtration treatment in which a filtration treatment is conducted using a press machine; a membrane filtration treatment using various permeable membranes such as a UF membrane and an MF membrane or the like. The solid-liquid separation method may be one type thereof alone or a combination of two or more types thereof, but it is preferably a combination of a pressing treatment, a filtration treatment using a filter material and a membrane filtration treatment using a permeable membrane.

When the soy sauce lactic acid bacterium remains in a large amount in the soy sauce *moromi* soup, there is

a possibility that yeast fermentation at a later stage is not appropriately conducted. Therefore, when obtaining the soy sauce *moromi* soup, a method capable of removing most of the soy sauce lactic acid bacterium together with the insoluble solid content is preferably adopted. The lactic acid bacterium content of the soy sauce *moromi* soup is not particularly limited, but it is, for example, preferably $1.0\times10^8$ bacteria/ml or less, more preferably $1.0\times10^7$ bacteria/ml or less, further preferably $1.0\times10^6$ bacteria/ml or less.

In the step of conducting yeast fermentation, yeast fermentation is conducted for the soy sauce *moromi* soup using a soy sauce yeast that is used when producing a soy sauce as generally known under conditions according to the type or bacterial count of the soy sauce yeast or the like. The soy sauce yeast is not particularly limited as long as it is a yeast generally used for producing a soy sauce, but examples thereof include salt-tolerant yeasts such as *Zygosaccharomyces rouxii*, *Zygosaccharomyces bailli (Z. bailli), Candida etchellsii* and *Candida versatilis* (*C. versatilis*) and the like.

In a general production of a soy sauce by a brewing process, the yeast fermentation is conducted in an open system, namely without putting a cover or a stopper on the container for fermentation (a bottle, a barrel, a tank or the like), in an aerating environment. Moreover, during the yeast fermentation, due to the generation of carbon dioxide gas, the *moromi* and the fermented solution in the *moromi* flow to be in a stirred state. Thus, the yeast fermentation during the general production of the soy sauce is conducted in an open system under a naturally stirred condition.

The present inventors found that, when the soy sauce *moromi* soup is subjected to yeast fermentation under the conditions adopted for the general production of the soy sauce, namely in the open system under the naturally stirred condition, as described above, γ-nonalactone is sometimes produced, but the amount thereof is a tiny amount even when γ-nonalactone is produced. In particular, when the production scale became larger, the liquid convection became remarkable due to the generation of carbon dioxide gas; thus, the inventors confronted a problem of a significant decrease in the production amount of γ-nonalactone. Accordingly, the present inventors conducted trial and error regarding the various conditions of yeast fermentation in extensively examining the conditions for producing γ-nonalactone and reviewing each step and surprisingly found that γ-nonalactone can be increased significantly by conducting the yeast fermentation in a sealed system.

Note that in the general production of the soy sauce by the brewing process, the yeast fermented product after the yeast fermentation is subjected to a pressing treatment to remove the solid content. At this point, the γ-nonalactone generated by the yeast fermentation is adsorbed on the solid content and removed from the system together with the solid content. As a result, the soy sauce obtained by the general production of the soy sauce by the brewing process contains almost no γ-nonalactone.

Considering the above circumstances, in the method for producing the liquid seasoning, the soy sauce *moromi* soup is preferably subjected to yeast fermentation by the soy sauce yeast in the sealed system. The sealed system in the yeast fermentation may be achieved, for example, by putting a lid and a stopper, preventing ventilation by closing the ventilation valve or the like. When the system is completely sealed, however, the container for fermentation may break due to the generated carbon dioxide gas. Thus, it is essential only that the degree of the sealing in the yeast fermentation be such a degree that the amount of γ-nonalactone in the fermented solution becomes a certain amount, preferably such a degree that the amount becomes 100 ppb or more.

By suppressing the flow in the fermented solution during the yeast fermentation, the production amount of γ-nonalactone can be increased. Thus, the yeast fermentation is preferably conducted under a non-stirring condition in addition to being conducted in a sealed system.

Because the boiling point of γ-nonalactone is about 243°C, γ-nonalactone is less likely to vaporize in the air even when the yeast fermentation is conducted in the open system under the stirring condition. Thus, the reason why the production amount of γ-nonalactone is increased by conducting the yeast fermentation in the sealed system or in the sealed system under the non-stirring condition is not clear. On the other hand, the present inventors found that there is a positive correlation between the carbon dioxide volume of the fermented solution and the production amount of γ-nonalactone. Thus, the carbon dioxide volume (Gas Volume; GV) in the fermented solution can be used as an indicator of the yeast fermentation. For example, yeast fermentation in which the carbon dioxide volume of the fermented solution is 1 GV or more is preferable, and yeast fermentation in which the volume is 1 GV to 10 GV is more preferable.

The period of the yeast fermentation is not particularly limited as long as the period is a period in which γ-nonalactone is generated in the fermented solution, more preferably a period in which the γ-nonalactone content becomes a certain amount, further preferably a period in which the γ-nonalactone content becomes an amount of 100 ppb or more; but, for example, when *Zygosaccharomyces rouxii* is used as the soy sauce yeast, the period is around 10 days to one year at 10°C to 40°C, preferably at 15°C to 35°C, preferably around 10 days to 100 days. Furthermore, the period of the yeast fermentation is preferably a period in which the production amount of ethanol becomes the maximum.

Additionally, the step of conducting the yeast fermentation can be conducted more conveniently, for example, by putting a soy sauce *moromi* soup and a soy sauce yeast into a soy sauce bottle, a screw-top glass bottle or a tightly sealable container-like tank which is suitable for the yeast fermentation and further with which the fermented solution can be used immediately after the yeast fermentation, leaving the put one to stand still at room temperature to conduct

the yeast fermentation thereof in the sealed system or the like. For example, as the screw-top glass bottle, a DURAN (registered trademark) screw-top bottle manufactured by DWK Life Sciences Inc. or the like can be used. Moreover, as the tightly sealable container-like tank, a 1000-L cylindrical container manufactured by Japan Logistic Ware or the like can be used.

In the step of conducting the yeast fermentation, because the soy sauce *moromi* soup from which the insoluble solid content has been removed in advance is used, the solution obtained after the yeast fermentation is a yeast fermented solution having a low solid content, and the solution itself may be used as the liquid seasoning. Moreover, for the purpose of removing the yeast or the residue in the yeast fermented solution or another purpose, the liquid part of the yeast fermented solution may also be used as the liquid seasoning, obtained by subjecting the yeast fermented solution to a later-stage treatment or the like in the yeast fermentation which is used in the regular method for producing the soy sauce, such as pressing, filtration and pasteurization.

When no other γ-lactone or γ-lactone-containing material is added, the γ-nonalactone content of the liquid seasoning obtained by the method of an embodiment of the invention is preferably 100 ppb or more, more preferably 100 ppb to 20,000 ppb, further preferably 100 ppb to 10,000 ppb.

A specific embodiment of the method of an embodiment of the invention is the following method, but the invention is not limited thereto.

A seed starter of *Aspergillus sojae* is inoculated in a mixture of steamed soybeans and crushed roasted wheat and *koji* produced with aeration at 10°C to 40°C for around one day to four days to obtain a soy sauce *koji,* and subsequently, a material obtained by putting 100 parts by mass of the soy sauce *koji* into 50 parts by mass to 200 parts by mass of a saline solution having a sodium chloride concentration of 15% (w/v) to 35% (w/v) and further adding a soy sauce lactic acid bacterium (*Tetragenococcus halophilus*) is subjected to lactic acid fermentation and aging at 10°C to 40°C for 10 days to 200 days while appropriately stirring to obtain a soy sauce *moromi.*

Subsequently, the obtained soy sauce *moromi* is pressed and then subjected to a filtration treatment using diatomaceous earth, and the obtained filtrate is subjected to a membrane filtration treatment by a UF membrane to obtain a soy sauce *moromi* soup.

Subsequently, the obtained soy sauce *moromi* soup to which a salt-tolerant yeast (*Zygosaccharomyces rouxii*) is added is subjected to yeast fermentation. The yeast fermentation is conducted in a stoppered container for fermentation, with aeration means being shut down, in such a manner that the carbon dioxide volume of the fermented solution becomes 1 GV to 10 GV at 15°C to 30°C for around 10 days to 200 days.

Subsequently, the yeast fermented product after the yeast fermentation is subjected to solid-liquid separation and then to pasteurization, and thus a liquid seasoning product is obtained. The thus obtained liquid seasoning product is a highly excellent seasoning having a sweet fruity aroma and also having a soy sauce-like taste and richness.

[Other Embodiments Related to Liquid Seasoning of One Embodiment of Invention]

When focusing on that a γ-lactone at a certain content adds a fruity aroma to a soy sauce and a soy sauce-like seasoning, the following embodiments are provided, for example, as another side of the invention:

a method for improving the aroma of the soy sauce or the soy sauce-like seasoning including adding the γ-lactone represented by the general formula (I) to the soy sauce or the soy sauce-like seasoning in such a manner that the content thereof becomes 100 ppb to 60,000 ppb;
a method for producing the soy sauce or the soy sauce-like seasoning having an improved aroma including adding the γ-lactone represented by the general formula (I) to the soy sauce or the soy sauce-like seasoning in such a manner that the content thereof becomes 100 ppb to 60,000 ppb;
a composition for improving the aroma of the soy sauce or the soy sauce-like seasoning which contains the γ-lactone represented by the general formula (I) as an active ingredient and which is used in such a manner that the γ-lactone content with respect to the soy sauce or the soy sauce-like seasoning becomes 100 ppb to 60,000 ppb; and
a method for producing a food having an excellent aroma including a step of obtaining a food having an excellent aroma by cooking using the soy sauce or the soy sauce-like seasoning in which the content of the γ-lactone represented by the general formula (I) is 100 ppb to 60,000 ppb and a food material.

[Container-Packed Composition Containing Food Material and γ-Lactone]

A composition of an embodiment of the invention is a heated container-packed composition containing a food material and a γ-lactone. In general, when a seasoning and a food containing a food material such as a soy sauce, meat and soy protein are subjected to a high-temperature heat treatment under pressure, for example, retort pasteurization, a heat-deteriorated smell due to the food material is generated. However, the present inventors found that the heat-deteriorated smell due to the food material is not easily felt when a γ-lactone is contained together with the food material.

Thus, the composition of one embodiment of the invention can be the composition in which the heat-deteriorated smell due to the food material is suppressed even though the composition has been heated because the γ-lactone is contained together with the food material.

The composition of one embodiment of the invention contains the γ-lactone together with the food material, and thus a heat-deteriorated smell due to the food material is suppressed compared to a case which contains the food material and which does not substantially contain the γ-lactone. The composition of one embodiment of the invention is preferably a container-packed composition for seasoning used for the purpose of improving the taste during processing of the food material, or a container-packed processed food which is obtained by processing the food material and which itself is edible.

The γ-lactones include at least one kind of γ-lactone selected from the group consisting of γ-lactones represented by the general formula (I). That is, the composition of one embodiment of the invention contains any one kind, two kinds, three kinds, four kinds or five kinds of: in the general formula (I), γ-heptanolactone, in which n is 2; γ-octanolactone, in which n is 3; γ-nonalactone, in which n is 4; γ-decanolactone, in which n is 5; and γ-undecanolactone, in which n is 6.

Because the composition of one embodiment of the invention contains a food material and also contains the γ-lactone, the heat-deteriorated smell due to the food material is suppressed. Thus, it is essential only that the γ-lactone content of the composition of one embodiment of the invention be an amount which can suppress the heat-deteriorated smell due to the food material. As described in the Examples described below, according to the examination of the present inventors, the heat-deteriorated smell due to the food material is suppressed when 30 ppb or more of the γ-lactone is contained regardless of the kind of the food material. Thus, the lower limit of the γ-lactone content of the composition of one embodiment of the invention, based on the total amount of the composition, is preferably 30 ppb or more.

On the other hand, many of the γ-lactones themselves have an aroma in itself. For example, the γ-nonalactone has a sweet fruity aroma like a tropical fruit. According to the examination of the present inventors, the composition having the γ-lactone content of more than 3,000 ppb tends to have an undesired different aroma when eaten due to the too strong aroma of the γ-lactone. Thus, the upper limit of the γ-lactone content of the composition of one embodiment of the invention, with respect to the total amount of the composition, is 3,000 ppb or less. When the γ-lactone content of the composition of one embodiment of the invention is 3,000 ppb or less, the aroma of the lactone matches the aroma of other food materials, and an excellent aroma is generated as a whole.

As described above, the γ-lactone content of the composition of one embodiment of the invention is 30 ppb to 3,000 ppb, but to further suppress the heat-deteriorated smell due to the food material, the content is preferably 30 ppb to 2,500 ppb, more preferably 50 ppb to 2,500 ppb, further preferably 100 ppb to 2,500 ppb, still further preferably 100 ppb to 1,500 ppb. The "γ-lactones at 30 ppb to 3,000 ppb" mean, for example, a γ-lactone in an amount of 3 μg to 300 μg with respect to 100 g of the composition for seasoning.

Here, according to the examination of the present inventors, for example, it has been found that the γ-nonalactone is hydrolyzed by pressurized heat pasteurization equivalent to a Fo value of 10 and that around 40% is hydrolyzed. Thus, the above range of the γ-lactone content is preferably the amount before heating. Moreover, even when a value lower than the above range is identified through measurement of the γ-lactone content with respect to the composition after heating, the value before heat pasteurization may be analogically applied to consider that the γ-lactone content is included in the above range.

As described above, to suppress the deterioration of the flavor of a food material by heating (generation of an unpleasant flavor and a decrease in a preferable flavor) in addition to the heat-deteriorated smell due to the food material, the γ-lactones are γ-heptanolactone, γ-octalactone, γ-nonalactone, γ-decanolactone and γ-undecanolactone.

As the γ-lactones, the γ-lactone itself may be used, or a γ-lactone-containing material containing the γ-lactone may also be used. When the γ-lactone itself is used, the γ-lactone that is commercially available as an aroma can be used. Examples of the γ-lactone-containing material include the food material containing the γ-lactone or the like of the food materials shown below. As long as the γ-lactone-containing material contains the γ-lactone, the form of the supply source thereof is not particularly limited, but examples thereof are fermented brewed products containing γ-nonalactone (a soy sauce, soybean paste, wine, refined *sake,* whisky and the like), fruit juice and the like.

Specific examples of the γ-lactone-containing material include, for example, the γ-lactone-containing liquid fermented seasoning described in 13-2 in Example 2 described below and the like. The γ-lactone-containing liquid fermented seasoning can be produced by a method including: obtaining a soy sauce *moromi* soup by subjecting a soy sauce *moromi*, obtainable after conducting the lactic acid fermentation by a general method for producing a soy sauce, to solid-liquid separation; and subsequently subjecting the soy sauce *moromi* soup to yeast fermentation by a soy sauce yeast or another method. The method includes: separating the soy sauce *moromi* into an insoluble solid part (soy sauce *moromi* concentrate) and a liquid part (soy sauce *moromi* soup) before subjecting to the yeast fermentation and subsequently conducting yeast fermentation of the soy sauce *moromi* soup, rather than continuously subjecting the soy sauce *moromi* after lactic acid fermentation to the yeast fermentation, unlike the regular method for producing the soy sauce. Therefore, the method includes a step of obtaining the soy sauce *moromi*, a step of obtaining the soy sauce *moromi*

soup, and a step of conducting the yeast fermentation. The thus obtained liquid fermented seasoning can be, for example, the liquid fermented seasoning having a γ-nonalactone content of 50 ppb to 2,000 ppb. Thus, the γ-lactone-containing material is preferably the liquid fermented seasoning which is composed of the yeast fermented product of the soy sauce *moromi* soup and which contains the γ-nonalactone, more preferably the liquid fermented seasoning which is composed of the yeast fermented product of the soy sauce *moromi* soup and which has the γ-nonalactone content of 50 ppb to 2,000 ppb.

The step of obtaining the soy sauce *moromi* and the step of obtaining the soy sauce *moromi* soup may be conducted according to the descriptions in [Production Method of γ-Nonalactone-Containing Soy Sauce] above.

In the step of conducting the yeast fermentation, the yeast fermentation by an ordinary method is conducted for the soy sauce *moromi* soup using the soy sauce yeast that is used when producing the soy sauce as generally known under conditions according to the type or the count of the soy sauce yeast or the like. The soy sauce yeast is not particularly limited as long as it is the yeast generally used for producing the soy sauce, but examples thereof include salt-tolerant yeasts such as *Zygosaccharomyces rouxii*, *Zygosaccharomyces bailli* (*Z. bailli*), *Candida etchellsii* and *Candida versatilis* (*C. versatilis*) and the like.

The period of the yeast fermentation is not particularly limited as long as the period is a period in which the γ-lactone represented by the general formula (I) in the fermented solution is generated, preferably a period in which the γ-nonalactone is generated, more preferably a period in which the γ-nonalactone content becomes a certain amount, further preferably a period in which the γ-nonalactone content becomes an amount of 50 ppb or more, but for example, when *Zygosaccharomyces rouxii* is used as the soy sauce yeast, the period is around 10 days to one year at 10°C to 40°C, preferably at 15°C to 35°C, preferably around 10 days to 100 days. Furthermore, the period of the yeast fermentation is preferably a period in which the production amount of ethanol becomes the maximum.

Here, the step of conducting the yeast fermentation can be conducted more simply, for example, by putting the soy sauce *moromi* soup and the soy sauce yeast into a soy sauce bottle which is suitable for the yeast fermentation and with which the fermented solution can be used immediately after the yeast fermentation, leaving the put one to stand still at room temperature and conducting the yeast fermentation or the like.

In the step of conducting the yeast fermentation, because the soy sauce *moromi* soup from which the insoluble solid content has been removed in advance is used, the solution obtained after the yeast fermentation is the yeast fermented solution having a low solid content, and the solution itself may be used as the liquid seasoning. Moreover, for the purpose of removing the yeast or the residue in the yeast fermented solution or another purpose, the liquid part obtained by subjecting the yeast fermented solution to a later stage treatment or the like after the yeast fermentation which is used in the general method for producing the soy sauce, such as pressing, filtration and pasteurization, may also be used as the liquid seasoning.

In a case where the γ-lactone-containing liquid fermented seasoning is used, the food material may be the γ-lactone-containing liquid fermented seasoning alone, or another food material may be used in combination together with the γ-lactone-containing liquid fermented seasoning.

The food material is not particularly limited as long as it is the food material from which the heat-deteriorated smell is felt by heating. Examples of the food material include: seasoning components such as a soy sauce, soybean paste, curry and processed meat components (for example, chicken powder, meat powder and fish powder); vegetables such as radish, onion, Welsh onion, carrot, burdock, lotus root, ginger, garlic, cabbage, bell pepper, tomato, corn and bamboo shoot; meat such as beef, pork, chicken, mutton, goat, horse, reindeer, water buffalo, yak, camel, donkey, mule, rabbit, duck, turkey, guinea fowl, goose, quail and rock dove; seafood such as tuna, squid, scallop, crab and salmon; processed foods such as *tofu,* deep-fried *tofu,* konjac and soy protein; and the like. The food material may be one kind thereof alone or a combination of two or more kinds. The food materials may be grated, made into a paste, ground, sliced finely or cut into a shape such as dice and thin strips before use.

Of the above food materials, the soy sauce is not particularly limited as long as it is the soy sauce as generally known with a label with soy sauce, *shoyu* or the like, and examples thereof include those defined in the "Quality Labeling Standards for Soy Sauce" of the Ministry of Agriculture, Forestry and Fisheries and the like. Specific examples of the soy sauce include, for example, a *koikuchi* (dark-colored) soy sauce, an *usukuchi* (light-colored) soy sauce, a *tamari* (rich) soy sauce, a rebrewed soy sauce, a *shiro* (very light-colored) soy sauce, a *dashi* (stock) soy sauce, a glazing soy sauce, a *kiage* (just pressed) soy sauce, an unheated soy sauce and the like, but the soy sauce is preferably the *koikuchi* (dark-colored) soy sauce to add a strong soy sauce flavor to a food material. The form of the soy sauce is not particularly limited and may be either a liquid-like one or a solid-like one such as powder and grains. In order that the soy sauce has a flavor inherent in a soy sauce, for example, the HEMF content is preferably 20 ppm or more, more preferably 30 ppm or more. Note that the soy sauce obtainable by the brewing process generally contains 20 ppm or more of HEMF. For example, the HEMF content of the *usukuchi* (light-colored) soy sauce is 20 ppm or more, and the HEMF content of the *koikuchi* (dark-colored) soy sauce is 30 ppm or more.

The meat is not particularly limited as long as it is edible meat, but examples thereof include meat of the above animals and the like. Preferable examples thereof are livestock meat such as beef and pork and poultry meat such as

chicken, which are generally used in Japan. The preservation conditions of the meat are not particularly limited, and any of raw meat, chilled meat, frozen meat, dried meat and the like can be used. The meat may be heat-processed meat thereof by frying, grilling, boiling or the like. The form of the meat is not particularly limited, and any of ground meat, thin-sliced meat, meat chunks and the like can be used. The seafood is seafood which can be obtained from the market, such as the above seafood, or the like, but fish is preferable. The preservation conditions, the processing, the form and the like of the seafood may follow those of the meat.

The soy protein is not particularly limited as long as it is the protein derived from soybeans, but examples thereof include those produced by subjecting defatted soybeans after extracting soybean oil from soybeans to treatments such as a concentration treatment, a purification treatment, and the like. Moreover, soymilk and a concentrate thereof contain components other than proteins, but they may be used as soy protein without purification or the like.

The form of the soy protein is not particularly limited. Examples thereof include grains, powder, blocks, flakes, bars, dice, liquid and the like, but the form thereof is preferably grains or power which is often used as a food and a seasoning. The size of the soy protein is not limited, and the long diameter thereof is, for example, about 5 mm to about 20 mm. As the soy protein, a commercial product may be used, and the soy protein produced by a known method may also be used. Products commercially sold as soy protein include "New *Soimi* F 2010", "New *Soimi* S10", "New *Soimi* S11", "New *Soimi* S20F", "New*Soimi* S21F", "New *Soimi* S22F", "New *Soimi* S31B", "New *Soimi* S50", "New *Komitekkusu* A-301", "New *Komitekkusu* A-302", "New *Komitekkusu* A-318" and "New *Komitekkusu* A-320" (each manufactured by The Nisshin OilliO Group, Ltd.), "New *Fujinikku* 58", "New *Fujinikku* 59", "New *Fujinikku* AR", "New *Fujinikku* 61N" and "New *Fujinikku* BSN" (each manufactured by Fuji Oil Co., Ltd.) and the like. For example, granular soy protein can be produced by subjecting a liquid extract of soybeans to tissue formation and granulation to form into a dry tissue. Moreover, powdery soy protein can be produced by separating and pasteurizing a liquid extract of soybeans and spry-drying to form into powder. Additionally, granular and powdery soy proteins are used as a stabilizer of deep-fried *tofu*, *ganmodoki*, sausages and *kamaboko*, and used for cooking Hamburg steak, minced meat balls, *gyoza* (fried pork dumpling), *shumai* (steamed meatball dumpling) and the like as a meat substitute.

Because a heat-deteriorated smell is strongly felt by heating, the food material is preferably a soy sauce, soybean paste, a carrot, beef, pork, chicken, fish or soy protein of the above food materials.

The composition of one embodiment of the invention can contain, in addition to the food material which generates a heat-deteriorated smell by heating, another food material to add a flavor, an aroma, a nutritional value, a texture or the like to the composition and a cooked material obtainable using the composition.

The other food material is not particularly limited as long as it is used as a component of a food and a seasoning, but examples thereof include: pot herbs such as perilla, parsley, celery, garlic chive and Japanese honewort; mushrooms such as *shiitake*, common mushroom, *enoki* and *shimeji*; fruits such as apple, pear, kiwifruit, pineapple and plum; seeds and nuts such as sesame, nuts and chestnut; seaweed such as *hijiki*, *kombu* and *wakame*; eggs such as hen's eggs and quail's eggs; as solid seasoning components, salt, saccharides (table sugar, glucose, fructose, starch syrup, high-fructose corn syrup and the like), grain components (bread crumbs, flour, oatmeal and the like), spices (ginger, chili, pepper, basil, oregano, ginger, spice mixes and the like), thickeners (thickener polysaccharides such as carrageenan, starch, modified starch, gums and the like), chemical seasonings (sodium glutamate, glycine, sodium inosinate, sodium guanylate and the like), flavors and curry powder; as liquid seasoning components, water, alcohols, sweetener components (a sweet *sake,* liquid sugar, starch syrup and the like), acidulant components (vinegar, apple, citrus fruits such as *yuzu* and lemon and the like), oil and fat components (sesame oil, olive oil, salad oil, soybean oil, chili oil, butter, beef tallow, lard and the like), alcohol components (wine, refined *sake* and the like) and fruit juice (apple juice and the like); seafood extracts obtained from bonito, dried bonito, scallop and the like; seaweed extracts obtained from *kombu* and the like; meat extracts obtained from meat such as chicken, pork and beef; vegetable extracts obtained from vegetables such as garlic, ginger and *shiitake*; yeast extracts; protein hydrolysates; stock soups obtained by extracting from powder or flakes of dried fish such as dried bonito, dried *Auxis*, dried mackerel, dried tuna and dried sardine, powder of boiled dried fish obtained by hanging and drying sardine, mackerel, horse mackerel, shrimps or the like, seaweed such as *kombu* and *wakame*, mushroom such as *shiitake* or the like using a solvent such as hot water and ethanol; and the like. The other food material may be one kind thereof alone or a combination of two or more kinds thereof. The other food material may be grated, made into a paste, ground, sliced finely or cut into a shape such as dice and thin strips before use.

As specific examples of the food material, for the purpose of convenience, the food materials which generate a heat-deteriorated smell to be felt by heating and the other food materials have been cited separately. The other food materials, however, include food materials which generate a heat-deteriorated smell to be felt by heating, and it should not be interpreted to exclude the possibility that the other food material is a food material which generates a heat-deteriorated smell to be felt by heating.

The food material content is not particularly limited and can be appropriately set depending on the desired flavor. For example, the food material content is, with respect to the total amount of the composition of one embodiment of the invention, 1.0 mass% or more and 99 mass% or less. Peaches, apricots and jasmine oil have a high $\gamma$-nonalactone content, and thus these food materials are preferably not contained.

The form of the composition of one embodiment of the invention is not particularly limited, but for example, for use as a seasoning and a food, a liquid-like or semi-solid-like composition such as liquid-like, suspension-like and paste-like and a liquid-like or semi-solid-like composition including an ingredient are preferable.

The composition of one embodiment of the invention is a container-packed composition sealed by packing and sealing in a container. The container is not particularly limited as long as the container is resistant to a heat treatment such as retort pasteurization, and has a material and a form which can be sealed, but examples thereof include packaging containers such as a pouch, a small bag, a bottle, a can and a bottle made of a metal such as aluminum, plastic such as PET and PTP, a single-layer or laminate film, glass or the like as a material. Specific examples include a container made of a laminate-processed film obtained by providing a heat-weldable resin layer of an olefin resin such as polypropylene and polyethylene in the inside, and providing a layer of a resin having a high gas barrier property such as polyester and polyamide and/or aluminum foil or the like on the outside, and another container.

The composition of one embodiment of the invention is a heated container-packed composition. The degree of heating is not particularly limited as long as it is a degree with which a heat-deteriorated smell is felt with the contained food material. The heating condition of the composition of one embodiment of the invention may be appropriately set using the presence or absence of pressurization, the temperature, the period, the Fo value or the like as an indicator, and examples thereof include a condition under which the composition can be heat-pasteurized to enable long-term preservation and the like. Specific examples include a heating condition under pressure at 110°C to 130°C, preferably at about 120°C, for two minutes to 60 minutes, preferably for four minutes to 30 minutes, a heating condition under which the measured Fo value is 0.1 to 60, preferably 0.2 to 30, more preferably 0.2 to 10 and the like.

The composition of one embodiment of the invention is a heated composition but is preferably a composition which has been subjected to a heat treatment intended to prevent spoilage such as a heat pasteurization treatment considering the shelf life. The composition of one embodiment of the invention is preferably a composition which has been subjected to a heat pasteurization treatment under a condition that is generally adopted when pasteurizing a seasoning and a food and may be, for example, a composition which has been heat-pasteurized at 100°C or lower but is preferably a composition which has been subjected to retort pasteurization (Fo value of 4.0 or more). In this regard, as described in the Examples described below, even when heated at 110°C for 4.8 minutes (Fo value of 0.37), the effect of the γ-lactone of suppressing the heat-deteriorated smell due to the food material can be exhibited.

The effect of the composition of one embodiment of the invention of suppressing the heat-deteriorated smell due to a food material refers to the effect of completely or partially suppressing a heat-deteriorated smell due to a food material to be felt when the container-packed composition which contains the same kind of food material in the same amount and which does not contain the γ-lactone is heated. The effect of the composition of one embodiment of the invention of suppressing a heat-deteriorated smell due to a food material can be confirmed by the method described in the Examples described below. For example, in a sensory evaluation of heat-deteriorated smells on a five-point scale in which the heat-deteriorated smell is determined to be more felt as the score is lower, an acceptable effect of the composition of one embodiment of the invention of suppressing the heat-deteriorated smell due to the food material is such an effect as to be evaluated to be higher by at least one point than that of the heat-deteriorated smell due to the food material felt with the container-packed composition which contains the same kind of food material in the same amount and also which does not contain the γ-lactone, and the effect is such an effect as to be evaluated to be preferably higher by two points, more preferably by three points, further preferably by four points.

A specific embodiment of the composition of one embodiment of the invention is a composition for seasoning. The amount of the composition for seasoning of one embodiment of the invention can be appropriately set depending on the kinds of the food material and the processed food to which the composition for seasoning is applied or the like and is not particularly limited. For example, in a case where the composition for seasoning of one embodiment of the invention is used for cooking simmered meat and *tofu,* 100 g to 200 g of the composition of one embodiment of the invention may be used for one piece of *tofu* (about 350 g).

The composition for seasoning of one embodiment of the invention can be used, for example, for mixing with a food material such as vegetables, pot herbs, mushrooms, fruits, seeds and nuts, meat, seafood, seaweed, eggs, processed meat products and processed foods and preparing at normal temperature or heating to obtain a desired processed food. The food material used together with the composition for seasoning of one embodiment of the invention is preferably pre-treated by cutting the material into bite-size pieces, by heating the material, for example, by grilling or frying, and/or the like. The composition for seasoning of one embodiment of the invention can suppress not only the heat-deteriorated smell due to the food material but also the heat-deteriorated smell generated by cooking and thus is preferably used for obtaining a cooked food.

The method for cooking using the composition for seasoning of one embodiment of the invention is not particularly limited and can be appropriately set depending on the kind and the amount of the food material used, the kind of the cooked food and the like. As the cooking, a general cooking method such as frying, deep-frying, grilling, steaming, heating in a microwave, heating with hot air and heating in hot water can be used, and the cooking methods may be conducted in an appropriate combination. The heat-deteriorated smell generated by the cooking tends to pose a problem

in the cooking by frying to be subjected to the heating at a higher temperature, and thus the composition for seasoning of one embodiment of the invention is preferably used for the cooking by frying.

The cooked food obtained using the composition for seasoning of one embodiment of the invention is not particularly limited, but examples thereof include simmered meat and *tofu,* pork kimchi, simmered chicken and radish, stewed meat and potatoes, minced meat sauce, fried food with grated radish. simmered food with grated radish, omelet, fried meat and vegetables, food cooked in seasoned broth, *goya chanpuru*, beef bowl, curry, *gyoza* and the like.

For example, in a case where the cooked food is simmered meat and *tofu,* an example of the specific method for using the composition for seasoning of one embodiment of the invention is a method including: frying *tofu* until it gets brown in a hot frying pan with an oil such as salad oil; subsequently frying shortly after adding thereto desired vegetables, or without adding any vegetables, then adding the composition for seasoning of one embodiment of the invention and frying for several dozen seconds to several minutes or the like. Before mixing with the composition for seasoning of one embodiment of the invention, the food material is preferably heated in advance by frying or the like. The cooked food is preferably eaten immediately after cooking it or after leaving it for several minutes at room temperature to exhibit the effect of the composition for seasoning of one embodiment of the invention of seasoning the cooked food.

Examples of the specific embodiment of the method for producing a cooked food using the composition for seasoning of one embodiment of the invention include the following method using *tofu,* but the method is not limited thereto. That is, *tofu* is cut into bite-size pieces. Next, an adequate amount of oil is heated in a frying pan, and the *tofu* is fried at a medium heat for several minutes until both sides thereof get brown. The ingredients are further fried at the medium heat for several minutes after adding vegetables thereto. Next, by adding thereto the composition for seasoning of one embodiment of the invention and frying for several dozen seconds to several minutes, a cooked food as the simmered meat and *tofu* is obtained.

A specific embodiment of the composition of one embodiment of the invention is a processed food. The processed food of one embodiment of the invention contains, in addition to a food material which itself is edible and which generates a heat-deteriorated smell by heating, and a γ-lactone, various food materials such as vegetables, pot herbs, mushrooms, fruits, seeds and nuts, meat, seafood, seaweed, eggs, processed meat products and processed foods as raw materials. The processed food of one embodiment of the invention is prepared using the food material and the γ-lactone, and thus, it can be a processed food with high palatability in which the heat-deteriorated smell due to the food material is suppressed and which has an excellent flavor and aroma.

Examples of the processed food of one embodiment of the invention include the one packing in a container the cooked food obtained using the composition of one embodiment of the invention, and include a subsidiary dish, a lunch box, a noodle with meat, a fried noodle, a fried *udon*, a seafood pasta and a stew packed in other containers and the like, but the processed food is not limited thereto.

[Production Method of Container-Packed Composition]

Another embodiment of the invention is a method for producing the container-packed composition. The method of one embodiment of the invention includes a step of obtaining the container-packed composition in which the heat-deteriorated smell due to the food material is suppressed by heating the container-packed composition containing the food material and the γ-lactone. The method for mixing the food material and the γ-lactone is not particularly limited. Examples thereof include a method of mixing generally known components and producing the seasoning and the processed food and the like, and specific examples thereof include a method including mixing the food material and the γ-lactone, and another component, when necessary, by subjecting to mixing means such as a stirring treatment at room temperature or under heating and the like. The food material and the other component may be pre-treated by subjecting to treatments such as finely cutting, crushing, swelling and heating.

[Suppression Method of Heat-Deteriorated Smell]

Another embodiment of the invention is a method for suppressing the heat-deteriorated smell due to the food material to be felt when the container-packed composition is heated, focusing on that the γ-lactone suppresses the heat-deteriorated smell due to the food material. The method of one embodiment of the invention includes a step of suppressing the heat-deteriorated smell due to the food material by heating the container-packed composition containing the food material and the γ-lactone. The container-packed composition contains the food material and the γ-lactone in combination, and thus the heat-deteriorated smell due to the food material is suppressed by the effect of the γ-lactone.

[γ-Lactone-Containing Composition for Suppressing Heat-Deteriorated Smell]

Another embodiment of the invention is a composition which contains the γ-lactone and which is used for suppressing the heat-deteriorated smell due to the food material to which the composition is applied, focusing on that

the γ-lactone suppresses the heat-deteriorated smell due to the food material. The composition of one embodiment of the invention is used by packing in the container together with the food material before heating and heating.

Although the invention will be explained in more detail by way of Examples below, the invention is not limited to these Examples, and the invention can take various embodiments as long as the object of the invention can be achieved.

EXAMPLE 1

[1. Evaluation of Aroma-Improving Effects of Externally Added γ-Lactones (1): Kinds of γ-Lactones]

To a commercial unheated soy sauce ("*Shiboritate Nama* Soy Sauce"; γ-nonalactone content of 15.6 ppb; manufactured by Kikkoman Corporation), γ-lactones selected from γ-valerolactone (C5), γ-hexalactone (C6), γ-heptalactone (C7), γ-octalactone (C8), γ-nonalactone (C9), γ-decanolactone (C10), γ-undecanolactone (C11) and γ-dodecanolactone (C12) each were added at a final concentration of 1,000 ppb, and thus liquid seasonings 1-1 to 1-8 were prepared.

In the sensory evaluation, six panelists capable of distinguishing aromas took the liquid seasonings at normal temperature with a spoon and evaluated the "degree of preferable sweet fruity aroma" on a three-point scale by the following criteria from the aroma felt with the nose only without eating using the commercial unheated soy sauce (to which the γ-lactones were not added, same applies below) as an indicator. The results are shown in Table 1A.

C: There is no change in the aroma, or the aroma is unpreferable due to an added unpleasant smell.
B: A light sweet fruity aroma was added, and the degree of preferable aroma improved.
A: A sweet fruity aroma was added, and the degree of preferable aroma improved remarkably.

[Table 1A]

| Liquid Seasoning No. | Added γLactone | Panelist Name | | | | | |
|---|---|---|---|---|---|---|---|
| | | 1 | 2 | 3 | 4 | 5 | 6 |
| Liquid Seasoning 1-1 | C5 | C | C | C | C | C | C |
| Liquid Seasoning 1-2 | C6 | C | C | c | C | c | c |
| Liquid Seasoning 1-3 | C7 | B | B | B | B | B | B |
| Liquid Seasoning 1-4 | C8 | B | B | B | B | B | B |
| Liquid Seasoning 1-5 | C9 | A | A | A | A | A | A |
| Liquid Seasoning 1-6 | C10 | A | A | A | A | A | B |
| Liquid Seasoning 1-7 | C11 | B | B | B | B | B | C |
| Liquid Seasoning 1-8 | C12 | C | C | C | c | B | C |

As shown in Table 1A, it was found that a liquid seasoning having a preferable fruity aroma is obtained by adding the γ-lactones C7 to C11 of the γ-lactones to the soy sauce.

[2. Evaluation of Aroma-Improving Effects of Externally Added γ-Lactones (2): Additive Amounts of γ-Lactones]

2-1. Evaluation of Lower Limit

To the commercial unheated soy sauce, γ-lactones selected from γ-heptalactone (C7), γ-octalactone (C8), γ-nonalactone (C9), γ-decanolactone (C10) and γ-undecanolactone (C11) were respectively added at final concentrations of 10 ppb, 25 ppb, 50 ppb, 100 ppb and 250 ppb, and thus liquid seasonings 2-1-1 to 2-1-22 were prepared.

In the sensory evaluation, six panelists capable of distinguishing aromas took the liquid seasonings at normal temperature with a spoon and evaluated the presence or the absence of a sweet fruity aroma on a two-point scale by the following criteria from the aroma felt with the nose only without eating using the commercial unheated soy sauce as an indicator. The percentages (%) of the panelists who gave "A" were also calculated. The results are shown in Table 2A.

B: There was no change in the aroma.
A: A sweet fruity aroma was added.

[Table 2A]

| Liquid Seasoning No. | Added yLactone | Added Concentration (ppb) | | | | |
|---|---|---|---|---|---|---|
| | | 10 | 25 | 50 | 100 | 250 |
| Liquid Seasonings 2-1-1 to 2-1-4 | C7 | 0% | 17% | 67% | 100% | - |
| Liquid Seasonings 2-1-5 to 2-1-8 | C8 | 0% | 0% | 50% | 100% | - |
| Liquid Seasonings 2-1-9 to 2-1-12 | C9 | 0% | 17% | 83% | 100% | - |
| Liquid Seasonings 2-1-13 to 2-1-17 | C10 | 0% | 17% | 50% | 67% | 100% |
| Liquid Seasonings 2-1-18 to 2-1-22 | C11 | 0% | 33% | 50% | 83% | 100% |

As shown in Table 2A, 50% or more of the panelists (three or more out of six) evaluated that the sweet fruity aroma was added to the liquid seasonings in which the concentrations of the γ-lactones added were 50 ppb or more. Moreover, all the panelists evaluated that a sweet fruity aroma was added to the liquid seasonings in which the concentration of the γ-lactones C7 to C9 added was 100 ppb and the liquid seasonings in which the concentration of the γ-lactones C10 and C11 added was 250 ppb.

2-2. Evaluation of Upper Limit

To the commercial unheated soy sauce, γ-lactones selected from γ-heptalactone (C7), γ-octalactone (C8), γ-nonalactone (C9), γ-decanolactone (C10) and γ-undecanolactone (C11) were respectively added at final concentrations of 10,000 ppb, 25,000 ppb, 50,000 ppb and 100,000 ppb, and thus liquid seasonings 2-2-1 to 2-2-20 were prepared.

Moreover, as seasoning indicators for the sensory evaluation, γ-lactones selected from γ-heptalactone (C7), γ-octalactone (C8), γ-nonalactone (C9), γ-decanolactone (C10) and γ-undecanolactone (C11) each are added thereto at a final concentration of 1 ppm (= 1,000 ppb), and thus liquid seasonings 2-2-21 to 2-2-25 were prepared.

In the sensory evaluation, six panelists capable of distinguishing aromas took the liquid seasonings at normal temperature with a spoon and evaluated the "degree of preferable fruity aroma" on a five-point scale by the following criteria from the aroma felt with the nose only without eating, where the score of the commercial unheated soy sauce was regarded as 3, and the scores of the seasoning indicators to which the same γ-lactones were added (liquid seasonings 2-2-21 to 2-2-25) were regarded as 5. The averages and the standard errors thereof were calculated.

1: An unpleasant smell was added, the aroma extremely unpreferable.
2: An unpleasant smell was slightly added, the aroma unpreferable.
3: The aroma was comparable to that of the commercial unheated soy sauce, and there was no change in the aroma.
4: A light fruity aroma was added, the degree of preferable aroma improved.
5: A fruity aroma was added to an extent comparable to that of the liquid seasoning containing 1,000 ppb of the γ-lactone (liquid seasonings 2-2-21 to 2-2-25), the degree of preferable aroma improved remarkably.

The results of the sensory evaluation of the liquid seasonings 2-2-1 to 2-2-20 are shown in Table 3A. Here,"**" and "*" in Table 3A show that there are significant differences with significance levels of 1% compared to the commercial unheated soy sauce and 5% compared to the commercial unheated soy sauce, respectively, and that the averages are higher than that of the commercial unheated soy sauce. Moreover, "++" and "+" in Table 3A show that there are significant differences with significance levels of 1% compared to the commercial unheated soy sauce and 5% compared to the product without the addition, respectively, and that the averages are lower than that of the product without the addition.

[Table 3A]

| Liquid Seasoning No. | Added γLactone | Added Concentration (ppb) | | | |
|---|---|---|---|---|---|
| | | 10,000 | 25,000 | 50,000 | 100,000 |
| Liquid Seasonings 2-2-1 to 2-2-4 | C7 | 4.3±0.3** | 4.3±0.4* | 3.6±0.5 | 2.3±0.2++ |
| Liquid Seasonings 2-2-5 to 2-2-8 | C8 | 4.3±0.3** | 4.4±0.4* | 3.3±0.4 | 2.0±0.3++ |
| Liquid Seasonings 2-2-9 to 2-2-12 | C9 | 4.7±0.2** | 4.2±0.3** | 3.8±0.3* | 2.8±0.4 |
| Liquid Seasonings 2-2-13 to 2-2-16 | C10 | 4.5±0.3** | 3.2±0.6 | 2.3±0.4+ | 1.8±0.2++ |

(continued)

| Liquid Seasoning No. | Added γLactone | Added Concentration (ppb) | | | |
|---|---|---|---|---|---|
| | | 10,000 | 25,000 | 50,000 | 100,000 |
| Liquid Seasonings 2-2-17 to 2-2-20 | C11 | 4.5±0.3** | 3.0±0.3 | 2.1±0.4+ | 2.0±0.3++ |

As shown in Table 3A, the liquid seasonings in which the concentration of the γ-lactones C7 and C8 added was 25,000 ppb, the liquid seasoning in which the concentration of the γ-lactone C9 was 50,000 ppb, and the liquid seasonings in which the concentration of the γ-lactones C10 and C11 added was 10,000 ppb were found to be liquid seasonings having a preferable fruity aroma with a statistic significance.

Moreover, the liquid seasonings in which the concentration of the γ-lactone C7 added was 25,000 ppb, the concentration of the γ-lactone C8 added was 25,000 ppb, the concentration of the γ-lactone C9 was 50,000 ppb, the concentration of the γ-lactone C10 added was 10,000 ppb, and the concentration of the γ-lactone C11 added was 10,000 ppb were liquid seasonings which did not have any unpleasant smell or the like and which had a preferable fruity aroma.

[3. Production Method of y-Lactone-Containing Liquid Fermented Seasonings and Evaluation of Aroma-Improving Effects Thereof]

Measurement Method of γ-Nonalactone

The contents of γ-nonalactone and 2-octanone used as the internal standard material in the liquid seasonings were measured by GC-MS using liquid extracts obtained by subjecting to the following extraction treatment using ethyl acetate.

<Extraction Treatment Using Ethyl Acetate>

To 5.0 g of a test liquid fermented seasoning to which 2.0 g of sodium chloride and 100 μL of a 2-octanone solution (20 ppm) were added, 1.0 mL of ethyl acetate was added, and after vigorously stirring for five minutes, the organic solvent layer was extracted. This operation was repeated three times, and the obtained organic solvent layer was dehydrated with anhydrous sodium sulfate and then concentrated to 500 μL. Thus, a measurement sample was obtained. The obtained measurement sample was analyzed by GC-MS under the following conditions.

<GC-MS Conditions>

Measurement Device: 7890B-5977 MSD (manufactured by AgilentTechnologies)
Measurement Mode: SCAN
Column: DB-WAX (length of 60 m, inter diameter of 0.25 mm, film thickness of 0.25 μm) (manufactured by Agilent-Technologies)
Inlet Temperature: 250°C
Temperature Conditions: programing from 40°C (3 min hold time) to 250°C at a rate of 6°C/min and keeping 250°C for 15 min.
Carrier: high-purity helium, constant pressure mode 229 kPa
Scan Mass Range: 30.0 to 250.0 *m*/*z*
Ionization Mode: EI

As described above, the peak areas of γ-nonalactone in the liquid fermented seasonings and the peak areas of the internal standard material were measured by GC-MS. The peak areas were determined for γ-nonalactone and 2-octanone as the internal standard material using the *m*/*z* below.

γ-Nonalactone: 85 *m*/*z*
2-Octanone: 58 *m*/*z*

3-1. Preparation of Liquid Fermented Seasoning (Open/Stirring System; n=2)

A seed starter of *Aspergillus sojae* was inoculated into a mixture of steamed soybeans and crushed roasted wheat mixed at a ratio of 6:4, and by koji-producing at 15°C to 25°C for 43 hours by an ordinary method, a soy sauce *koji* was obtained.

Hundred parts by mass of the obtained soy sauce *koji* was put into 94 parts by mass of a saline solution (sodium chloride concentration of 24% (w/v)), and further, a soy sauce lactic acid bacterium (*Tetragenococcus halophilus*) was added thereto. Lactic acid fermentation of the resultant was conducted at 15°C to 25°C for 20 days according to an ordinary method while appropriately stirring. The soy sauce *moromi* after the completion of the lactic acid fermentation was pressed and subjected to a filtration treatment using a diatomaceous earth filter, and the filtrate was treated with a UF membrane. Thus, a permeate solution (a lactic acid fermentation soup) was obtained.

In a 1-L DURAN screw-top bottle, $10^6$ CFU/mL of a salt-tolerant yeast (*Zygosaccharomyces rouxii*) was added to 1,000 mL of the obtained lactic acid fermentation soup, and yeast fermentation was conducted at 25°C for 28 days with stirring (100 rpm) without stoppering the bottle. The carbon dioxide volume in the yeast fermented product obtained after the yeast fermentation was 0.88 GV. Here, the carbon dioxide volume was measured as follows.

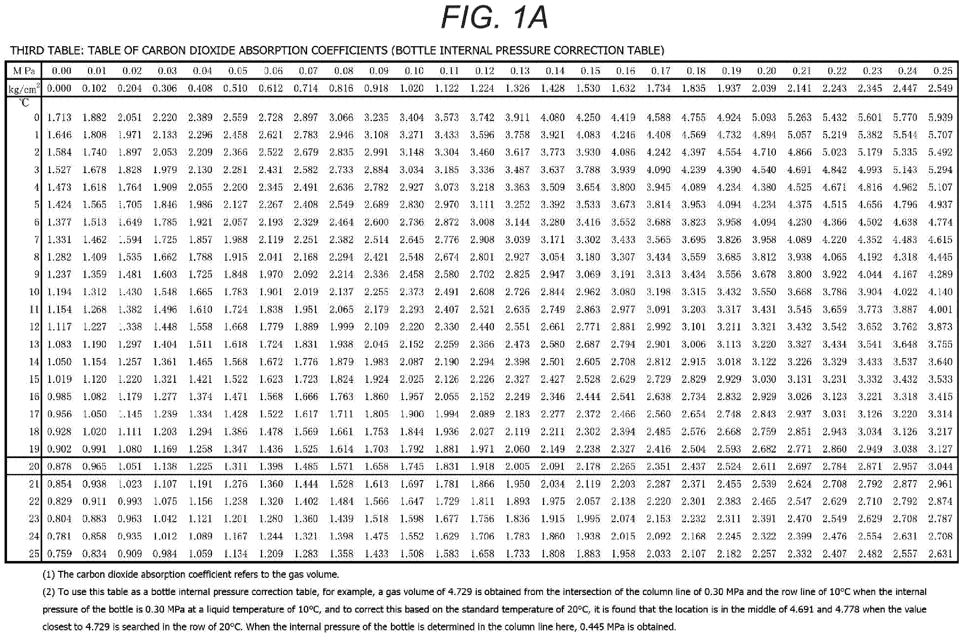

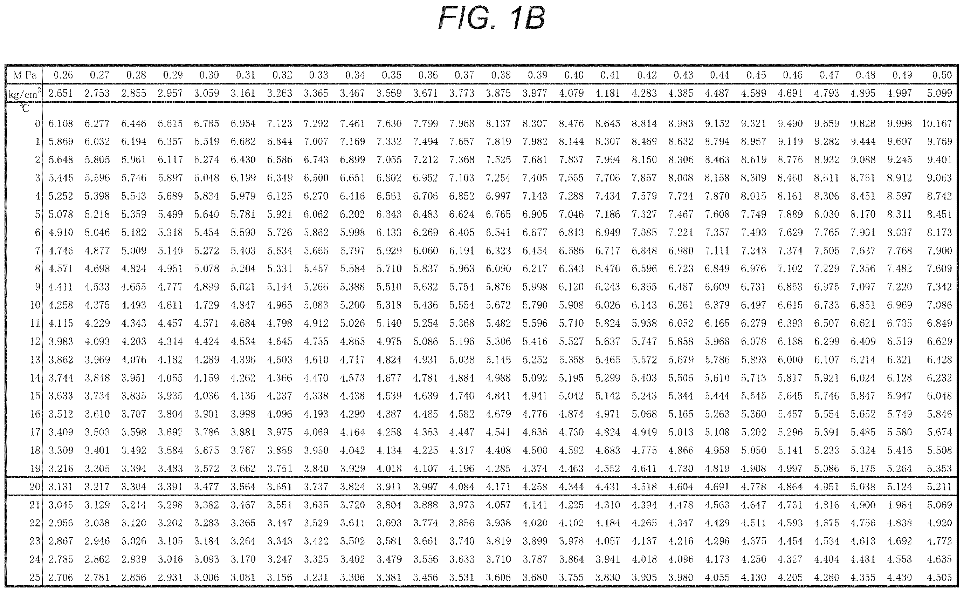

The yeast fermented product was cooled in the fermentation container to 4°C or lower and gently moved to a container for which a piercing pressure gauge could be used. The container in the cooled state was tightly sealed and attached to a piercing pressure gauge "piercing device 6001 with a thermometer" manufactured by Roots Machinery Laboratories, Inc., and the needle was pierced into the container. After shaking well, the pressure and the temperature in the container were measured. Using the Table of Carbon Dioxide Absorption Coefficients (National Tax Agency JAPAN, supplement "Analysis Method Specified by National Tax Agency", Item "8 Beer", Third Table; See Figs 1A and B), the carbon dioxide volume (Gas Volume; GV) was calculated from the obtained pressure and temperature in the container.

The obtained yeast fermented product was centrifuged at 3,000 rpm for 15 minutes, and thus a liquid fermented seasoning 3-1 was collected as a supernatant.

3-2. Preparation of Liquid Fermented Seasoning (Open/Non-Stirring System; n=2)

A liquid fermented seasoning 3-2 was obtained in the same manner as in 3-1 above, except that the stirring was not conducted in the yeast fermentation. Here, the carbon dioxide volume in the yeast fermented product obtained after the yeast fermentation was 3.54 GV

3-3. Preparation of Liquid Fermented Seasoning (Sealed/Stirring System; n=1)

A liquid fermented seasoning 3-3 was obtained in the same manner as in 3-1 above, except that the bottle was stoppered in the yeast fermentation. Here, the carbon dioxide volume in the yeast fermented product obtained after the yeast fermentation was 3.00 GV.

3-4. Preparation of Liquid Fermented Seasoning (Sealed/Non-Stirring System; n=2)

A liquid fermented seasoning 3-4 was obtained in the same manner as in 3-1 above, except that the bottle was stoppered and that the stirring was not conducted in the yeast fermentation. Here, the carbon dioxide volume in the yeast fermented product obtained after the yeast fermentation was 4.73 GV

3-5. Results of Evaluation of $\gamma$-Nonalactone

Regarding the liquid fermented seasonings 3-1 to 3-4, a commercial unheated soy sauce, "*Shiboritate Nama* Soy Sauce", and a commercial *koikuchi* (dark-colored) soy sauce, "Kikkoman *Tokusen Marudaizu* Soy Sauce" (both manufactured by Kikkoman Food Products Company), the $\gamma$-nonalactone contents were measured. The measurement results are shown in Table 4A.

[Table 4A]

| Sample Name | Yeast Fermentation Conditions | | $CO_2$ Concentration (GV) | γ-Nonalactone Concentration (ppb) | | | HEMF Concentration (ppm) |
|---|---|---|---|---|---|---|---|
| | Open/ Sealed | With or Without Stirring | | First | Second | Ave. | |
| Liquid Fermented Seasoning 3-1 | Open | With Stirring | 0.88 | 50.0 | 54.2 | 52.1 | 74.5 |
| Liquid Fermented Seasoning 3-2 | Open | Without Stirring | 3.54 | 400 | 480 | 440 | 94.4 |
| Liquid Fermented Seasoning 3-3 | Sealed | With Stirring | 3.00 | 580 | | 580 | 174.2 |
| Liquid Fermented Seasoning 3-4 | Sealed | Without Stirring | 4.73 | 1,410 | 1,662 | 1,536 | 134.9 |
| Commercial Unheated Soy Sauce | (Open) | (With Stirring) | | 15.6 | | 15.6 | 72.0 |
| Commercial *Koikuchi* Soy Sauce | (Open) | (With Stirring) | | 8.1 | | 8.1 | 50.5 |

In general, in the production of a soy sauce by a brewing process, the processes from *koji*-producing to lactic acid fermentation and yeast fermentation are conducted continuously. Moreover, the yeast fermentation is conducted in an open system, and convection is caused due to generation of gas during the fermentation. As a result, the fermented solution is stirred. In addition, in the regular production of the soy sauce, a pressed liquid obtained by pressing after the yeast fermentation is used as an unheated soy sauce, and a pasteurized pressed liquid obtained by pressing after the yeast fermentation is used as a *koikuchi* (dark-colored) soy sauce.

As Table 4A shows, in the production of soy sauces by the general brewing process, the γ-nonalactone contents of the soy sauces were about 15 ppb or less at any of them although the contents were slightly higher or lower due to the presence of absence of pasteurization.

On the other hand, soy sauces containing a high amount of γ-nonalactone could be obtained by subjecting the lactic acid fermentation soup obtained by removing the soy sauce *moromi* after the completion of the acid fermentation to yeast fermentation. Moreover, from the comparison between the liquid fermented seasoning 3-1 and the liquid fermented seasoning 3-2 or 3-3, it was found that whether the system is under an open environment or under a sealed environment, rather than presence or absence of stirring, largely changes the amount of γ-nonalactone. Furthermore, from the results of the liquid fermented seasoning 3-4, it was found that the γ-nonalactone content becomes a remarkable amount in a sealed non-stirring system.

With respect to the liquid fermented seasonings 3-1 to 3-4, six panelists capable of distinguishing aromas took the liquid fermented seasonings at normal temperature with a spoon and ranked the degrees of preferable fruity aroma among the liquid fermented seasonings on a four-point scale from the aromas felt with the nose only without eating. Similarly, the panelists were asked to take and eat the liquid fermented seasonings at normal temperature with a spoon, and the soy sauce-like tastes (flavor inherent in the soy sauce) and the richness (*koku* attribute, body) which came up from the inside of the oral cavity to the nose upon eating were ranked among the liquid fermented seasonings on a four-point scale. The results are shown in Tables 5A to 5C.

[Table 5A]

| Sample Name | Yeast Fermentation Conditions | γ-Nonalactone (ppb) | Fruity Aroma | | | | | | | |
|---|---|---|---|---|---|---|---|---|---|---|
| | | | (1) | (2) | (3) | (4) | (5) | (6) | Ave. | SD |
| Liquid Fermented Seasoning 3-1 | Open/Stirring | 52.1 | 4 | 4 | 4 | 4 | 4 | 4 | 4.0 | 0.0 |

(continued)

| Sample Name | Yeast Fermentation Conditions | γ-Nonalactone (ppb) | Fruity Aroma | | | | | | | |
|---|---|---|---|---|---|---|---|---|---|---|
| | | | (1) | (2) | (3) | (4) | (5) | (6) | Ave. | SD |
| Liquid Fermented Seasoning 3-2 | Open/Non-Stirring | 440 | 3 | 2 | 3 | 3 | 2 | 3 | 2.7 | 0.5 |
| Liquid Fermented Seasoning 3-3 | Sealed/Stirring | 580 | 2 | 3 | 2 | 2 | 3 | 2 | 2.3 | 0.5 |
| Liquid Fermented Seasoning 3-4 | Sealed/Non-Stirring | 1,536 | 1 | 1 | 1 | 1 | 1 | 1 | 1.0 | 0.0 |

[Table 5B]

| Sample Name | Yeast Fermentation Conditions | γ-Nonalactone (ppb) | Soy Sauce-Like Taste | | | | | | | |
|---|---|---|---|---|---|---|---|---|---|---|
| | | | (1) | (2) | (3) | (4) | (5) | (6) | Ave. | SD |
| Liquid Fermented Seasoning 3-1 | Open/Stirring | 52.1 | 4 | 4 | 4 | 3 | 4 | 3 | 3.7 | 0.5 |
| Liquid Fermented Seasoning 3-2 | Open/Non-Stirring | 440 | 3 | 2 | 3 | 4 | 2 | 4 | 3.0 | 0.8 |
| Liquid Fermented Seasoning 3-3 | Sealed/Stirring | 580 | 1 | 1 | 2 | 2 | 1 | 2 | 1.5 | 0.5 |
| Liquid Fermented Seasoning 3-4 | Sealed/Non-Stirring | 1,536 | 2 | 3 | 1 | 1 | 3 | 1 | 1.8 | 0.9 |

[Table 5C]

| Sample Name | Yeast Fermentation Conditions | γ-Nonalactone (ppb) | Richness | | | | | | | |
|---|---|---|---|---|---|---|---|---|---|---|
| | | | (1) | (2) | (3) | (4) | (5) | (6) | Ave. | SD |
| Liquid Fermented Seasoning 3-1 | Open/Stirring | 52.1 | 4 | 4 | 2 | 3 | 4 | 2 | 3.2 | 0.9 |
| Liquid Fermented Seasoning 3-2 | Open/Non-Stirring | 440 | 3 | 3 | 1 | 4 | 3 | 4 | 3.0 | 1.0 |
| Liquid Fermented Seasoning 3-3 | Sealed/Stirring | 580 | 2 | 2 | 4 | 2 | 2 | 1 | 2.2 | 0.9 |
| Liquid Fermented Seasoning 3-4 | Seal ed/Non-Stirring | 1,536 | 1 | 1 | 3 | 1 | 1 | 2 | 1.5 | 0.8 |

As Table 5A shows, the liquid fermented seasonings 3-2 to 3-4 had a fruity aroma to be felt because the γ-nonalactone contents were more than 52.1 ppb. Moreover, as Table 5B and Table 5C show, it was found that the soy sauce-like taste and the richness of the liquid fermented seasoning become preferable in a case where the yeast fermentation is conducted in a sealed system, in addition to the γ-nonalactone content.

The liquid fermented seasonings 3-2 to 3-4 had a sweet fruity aroma to be felt which could not be felt with the commercial unheated soy sauce and *koikuchi* (dark-colored) soy sauce. Moreover, the sweet fruity aroma could be felt even after the liquid fermented seasonings 3-2 to 3-4 were subjected to pasteurization under the conditions at 50°C for 72 hours.

As described above, soy sauces having a sweet fruity aroma due to the contained γ-nonalactone could be obtained by subjecting the lactic acid fermentation soup obtained by removing the solid content from the soy sauce *moromi* to yeast fermentation in the sealed system or in a sealed non-stirring system.

EXAMPLE 2

[1. Measurement of γ-Nonalactone Contents of Commercial Soy Sauces]

1-1. Measurement Method of γ-Nonalactone

The γ-nonalactone contents of commercial soy sauces were measured by GC-MS as follows. As the commercial soy sauces, "Kikkoman *Tokusen Marudaizu* Soy Sauce" (manufactured by Kikkoman Food Products Company) and "*Yuki Marudaizu no Ginnsenn* Soy Sauce" (manufactured by Yamasa Corporation) were used.

<Extraction Treatment of γ-Nonalactone>

Each of the commercial soy sauces in an amount of 2.0 g was weighed in 20-mL headspace vials to which 1.0 g of sodium chloride (NaCl) was added. Subsequently, by a headspace-solid phase microextraction (HS-SPME) method, the aroma components in the gas phase were adsorbed to the fibers. As the SPME fibers, Divinylbenzen/Carboxen/Polydimethylsiloxane (DVB/CAR/PDMS) fibers (75 mm, DVB/CAR/PDMS, fused silica, 24 Ga; manufactured by Merck) were used. The equilibrium conditions were the conditions at 40°C for five minutes, and the adsorption conditions were the conditions at 40°C for 20 minutes.

The captured aroma components were introduced into GC-MS "GCMS QP-2010 Ultra" (manufactured by Shimadzu Corporation) using an autosampler "AOC5000" (manufactured by Shimadzu Corporation) and analyzed. The analysis was conducted with n=4. The conditions for GC-MS were as follows.

<Measurement of γ-Nonalactone: GC-MS Conditions>

Measurement Mode: Scan
Column: DB-WAX (length of 60 m, inter diameter of 0.25 mm, film thickness of 0.25 μm) (manufactured by Agilent Technologies)
Inlet Temperature: 240°C
Temperature Conditions: programing from 40°C (3 min hold time) to 110°C at a rate of 5°C/min and to 250°C at a rate of 10 °C/min and keeping 250°C for 5 min.
Carrier: high-purity helium
Control Mode: linear velocity 40 cm/min
Pressure: 233.3 kpa
Scan Mass Range: 40.0 to 250.0 m/z
Ionization Mode: EI

As described above, the peaks of γ-nonalactone in the soy sauces were measured by GC-MS. The peak areas were determined using the m/z below. The γ-nonalactone contents (concentrations) of the soy sauces were calculated from the obtained peak areas by the standard addition method using a standard material (y-nonalactone with 98% purity (manufactured by Tokyo Chemical Industry Co., Ltd.)).
γ-Nonalactone: 85 m/z

1-2. Measurement Results

The measurement results of the γ-nonalactone contents of the commercial soy sauces are shown in Table ID. As shown in Table 1D, the γ-nonalactone content of commercial *Tokusen Marudaizu* Soy Sauce (manufactured by Kikkoman Food Products Company) was 8.1 ppb. The γ-nonalactone content of commercial *Yuki Marudaizu no Ginnsenn* Soy Sauce (manufactured by Yamasa Corporation) was 3.4 ppb. From the results, it was found that, although a tiny amount of γ-nonalactone is contained in commercial soy sauces, the amount thereof is less than 10 ppb. Moreover, the commercial soy sauces are pasteurized soy sauces, and considering that at most half the amount of γ-nonalactone is hydrolyzed through pasteurization from the results of example 12 below, the amounts of γ-nonalactone in unpasteurized soy sauces are speculated to be less than 20 ppb.

[Table 1D]

| | yNonalactone Concentration (ppb) |
|---|---|
| *Tokusen Marudaizu* Soy Sauce (manufactured by Kikkoman Food Products Company) | 8.1 |
| *Yuki Marudaizu no Ginnsenn* Soy Sauce (manufactured by Yamasa Corporation) | 3.4 |

[2. Evaluation of Heat-Deteriorated Smell-Suppressing Effect and Flavor-Improving Effect of γ-Nonalactone on Soy Sauce]

2-1. Preparation of Test Seasoning Solutions

To a 100-ml volumetric flask, 1 g of γ-nonalactone having a purity of 98% (manufactured by Tokyo Chemical Industry Co., Ltd.) was added, and 95% ethanol was added to the gauge line to prepare an undiluted γ-nonalactone solution (1 g/100 ml). Subsequently, the undiluted γ-nonalactone solution was diluted with water in such a manner that the volumes to be added to the test seasoning solutions would all become 100 μl and that the γ-nonalactone contents of the test seasoning solutions would become the predetermined amounts, and thus γ-nonalactone solutions were prepared in such a manner that the test seasoning solutions would have the predetermined concentrations.

As shown in Table 2D below, the γ-nonalactone solutions were mixed in a commercial soy sauce, "Kikkoman *Tokusen Marudaizu* Soy Sauce", (γ-nonalactone 8.1 ppb; HEMF 30 ppm or more; manufactured by Kikkoman Food Products Company), and the total amount was adjusted to 100 g with water. Thus, test seasoning solutions 2-1 to 2-4 were prepared.

Control test seasoning solutions 2-1 and 2-2 were prepared using 100 μl of water instead of the γ-nonalactone solutions.

The prepared test seasoning solutions in an amount of 100 g were packed and sealed in aluminum pouches. The solutions were subjected to heat pasteurization (120°C, 10 minutes) using a retort pasteurizer "hot water spray-type ROS-60SPXG" (manufactured by Hisaka Works, Ltd.). In this regard, however, the conditions of the heat pasteurization in the control test seasoning solution 2-1 were set at 85°C for five minutes.

2-2. Sensory Evaluation Method

With respect to the test seasoning solutions subjected to the heat pasteurization, panelists (three panelists of A to C) who were excellent in evaluating the flavors and the aromas of soy sauces such as a heat-deteriorated smell, a soy sauce aroma and a harsh taste were asked to take and eat the test seasoning solutions at normal temperature with a spoon, and the intensities of the heat-deteriorated smell, the soy sauce aroma and the harsh taste which came up from the inside of the oral cavity to the nose upon eating were ranked among the test seasoning solutions on a 6-point scale as follows. On this occasion, for each item, the control test seasoning solution 2-1 was ranked first, and the control test seasoning solution 2-2 was ranked sixth. Before conducting the sensory test, the panelists (training period: 10 to 20 years) participated in a discussion on each evaluation item and an evaluation training. Specifically, the panelists discussed each evaluation item to agree about the evaluation so that the panelists had common recognitions. Moreover, to secure the validity of the sensory test, the panelists participated in an evaluation training using some test seasoning solutions, and the reproducibility of evaluation of each panelist was checked. After conducting these procedures, the sensory evaluation of the test seasoning solutions was conducted using the panelists.

The heat-deteriorated smell was defined as an unpleasant smell and a steamed smell (a smell with a damp feeling in the nose) which are peculiar to a seasoning solution heat-pasteurized at a high temperature and which are felt when taken into the mouth. The test seasoning solutions were ranked in the order from one with the weakest heat-deteriorated smell, where the control test seasoning solution 2-1 having no heat-deteriorated smell to be felt was ranked first.

The soy sauce aroma was defined as a fresh fruity aroma which is felt with a pasteurized soy sauce that has not been subjected to heat pasteurization (namely, the commercial soy sauce) when taken into the mouth. The test seasoning solutions were ranked in the order from the one with the strongest soy sauce aroma, where the control test seasoning solution 2-1 having the soy sauce aroma to be felt was ranked first.

The harsh taste was defined as an astringent taste-like flavor which remains in the mouth after eating. The test seasoning solutions were ranked in the order from one with the weakest harsh taste, where the control test seasoning solution 2-1 having no harsh taste to be felt was ranked first.

2-3. Results of Sensory Evaluation

The results of the sensory evaluation of the test seasoning solutions are shown in Table 2D. As shown in Table 2D, from the control test seasoning solution 2-2 without the addition of the γ-nonalactone solutions, extremely strong heat-deteriorated smell and harsh taste due to the heat pasteurization were felt, and the soy sauce aroma was weakened. It was found, however, that the sensory evaluation items can be improved in a concentration dependent manner by adding the γ-nonalactone solutions thereto. In particular, from the test seasoning solution 2-3 having a γ-nonalactone content of 100 ppb or more, the heat-deteriorated smell and the harsh taste were hardly felt, and a fresh fruity soy sauce-like aroma which was felt with the commercial pasteurized soy sauce was felt sufficiently.

On the other hand, an improvement effect was observed in the test seasoning solution 2-2 in all the evaluation items compared to the control test seasoning solution 2-2, but the improvement effect was considerably weak compared to the test seasoning solution 2-3.

Thus, it was found that the heat-deteriorated smell and the harsh taste generated by heat pasteurization and the soy sauce aroma weakened by heat pasteurization are improved by containing more than 28.1 ppb of γ-nonalactone and can be improved further by containing 100 ppb or more thereof.

In this regard, however, γ-nonalactone itself has a sweet fruity aroma like a tropical fruit such as peach. Although the test seasoning solution 2-4 having a γ-nonalactone content of more than 3,000 ppb suppressed the heat-deteriorated smell and the harsh taste and had a fresh fruity soy sauce-like aroma which was felt with the commercial pasteurized soy sauce, a peach-like aroma was slightly felt, and the aroma was felt as a somewhat foreign one. It was thus found that the γ-nonalactone content is preferably 3,000 ppb or less.

From the above results, it was found that, to make excellent the heat-deteriorated smell, the harsh taste and the soy sauce aroma and to avoid addition of a foreign flavor derived from the aroma of γ-nonalactone through heat pasteurization, the concentration of γ-nonalactone in a seasoning solution containing a soy sauce is preferably in the range of 30 ppb to 3,000 ppb.

[Table 2D]

| | | Control Test Seasoning Solution 2-1 | Control Test Seasoning Solution 2-2 | Test Seasoning Solution 2-1 | Test Seasoning Solution 2-2 | Test Seasoning Solution 2-3 | Test Seasoning Solution 2-4 |
|---|---|---|---|---|---|---|---|
| Component | Soy Sauce | 100 g | 100 g | 100 g | 100 g | 100 g | 100 g |
| | γ-Nonalactone Solution | 0 μl | 0 μl | 100 μl | 100 μl | 100 μl | 100 μl |
| | Water | 100 μl | 100 μl | 0 μl | 0 μl | 0 μl | 0 μl |
| | Total | 100 g | 100 g | 100 g | 100 g | 100 g | 100 g |
| | γ-Nonalactone Concentration (based on soy sauce) | 0 ppb | 0 ppb | 10 ppb | 20 ppb | 100 ppb | 3000 ppb |
| γ-Nonalactone Concentration Contained in Soy Sauce | | 8.1 ppb | 8.1 ppb | 8.1 ppb | 8.1 ppb | 8.1 ppb | 8.1 ppb |
| Total γ-Nonalactone Concentration in Test Seasoning Solution | | 8.1 ppb | 8.1 ppb | 18.1 ppb | 28.1 ppb | 108.1 ppb | 3008.1 ppb |
| Heat Treatment Conditions | 120°C, 10 minutes | - | + | + | + | + | + |
| | 85°C, 5 minutes | + | - | - | - | - | - |
| Results of Sensory Evaluation: Heat-Deteriorated Smell | Panelist A | 1 | 6 | 5 | 4 | 3 | 2 |
| | Panelist B | 1 | 6 | 4 | 5 | 2 | 3 |
| | Panelist C | 1 | 6 | 5 | 4 | 3 | 2 |
| | Average | 1.0 | 6.0 | 4.7 | 4.3 | 2.7 | 2.3 |
| Results of Sensory Evaluation: Soy Sauce Aroma | Panelist A | 1 | 6 | 5 | 4 | 3 | 2 |
| | Panelist B | 1 | 6 | 5 | 4 | 2 | 3 |
| | Panelist C | 1 | 6 | 5 | 4 | 3 | 2 |
| | Average | 1.0 | 6.0 | 5.0 | 4.0 | 2.7 | 2.3 |
| Results of Sensory Evaluation: Harsh Taste | Panelist A | 1 | 6 | 5 | 4 | 3 | 2 |
| | Panelist B | 1 | 6 | 4 | 5 | 2 | 3 |
| | Panelist C | 1 | 6 | 4 | 5 | 2 | 3 |
| | Average | 1.0 | 6.0 | 4.3 | 4.7 | 2.3 | 2.7 |

## [3. Evaluation of Heat-Deteriorated Smell-Suppressing Effect and Flavor-Improving Effect of γ-Nonalactone on Seasoning Solutions Containing Beef and Soy Sauce]

### 3-1. Preparation of Test Seasoning Solutions

In the same manner as in 2-1 above, an undiluted γ-nonalactone solution and a γ-nonalactone solution were prepared.

In the same manner as in 2-1 above, as shown in Table 3D below, ground beef, a soy sauce, table sugar, a *kombu* extract and the γ-nonalactone solution were mixed, and the total amount was adjusted to 100 g with water. Test seasoning solutions were thus prepared, packed and sealed in aluminum pouches and then subjected to heat pasteurization. As the *kombu* extract, "*Kobukonn Hidaka* P" (manufactured by Kikkoman Food Products Company) was used. As the ground beef, ground meat of grass-fed beef produced in Australia (long diameter: about 5 mm) was used.

### 3-2. Sensory Evaluation Method

In the same manner as in 2-2 above, sensory evaluation of the test seasoning solutions subjected to the heat pasteurization was conducted by panelists (three panelists of A to C) who were excellent in evaluating the flavors and the aromas of soy sauces and meat dishes such as a heat-deteriorated smell, astringency, a soy sauce aroma and a meat smell.

The astringency was defined as an unpleasant taste like the scum of meat which remains after eating. The test seasoning solutions were ranked in the order from the one with the weakest astringency, where the control test seasoning solution 3-1 having no astringency to be felt was ranked first.

The meat smell was defined as an unpleasant smell combining the animal smell of the meat generated by

heating, the oxidized smell of lipids and the like and the raw meat smell which are felt when taken into the mouth. The test seasoning solutions were ranked in the order from the one with the weakest meat smell, where the control test seasoning solution 3-1 having no meat smell to be felt was ranked first.

3-3. Results of Sensory Evaluation

The results of the sensory evaluation of the test seasoning solutions are shown in Table 3D. As shown in Table 3D, from the control test seasoning solution 3-2 without the addition of the γ-nonalactone solutions, extremely strong heat-deteriorated smell, astringency and meat smell due to the heat pasteurization were felt, and the soy sauce aroma was weakened. It was found, however, that the sensory evaluation items can be improved in a concentration dependent manner by adding the γ-nonalactone solutions thereto. In particular, from the test seasoning solution 3-3 having a γ-nonalactone content of 100 ppb or more, the heat-deteriorated smell, the astringency and the meat smell were hardly felt, and a fresh fruity soy sauce-like aroma which was felt with the commercial pasteurized soy sauce was felt sufficiently.

In contrast, an improvement effect was observed in the test seasoning solution 3-1 in all the evaluation items compared to the control test seasoning solution 3-2, but the improvement effect was considerably weak compared to the test seasoning solution 3-3.

Thus, it was found that the heat-deteriorated smell, the astringency and the meat smell generated by heat pasteurization as well as the soy sauce aroma weakened by heat pasteurization are improved by containing 20.81 ppb or more of γ-nonalactone and can be improved further by containing 100 ppb or more.

On the other hand, in the same manner as in 2-3 above, although the test seasoning solution 3-4 having a γ-nonalactone content of more than 3,000 ppb suppressed the heat-deteriorated smell, the astringency and the meat smell, and had a fresh fruity soy sauce-like aroma which was felt with the commercial pasteurized soy sauce, a peach-like aroma was slightly felt, and the aroma was felt somewhat different. It was thus found that the γ-nonalactone content is preferably 3,000 ppb or less based on the seasoning solution.

From the above results, it was found that, to make the heat-deteriorated smell, the astringency, the soy sauce aroma and the meat smell excellent and to avoid addition of a different flavor derived from the aroma of γ-nonalactone through heat pasteurization, the concentration of γ-nonalactone in a seasoning solution containing beef and a soy sauce is preferably in the range of 30 ppb to 3,000 ppb.

[Table 3D]

| | | Control Test Seasoning Solution 3-1 | Control Test Seasoning Solution 3-2 | Test Seasoning Solution 3-1 | Test Seasoning Solution 3-2 | Test Seasoning Solution 3-3 | Test Seasoning Solution 3-4 |
|---|---|---|---|---|---|---|---|
| Component | Ground Beef | 20 g | 20 g | 20 g | 20 g | 20 g | 20 g |
| | Soy Sauce | 10 g | 10 g | 10 g | 10 g | 10 g | 10 g |
| | Table Sugar | 5 g | 5 g | 5 g | 5 g | 5 g | 5 g |
| | *Kombu* Extract | 0.1 g | 0.1 g | 0.1 g | 0.1 g | 0.1 g | 0.1 g |
| | γ-Nonalactone Solution | 0 μl | 0 μl | 100 μl | 100 μl | 100 μl | 100 μl |
| | Water | Balance | Balance | Balance | Balance | Balance | Balance |
| | Total | 100 g | 100 g | 100 g | 100 g | 100 g | 100 g |
| | γ-Nonalactone Concentration (based on seasoning solution) | 0 ppb | 0 ppb | 5 ppb | 20 ppb | 100 ppb | 3000 ppb |
| γ-Nonalactone Concentration Contained in Soy Sauce | | 0.81 ppb | 0.81 ppb | 0.81 ppb | 0.81 ppb | 0.81 ppb | 0.81 ppb |
| Total γ-Nonalactone Concentration in Test Seasoning Solution | | 0.81 ppb | 0.81 ppb | 5.81 ppb | 20.81 ppb | 100.81 ppb | 3000.81 ppb |
| Heat Treatment Conditions | 120°C, 10 minutes | - | + | + | + | + | + |
| | 85°C, 5 minutes | + | - | - | - | - | - |
| Results of Sensory Evaluation: Heat-Deteriorated Smell | Panelist A | 1 | 6 | 5 | 4 | 2 | 3 |
| | Panelist B | 1 | 6 | 5 | 4 | 3 | 2 |
| | Panelist C | 1 | 6 | 4 | 5 | 2 | 3 |
| | Average | 1.0 | 6.0 | 4.7 | 4.3 | 2.3 | 2.7 |
| Soy Sauce Aroma | Panelist A | 1 | 6 | 5 | 4 | 3 | 2 |
| | Panelist B | 1 | 6 | 5 | 4 | 3 | 2 |
| | Panelist C | 1 | 6 | 5 | 4 | 2 | 3 |
| | Average | 1.0 | 6.0 | 5.0 | 4.0 | 2.7 | 2.3 |
| Astringency | Panelist A | 1 | 6 | 5 | 4 | 3 | 2 |
| | Panelist B | 1 | 6 | 4 | 5 | 2 | 3 |
| | Panelist C | 1 | 6 | 5 | 4 | 2 | 3 |
| | Average | 1.0 | 6.0 | 4.7 | 4.3 | 2.3 | 2.7 |
| Meat Smell | Panelist A | 1 | 6 | 5 | 4 | 3 | 2 |
| | Panelist B | 1 | 6 | 4 | 5 | 2 | 3 |
| | Panelist C | 1 | 6 | 5 | 4 | 2 | 3 |
| | Average | 1.0 | 6.0 | 4.7 | 4.3 | 2.3 | 2.7 |

[4. Evaluation of Heat-Deteriorated Smell-Suppressing Effect and Flavor-Improving Effect of γ-Nonalactone on Water-Boiled Ground Beef (1)]

4-1. Preparation of Test Foods

In the same manner as in 2-1 above and the like, an undiluted γ-nonalactone solution and γ-nonalactone solutions were prepared.

In the same manner as in 2-1 above and the like, as shown in Table 4D below, ground beef and the γ-nonalactone solutions were mixed, and the total amount was adjusted to 100 g with water. Test foods were thus prepared, packed and sealed in aluminum pouches and then subjected to heat pasteurization. The seasoning solutions after subjecting to the heat pasteurization were used as water-boiled ground beef.

4-2. Sensory Evaluation Method

In the same manner as in 2-2 above and the like, sensory evaluation of the test foods subjected to the heat pasteurization was conducted by panelists (three panelists of A to C) who were excellent in evaluating the flavors and

the aromas of meat dishes such as a heat-deteriorated smell, astringency and a meat smell.

4-3. Results of Sensory Evaluation

The results of the sensory evaluation of the test foods are shown in Table 4D. As shown in Table 4D, from the control test food 4-2 without the addition of the γ-nonalactone solutions, extremely strong heat-deteriorated smell, astringency and meat smell due to the heat pasteurization were felt. It was found, however, that the sensory evaluation items can be improved in a concentration dependent manner by adding the γ-nonalactone solutions. In particular, from the test food 4-3 having a γ-nonalactone content of 100 ppb or more based on the food, the heat-deteriorated smell, the astringency and the meat smell were hardly felt.

In contrast, an improvement effect was observed in the test food 4-1 in all the evaluation items compared to the control test food 4-2, but the improvement effect was considerably weak compared to the test food 4-3.

Thus, it was found that the heat-deteriorated smell, the astringency and the meat smell generated by heat pasteurization are improved by containing 20 ppb or more of γ-nonalactone and can be improved further by containing 100 ppb or more.

From the above results, it was found that, to make the heat-deteriorated smell, the astringency and the meat smell excellent and to avoid addition of a different flavor derived from the aroma of γ-nonalactone through heat pasteurization, the concentration of γ-nonalactone in a food containing beef is preferably in the range of 20 ppb to 3,000 ppb.

[Table 4D]

| | | | Control Test Food 4-1 | Control Test Food 4-2 | Test Food 4-1 | Test Food 4-2 | Test Food 4-3 | Test Food 4-4 |
|---|---|---|---|---|---|---|---|---|
| Component | | Ground Beef | 50 g | 50 g | 50 g | 50 g | 50 g | 50 g |
| | | γ-Nonalactone Solution | 0 μl | 0 μl | 100 μl | 100 μl | 100 μl | 100 μl |
| | | Water | Balance | Balance | Balance | Balance | Balance | Balance |
| | | Total | 100 g | 100 g | 100 g | 100 g | 100 g | 100 g |
| | | γ-Nonalactone Concentration (based on food) | 0 ppb | 0 ppb | 5 ppb | 20 ppb | 100 ppb | 3000 ppb |
| Heat Treatment Conditions | | 120°C, 10 minutes | - | + | + | + | + | + |
| | | 85°C, 5 minutes | + | - | - | - | - | - |
| Results of Sensory Evaluation | Heat-Deteriorated Smell | Panelist A | 1 | 6 | 5 | 4 | 3 | 2 |
| | | Panelist B | 1 | 6 | 5 | 4 | 3 | 2 |
| | | Panelist C | 1 | 6 | 4 | 5 | 2 | 3 |
| | | Average | 1.0 | 6.0 | 4.7 | 4.3 | 2.7 | 2.3 |
| | Astringency | Panelist A | 1 | 6 | 5 | 4 | 3 | 2 |
| | | Panelist B | 1 | 6 | 5 | 4 | 2 | 3 |
| | | Panelist C | 1 | 6 | 5 | 5 | 2 | 3 |
| | | Average | 1.0 | 6.0 | 5.0 | 4.3 | 2.3 | 2.7 |
| | Meat Smell | Panelist A | 1 | 6 | 5 | 4 | 3 | 2 |
| | | Panelist B | 1 | 6 | 5 | 4 | 2 | 3 |
| | | Panelist C | 1 | 6 | 5 | 4 | 3 | 2 |
| | | Average | 1.0 | 6.0 | 5.0 | 4.0 | 2.7 | 2.3 |

[5. Evaluation of Heat-Deteriorated Smell-Suppressing Effects and Flavor-Improving Effects of γ-Nonalactone and Phenethyl Acetate on Soy Sauce]

5-1. Preparation of Test Seasoning Solutions

In the same manner as in 2-1 above and the like, an undiluted γ-nonalactone solution and γ-nonalactone solutions were prepared. Moreover, using phenethyl acetate having a purity of 98% (manufactured by Sigma-Aldrich)

instead of γ-nonalactone, an undiluted phenethyl acetate solution and phenethyl acetate solutions were prepared.

In the same manner as in 2-1 above and the like, as shown in Table 5D below, a soy sauce, water, the γ-nonalactone solutions and the phenethyl acetate solutions were mixed, and test seasoning solutions were thus prepared, packed and sealed in aluminum pouches and then subjected to heat pasteurization. Here, phenethyl acetate was not detected from the soy sauce used ("Kikkoman *Tokusen Marudaizu* Soy Sauce").

5-2. Sensory Evaluation Method

With respect to the test seasoning solutions subjected to the heat pasteurization, panelists (three panelists of A to C) who were excellent in evaluating the flavors and the aromas of soy sauces such as a heat-deteriorated smell, a soy sauce aroma and a harsh taste were asked to take the test seasoning solutions at normal temperature with a spoon and eat, and the intensities of the heat-deteriorated smell, the soy sauce aroma and the harsh taste which came up from the inside of the mouth to the nose upon eating were evaluated on a 5-point scale based on the following indicators. On this occasion, as the evaluation criteria, the score of the control test seasoning solution 5-1 was presented as "5", and the score of the control test seasoning solution 5-2 was presented as "1". The test seasoning solution 5-1 was presented as "3". Before conducting the sensory test, the panelists (training period: 10 years to 20 years) participated in a discussion on each evaluation item and an evaluation training. Specifically, the panelists discussed each evaluation item to agree about the evaluation so that the panelists had the same understandings. Moreover, to secure the validity of the sensory test, the panelists participated in an evaluation training using some test seasoning solutions, and the reproducibility of evaluation of each panelist was checked. After conducting these procedures, the sensory evaluation of the test seasoning solutions was conducted using the panelists.

<Heat-Deteriorated Smell>

1: Felt extremely strongly (control test seasoning solution 5-2)
2: Felt
3: Felt slightly (test seasoning solution 5-1)
4: Hardly felt
5: Not felt (control test seasoning solution 5-1)

<Soy Sauce Aroma>

1: Unpreferable (control test seasoning solution 5-2)
2: Slightly unpreferable
3: Slightly preferable (test seasoning solution 5-1)
4: Preferable
5: Most preferable (control test seasoning solution 5-1)

<Harsh Taste>

1: Felt extremely strongly (control test seasoning solution 5-2)
2: Felt
3: Felt slightly (test seasoning solution 5-1)
4: Hardly felt
5: Not felt (control test seasoning solution 5-1)

<Evaluation of Items>

Regarding the evaluation items, the test seasoning solutions were given a mark "-" when the total evaluation score of the three panelists was three points to nine points, "+-" when the total evaluation score was 10 points to 11 points, "+" when the total evaluation score was 12 points to 13 points and "++" when the total evaluation score was 14 points to 15 points. Moreover, overall evaluation of the test seasoning solutions was made based on the worst evaluation of the evaluation items.

5-3. Results of Sensory Evaluation

The results of the sensory evaluation of the test seasoning solutions are shown in Table 5D. As shown in Table 5D, it was found that a certain amount of γ-nonalactone has an effect of suppressing generation of a heat-deteriorated smell and a harsh taste and a decrease in a soy sauce aroma caused by heat pasteurization. Specifically, the soy sauces to which γ-nonalactone was added at a content of more than 28.1 ppb suppressed the deterioration of the soy sauces due to heat pasteurization. Furthermore, the musty heavy flavor felt due to heat pasteurization was reduced when the γ-nonalactone content was more than 28.1 ppb, and the heat-deteriorated smell and the harsh taste were hardly felt in the case of 100 ppb or more. A preferable soy sauce aroma and a strong fruity aroma were felt in the case of 1,000 ppb or more.

When γ-nonalactone was added at 3,000 ppb or more based on the soy sauce, however, although the generation of the heat-deteriorated smell and the harsh taste was suppressed, the peach-like aroma of γ-nonalactone became strong, and the aroma was felt somewhat different as a soy sauce aroma. When 10,000 ppb or more was added, the aroma was felt clearly different.

Here, although phenethyl acetate also had a tendency towards concentrationdependent suppression of the generation of the heat-deteriorated smell and the harsh taste felt due to heat pasteurization, such a tendency was not observed with respect to the aroma of the soy sauce, and it was found that the effect of suppressing deterioration of a soy sauce aroma was low. Moreover, phenethyl acetate reduced the musty heavy flavor due to heat deterioration of the soy sauce.

When the results of the test seasoning solution 5-2, the test seasoning solution 5-8 and the test seasoning solution 5-11 were compared, it was found that generation of a heat-deteriorated smell and a harsh taste and a decrease in a soy sauce aroma are suppressed synergistically when γ-nonalactone and phenethyl acetate are mixed and used.

Here, as shown by the test seasoning solution 5-12, when δ-nonalactone was added at 100 ppb based on the soy sauce instead of γ-nonalactone, the coconut-like aroma peculiar to δ-nonalactone was felt, and the aroma was felt different as a soy sauce aroma.

[Table 5D]

| | | | Control Test Seasoning Solution 5-1 | Control Test Seasoning Solution 5-2 | Test Seasoning Solution 5-1 | Test Seasoning Solution 5-2 | Test Seasoning Solution 5-3 | Test Seasoning Solution 5-4 | Test Seasoning Solution 5-5 | Test Seasoning Solution 5-6 | Test Seasoning Solution 5-7 | Test Seasoning Solution 5-8 | Test Seasoning Solution 5-9 | Test Seasoning Solution 5-10 | Test Seasoning Solution 5-11 | Test Seasoning Solution 5-12 |
|---|---|---|---|---|---|---|---|---|---|---|---|---|---|---|---|---|
| Component | | Soy Sauce | 100 g | 100 g | 100 g | 100 g | 100 g | 100 g | 100 g | 100 g | 100 g | 100 g | 100 g | 100 g | 100 g | 100 g |
| | | γ-Nonalactone Solution | 0 μl | 0 μl | 100 μl | 100 μl | 100 μl | 100 μl | 100 μl | 100 μl | 100 μl | 0 μl | 0 μl | 0 μl | 100 μl | 0 μl |
| | | δ-Nonalactone Solution | 0 μl | 0 μl | 0 μl | 0 μl | 0 μl | 0 μl | 0 μl | 0 μl | 0 μl | 0 μl | 0 μl | 0 μl | 0 μl | 100 μl |
| | | Phenethyl Acetate Solution | 0 μl | 0 μl | 0 μl | 0 μl | 0 μl | 0 μl | 0 μl | 0 μl | 0 μl | 100 μl | 100 μl | 100 μl | 100 μl | 0 μl |
| | | Water | 100 μl | 100 μl | 0 μl | 0 μl | 0 μl | 0 μl | 0 μl | 0 μl | 0 μl | 0 μl | 0 μl | 0 μl | 0 μl | 0 μl |
| | | Total | 100 g | 100 g | 100 g | 100 g | 100 g | 100 g | 100 g | 100 g | 100 g | 100 g | 100 g | 100 g | 100 g | 100 g |
| | | γ-Nonalactone Concentration (based on soy sauce) | 0 ppb | 0 ppb | 5 ppb | 20 ppb | 100 ppb | 1000 ppb | 2500 ppb | 3000 ppb | 10000 ppb | 0 ppb | 0 ppb | 0 ppb | 5 ppb | 0 ppb |
| | | δ-Nonalactone Solution (based on soy sauce) | - | - | - | - | - | - | - | - | - | - | - | - | - | 100 ppb |
| | | Phenethyl Acetate Concentration (based on soy sauce) | 0 ppb | 0 ppb | 0 ppb | 0 ppb | 0 ppb | 0 ppb | 0 ppb | 0 ppb | 0 ppb | 2 ppb | 20 ppb | 500 ppb | 2 ppb | 2 ppb |
| γ-Nonalactone Concentration Contained in Soy Sauce | | | 8.1 ppb | 8.1 ppb | 8.1 ppb | 8.1 ppb | 8.1 ppb | 8.1 ppb | 8.1 ppb | 8.1 ppb | 8.1 ppb | 8.1 ppb | 8.1 ppb | 8.1 ppb | 8.1 ppb | 8.1 ppb |
| Total γ-Nonalactone Concentration in Test Seasoning Solution | | | 8.1 ppb | 8.1 ppb | 13.1 ppb | 28.1 ppb | 108.1 ppb | 1008.1 ppb | 2508.1 ppb | 3008.1 ppb | 10008.1 ppb | 8.1 ppb | 8.1 ppb | 8.1 ppb | 13.1 ppb | 8.1 ppb |
| Heat Treatment Conditions | | 120°C, 10 minutes | - | + | + | + | + | + | + | + | + | + | + | + | + | + |
| | | 85°C, 5 minutes heating | + | - | - | - | - | - | - | - | - | - | - | - | - | - |
| Results of Sensory Evaluation | Heat-Deteriorated Smell | Panelist A | 5 | 1 | 3 | 4 | 4 | 5 | 5 | 5 | 5 | 2 | 4 | 5 | 5 | 3 |
| | | Panelist B | 5 | 1 | 3 | 4 | 5 | 5 | 5 | 5 | 5 | 2 | 4 | 5 | 5 | 3 |
| | | Panelist C | 5 | 1 | 3 | 4 | 5 | 5 | 5 | 5 | 5 | 2 | 4 | 5 | 4 | 3 |
| | | Total | 15 | 3 | 9 | 12 | 14 | 15 | 15 | 15 | 15 | 6 | 12 | 15 | 14 | 9 |
| | | Evaluation | ++ | - | +- | + | ++ | ++ | ++ | ++ | ++ | - | + | ++ | ++ | +- |
| | Soy Sauce Aroma | Panelist A | 5 | 1 | 3 | 4 | 4 | 4 | 4 | 3 | 1 | 1 | 2 | 2 | 4 | 2 |
| | | Panelist B | 5 | 1 | 3 | 4 | 4 | 4 | 4 | 3 | 1 | 1 | 2 | 2 | 4 | 2 |
| | | Panelist C | 5 | 1 | 3 | 4 | 4 | 4 | 4 | 3 | 1 | 1 | 2 | 2 | 4 | 2 |
| | | Total | 15 | 3 | 9 | 12 | 12 | 12 | 12 | 9 | 3 | 3 | 6 | 6 | 12 | 6 |
| | | Evaluation | ++ | - | +- | + | + | + | + | +- | - | - | - | - | + | - |
| | Harsh Taste | Panelist A | 5 | 1 | 3 | 4 | 4 | 4 | 4 | 4 | 4 | 2 | 3 | 3 | 4 | 3 |
| | | Panelist B | 5 | 1 | 3 | 4 | 4 | 4 | 4 | 4 | 4 | 2 | 3 | 3 | 5 | 3 |
| | | Panelist C | 5 | 1 | 3 | 4 | 4 | 4 | 4 | 4 | 4 | 2 | 3 | 3 | 4 | 3 |
| | | Total | 15 | 3 | 9 | 12 | 12 | 12 | 12 | 12 | 12 | 6 | 9 | 9 | 13 | 9 |
| | | Evaluation | ++ | - | +- | + | + | + | + | + | + | - | +- | +- | + | +- |
| | | Overall Evaluation | ++ | - | +- | + | + | + | + | +- | - | - | - | - | + | + |

[6. Evaluation of Heat-Deteriorated Smell-Suppressing Effects and Flavor-Improving Effects of γ-Nonalactone and Phenethyl Acetate on Seasoning Solutions Containing Beef and Soy Sauce]

6-1. Preparation of Test Seasoning Solutions

In the same manner as in 2-1 above and the like, an undiluted γ-nonalactone solution, γ-nonalactone solutions,

an undiluted phenethyl acetate solution and phenethyl acetate solutions were prepared.

In the same manner as in 2-1 above and the like, as shown in Table 6D below, ground beef, a soy sauce, table sugar, a *kombu* extract, the γ-nonalactone solutions and the phenethyl acetate solutions were mixed, and the total amount was adjusted to 100 g with water. Test seasoning solutions were thus prepared, packed and sealed in aluminum pouches and then subjected to heat pasteurization.

6-2. Sensory Evaluation Method

In the same manner as in 5-2 above and the like, sensory evaluation of the test seasoning solutions subjected to the heat pasteurization was conducted by panelists (three panelists of A to C) who were excellent in evaluating the flavors and the aromas of soy sauces and meat dishes such as a heat-deteriorated smell, astringency, a soy sauce aroma and a meat smell. On this occasion, as the evaluation criteria, the score of the control test seasoning solution 6-1 was presented as "5", and the score of the control test seasoning solution 6-2 was presented as "1". The test seasoning solution 6-1 was presented as "3". In this regard, the indicators of the scores of the astringency and the meat smell are as follows.

<Astringency>

1: Felt extremely strongly (control test seasoning solution 6-2)
2: Felt
3: Felt slightly (test seasoning solution 6-1)
4: Hardly felt
5: Not felt (control test seasoning solution 6-1)

<Meat Smell>

1: Felt extremely strongly (control test seasoning solution 6-2)
2: Felt
3: Felt slightly (test seasoning solution 6-1)
4: Hardly felt
5: Not felt (control test seasoning solution 6-1)

6-3. Results of Sensory Evaluation

The results of the sensory evaluation of the test seasoning solutions are shown in Table 6D. As shown in Table 6D, it was found that a certain amount of γ-nonalactone has an effect of suppressing generation of a heat-deteriorated smell, a meat smell and astringency and a decrease in a soy sauce aroma caused by heat pasteurization. Specifically, the seasoning solutions to which γ-nonalactone was added at a content of 30 ppb to 3,000 ppb suppressed the deterioration of the seasoning solutions due to heat pasteurization.

When γ-nonalactone was added at 2,500 ppb or more based on the seasoning solution, however, although the generation of the heat-deteriorated smell, the meat smell and the astringency was suppressed, the fruity aroma was felt strongly as a seasoning solution possibly because the peach-like aroma of γ-nonalactone was felt, and the aroma was felt somewhat different as a soy sauce aroma when 3,000 ppb was added. When 10,000 ppb was added, the aroma was felt clearly different.

Here, although phenethyl acetate also had a tendency towards concentrationdependent suppression of the generation of the heat-deteriorated smell, the meat smell and the astringency felt due to heat pasteurization, such a tendency was not observed with respect to the aroma of the soy sauce, and it was found that the effect of suppressing deterioration of a soy sauce aroma was low. Moreover, phenethyl acetate reduced the musty heavy flavor due to heat deterioration of the soy sauce.

Moreover, when the results of the test seasoning solution 6-1, the test seasoning solution 6-9 and the test seasoning solution 6-12 were compared, it was found that γ-nonalactone and phenethyl acetate synergistically suppress generation of a heat-deteriorated smell, a meat smell and astringency and a decrease in a soy sauce aroma.

Here, as shown by the test seasoning solution 6-13, when δ-nonalactone was added at 100 ppb based on the soy sauce instead of γ-nonalactone, the coconut-like aroma peculiar to δ-nonalactone was felt, and the aroma was felt

different as a soy sauce aroma. Thus, it is believed that, when more than 100 ppb is added, the divergence from the soy sauce aroma becomes large and that the different taste enhances.

[Table 6D]

| | | | Control Test Seasoning Solution 6-1 | Control Test Seasoning Solution 6-2 | Test Seasoning Solution 6-1 | Test Seasoning Solution 6-2 | Test Seasoning Solution 6-3 | Test Seasoning Solution 6-4 | Test Seasoning Solution 6-5 | Test Seasoning Solution 6-6 |
|---|---|---|---|---|---|---|---|---|---|---|
| Component | | Ground Beef | 20 g | 20 g | 20 g | 20 g | 20 g | 20 g | 20 g | 20 g |
| | | Soy Sauce | 10 g | 10 g | 10 g | 10 g | 10 g | 10 g | 10 g | 10 g |
| | | Table Sugar | 5 g | 5 g | 5 g | 5 g | 5 g | 5 g | 5 g | 5 g |
| | | *Kombu* Extract | 0.1 g | 0.1 g | 0.1 g | 0.1 g | 0.1 g | 0.1 g | 0.1 g | 0.1 g |
| | | γ-Nonalactone Solution | 0 μl | 0 μl | 100 μl | 100 μl | 100 μl | 100 μl | 100 μl | 100 μl |
| | | δ-Nonalactone Solution | 0 μl | 0 μl | 0 μl | 0 μl | 0 μl | 0 μl | 0 μl | 0 μl |
| | | Phenethyl Acetate Solution | 0 μl | 0 μl | 0 μl | 0 μl | 0 μl | 0 μl | 0 μl | 0 μl |
| | | Water | Balance | Balance | Balance | Balance | Balance | Balance | Balance | Balance |
| | | Total | 100 g | 100 g | 100 g | 100 g | 100 g | 100 g | 100 g | 100 g |
| | | γ-Nonalactone Concentration (based on seasoning solution) | 0 ppb | 0 ppb | 10 ppb | 20 ppb | 30 ppb | 100 ppb | 1000 ppb | 2500 ppb |
| | | δ-Nonalactone Solution (based on soy sauce) | - | - | - | - | - | - | - | - |
| | | Phenethyl Acetate Concentration (based on seasoning solution) | 0 ppb | 0 ppb | 0 ppb | 0 ppb | 0 ppb | 0 ppb | 0 ppb | 0 ppb |
| γ-Nonalactone Concentration Contained in Soy Sauce | | | 0.81 ppb | 0.81 ppb | 0.81 ppb | 0.81 ppb | 0.81 ppb | 0.81 ppb | 0.81 ppb | 0.81 ppb |
| Total γ-Nonalactone Concentration in Test Seasoning Solution | | | 0.81 ppb | 0.81 ppb | 10.81 ppb | 20.81 ppb | 30.81 ppb | 100.81 ppb | 1000.81 ppb | 2500.81 ppb |
| Heat Treatment Conditions | | 120°C, 10 minutes | - | + | + | + | + | + | + | + |
| | | 85°C, 5 minutes | + | - | - | - | - | - | - | - |
| Results of Sensory Evaluation | Heat-Deteriorated Smell | Panelist A | 5 | 1 | 3 | 4 | 5 | 5 | 5 | 5 |
| | | Panelist B | 5 | 1 | 3 | 3 | 4 | 5 | 5 | 5 |
| | | Panelist C | 5 | 1 | 3 | 4 | 5 | 5 | 5 | 5 |
| | | Total | 15 | 3 | 9 | 11 | 14 | 15 | 15 | 15 |
| | | Evaluation | ++ | - | +- | +- | ++ | ++ | ++ | ++ |
| | Soy Sauce Aroma | Panelist A | 5 | 1 | 3 | 4 | 4 | 4 | 4 | 4 |
| | | Panelist B | 5 | 1 | 3 | 4 | 5 | 4 | 4 | 4 |
| | | Panelist C | 5 | 1 | 3 | 4 | 4 | 4 | 4 | 4 |
| | | Total | 15 | 3 | 9 | 12 | 13 | 12 | 12 | 12 |
| | | Evaluation | ++ | - | +- | + | + | + | + | + |
| | Astringency | Panelist A | 5 | 1 | 3 | 4 | 5 | 5 | 5 | 5 |
| | | Panelist B | 5 | 1 | 3 | 4 | 5 | 5 | 5 | 5 |
| | | Panelist C | 5 | 1 | 3 | 4 | 5 | 5 | 5 | 5 |
| | | Total | 15 | 3 | 9 | 12 | 15 | 15 | 15 | 15 |
| | | Evaluation | ++ | - | +- | + | ++ | ++ | ++ | ++ |
| | Meat Smell | Panelist A | 5 | 1 | 3 | 3 | 4 | 4 | 4 | 4 |
| | | Panelist B | 5 | 1 | 3 | 4 | 5 | 4 | 4 | 4 |
| | | Panelist C | 5 | 1 | 3 | 3 | 4 | 4 | 4 | 4 |
| | | Total | 15 | 3 | 9 | 10 | 13 | 12 | 12 | 12 |
| | | Evaluation | ++ | - | +- | +- | + | + | + | + |
| | | Overall Evaluation | ++ | - | +- | +- | + | + | + | + |

[Table 6D (continued)]

| | | | Test Seasoning Solution 6-7 | Test Seasoning Solution 6-8 | Test Seasoning Solution 6-9 | Test Seasoning Solution 6-10 | Test Seasoning Solution 6-11 | Test Seasoning Solution 6-12 | Test Seasoning Solution 6-13 |
|---|---|---|---|---|---|---|---|---|---|
| Component | | Ground Beef | 20 g | 20 g | 20 g | 20 g | 20 g | 20 g | 20 g |
| | | Soy Sauce | 10 g | 10 g | 10 g | 10 g | 10 g | 10 g | 10 g |
| | | Table Sugar | 5 g | 5 g | 5 g | 5 g | 5 g | 5 g | 5 g |
| | | *Kombu* Extract | 0.1 g | 0.1 g | 0.1 g | 0.1 g | 0.1 g | 0.1 g | 0.1 g |
| | | γ-Nonalactone Solution | 100 μl | 100 μl | 0 μl | 0 μl | 0 μl | 100 μl | 0 μl |
| | | δ-Nonalactone Solution | 0 μl | 0 μl | 0 μl | 0 μl | 0 μl | 0 μl | 100 μl |
| | | Phenethyl Acetate Solution | 0 μl | 0 μl | 100 μl | 100 μl | 100 μl | 100 μl | 0 μl |
| | | Water | Balance | Balance | Balance | Balance | Balance | Balance | Balance |
| | | Total | 100 g | 100 g | 100 g | 100 g | 100 g | 100 g | 100 g |
| | | γ-Nonalactone Concentration (based on seasoning solution) | 3000 ppb | 10000 ppb | 0 ppb | 0 ppb | 0 ppb | 10 ppb | 0 ppb |
| | | δ-Nonalactone Solution (based on soy sauce) | - | - | - | - | - | 0 ppb | 100 ppb |
| | | Phenethyl Acetate Concentration (based on seasoning solution) | 0 ppb | 0 ppb | 2 ppb | 20 ppb | 500 ppb | 2 ppb | 0 ppb |
| γ-Nonalactone Concentration Contained in Soy Sauce | | | 0.81 ppb | 0.81 ppb | 0.81 ppb | 0.81 ppb | 0.81 ppb | 0.81 ppb | 0.81 ppb |
| Total γ-Nonalactone Concentration in Test Seasoning Solution | | | 3000.81 ppb | 10000.81 ppb | 0.81 ppb | 0.81 ppb | 0.81 ppb | 10.81 ppb | 0.81 ppb |
| Heat Treatment Conditions | | 120°C, 10 minutes | + | + | + | + | + | + | + |
| | | 85°C, 5 minutes | - | - | - | - | - | - | - |
| Results of Sensory Evaluation | Heat-Deteriorated Smell | Panelist A | 5 | 5 | 2 | 4 | 4 | 4 | 3 |
| | | Panelist B | 5 | 5 | 2 | 4 | 4 | 4 | 3 |
| | | Panelist C | 5 | 5 | 2 | 4 | 4 | 4 | 3 |
| | | Total | 15 | 15 | 6 | 12 | 12 | 12 | 9 |
| | | Evaluation | ++ | ++ | - | + | + | + | +- |
| | Soy Sauce Aroma | Panelist A | 3 | 1 | 1 | 2 | 2 | 3 | 2 |
| | | Panelist B | 4 | 1 | 1 | 2 | 2 | 4 | 2 |
| | | Panelist C | 3 | 1 | 1 | 2 | 2 | 3 | 2 |
| | | Total | 10 | 3 | 3 | 6 | 6 | 10 | 6 |
| | | Evaluation | +- | - | - | - | - | +- | - |
| | Astringency | Panelist A | 5 | 5 | 2 | 3 | 3 | 4 | 3 |
| | | Panelist B | 5 | 5 | 2 | 3 | 3 | 4 | 3 |
| | | Panelist C | 5 | 5 | 2 | 3 | 3 | 4 | 3 |
| | | Total | 15 | 15 | 6 | 9 | 9 | 12 | 9 |
| | | Evaluation | ++ | ++ | - | +- | +- | + | +- |
| | Meat Smell | Panelist A | 4 | 4 | 2 | 3 | 4 | 4 | 3 |
| | | Panelist B | 4 | 4 | 2 | 3 | 4 | 4 | 3 |
| | | Panelist C | 4 | 4 | 2 | 3 | 4 | 4 | 3 |
| | | Total | 12 | 12 | 6 | 9 | 12 | 12 | 9 |
| | | Evaluation | + | + | - | +- | + | + | +- |
| | | Overall Evaluation | +- | - | - | - | - | + | + |

[7. Evaluation of Heat-Deteriorated Smell-Suppressing Effect and Flavor-Improving Effect of γ-Nonalactone on Water-Boiled Ground Beef (2)1

7-1. Preparation of Test Foods

In the same manner as in 2-1 above and the like, an undiluted γ-nonalactone solution and γ-nonalactone solutions were prepared.

In the same manner as in 2-1 above and the like, as shown in Table 7D below, ground beef and the γ-nonalactone solutions were mixed, and the total amount was adjusted to 100 g with water. Test foods were thus prepared, packed and sealed in aluminum pouches and then subjected to heat pasteurization.

7-2. Sensory Evaluation Method

In the same manner as in 5-2 above and the like, sensory evaluation of the test foods subjected to the heat pasteurization was conducted by panelists (three panelists of A to C) who were excellent in evaluating the flavors and the aromas of meat dishes such as a heat-deteriorated smell, astringency and a meat smell. On this occasion, as the evaluation criteria, the score of the control test food 7-1 was presented as "5", and the score of the control test food 7-2 was presented as "1". The test food 7-1 was presented as "3".

7-3. Results of Sensory Evaluation

The results of the sensory evaluation of the test foods are shown in Table 7D. As shown in Table 7D, it was found that γ-nonalactone has an effect of suppressing generation of a heat-deteriorated smell, a meat smell and astringency caused by heat pasteurization. Specifically, the foods to which γ-nonalactone was added at a content of 30 ppb to 3,000 ppb suppressed the deterioration of the foods due to heat pasteurization. Moreover, although the control test food 7-2 had an oxidized smell of lipids, the oxidized smell of lipids was not felt when γ-nonalactone was added at 30 ppb, and *umami* of beef was felt strongly. When 100 ppb was added, *umami* of beef was felt strongly.

When γ-nonalactone was added at 2,500 ppb based on the seasoning solution, however, although the generation of the heat-deteriorated smell, the meat smell and the astringency was suppressed, the peach-like aroma of γ-nonalactone was slightly felt, and the aroma was felt somewhat different as a water-cooked food when 3,000 ppb was added. When 10,000 ppb was added, the aroma was felt clearly different. Thus, overall evaluation of the test foods 7-7 and 7-8, to which γ-nonalactone was added at 3,000 ppb and 10,000 ppb, respectively, was not conducted.

[Table 7D]

| | | | Control Test Food 7-1 | Control Test Food 7-2 | Test Food 7-1 | Test Food 7-2 | Test Food 7-3 | Test Food 7-4 | Test Food 7-5 | Test Food 7-6 | Test Food 7-7 | Test Food 7-8 |
|---|---|---|---|---|---|---|---|---|---|---|---|---|
| Component | | Ground Beef | 50 g | 50 g | 50 g | 50 g | 50 g | 50 g | 50 g | 50 g | 50 g | 50 g |
| | | γ-Nonalactone Solution | 0 μl | 0 μl | 100 μl | 100 μl | 100 μl | 100 μl | 100 μl | 100 μl | 100 μl | 100 μl |
| | | Water | Balance | Balance | Balance | Balance | Balance | Balance | Balance | Balance | Balance | Balance |
| | | Total | 100 g | 100 g | 100 g | 100 g | 100 g | 100 g | 100 g | 100 g | 100 g | 100 g |
| | | γ-Nonalactone Concentration (based on food) | 0 ppb | 0 ppb | 10 ppb | 20 ppb | 30 ppb | 100 ppb | 1000 ppb | 2500 ppb | 3000 ppb | 10000 ppb |
| Heat Treatment Conditions | | 120°C, 10 minutes | - | + | + | + | + | + | + | + | + | + |
| | | 85°C, 5 minutes | + | - | - | - | - | - | - | - | - | - |
| Results of Sensory Evaluation | Heat-Deteriorated Smell | Panelist A | 5 | 1 | 3 | 4 | 5 | 5 | 5 | 5 | 5 | 5 |
| | | Panelist B | 5 | 1 | 3 | 4 | 5 | 5 | 5 | 5 | 5 | 5 |
| | | Panelist C | 5 | 1 | 3 | 5 | 5 | 5 | 5 | 5 | 5 | 5 |
| | | Total | 15 | 3 | 9 | 13 | 15 | 15 | 15 | 15 | 15 | 15 |
| | | Evaluation | ++ | - | +- | + | ++ | ++ | ++ | ++ | ++ | ++ |
| | Astringency | Panelist A | 5 | 1 | 3 | 4 | 4 | 4 | 4 | 4 | 4 | 4 |
| | | Panelist B | 5 | 1 | 3 | 4 | 4 | 4 | 4 | 4 | 4 | 4 |
| | | Panelist C | 5 | 1 | 3 | 4 | 4 | 4 | 4 | 4 | 4 | 4 |
| | | Total | 15 | 3 | 9 | 12 | 12 | 12 | 12 | 12 | 12 | 12 |
| | | Evaluation | ++ | - | +- | + | + | + | + | + | + | + |
| | Meat Smell | Panelist A | 5 | 1 | 3 | 4 | 5 | 5 | 5 | 5 | 5 | 5 |
| | | Panelist B | 5 | 1 | 3 | 4 | 5 | 5 | 5 | 5 | 5 | 5 |
| | | Panelist C | 5 | 1 | 3 | 4 | 5 | 5 | 5 | 5 | 5 | 5 |
| | | Total | 15 | 3 | 9 | 12 | 15 | 15 | 15 | 15 | 15 | 15 |
| | | Evaluation | ++ | - | +- | + | ++ | ++ | ++ | ++ | ++ | ++ |
| | | Overall Evaluation | ++ | - | - | + | + | + | + | + | | |

[8. Evaluation of Influence of Heating Intensity on Heat-Deteriorated Smell-Suppressing Effect of γ-Nonalactone]

8-1. Preparation of Test Seasoning Solutions

In the same manner as in 2-1 above and the like, an undiluted γ-nonalactone solution and γ-nonalactone solutions were prepared.

In the same manner as in 2-1 above and the like, as shown in Table 8D below, a soy sauce, water and the γ-nonalactone solutions were mixed, and test seasoning solutions were thus prepared, packed and sealed in aluminum pouches and then subjected to heat pasteurization under various conditions.

The test seasoning solutions subjected to heat pasteurization under the conditions at 100°C or lower were subjected to a water bath pasteurization treatment using a thermostatic water bath "DIGITAL WATER BATH SB-651" (manufactured by EYELA). The test seasoning solutions subjected to heat pasteurization under the conditions at 100°C or higher were subjected to a pasteurization treatment using a retort pasteurizer "hot water spray-type ROS-60SPXG" (manufactured by Hisaka Works, Ltd.).

In each heat pasteurization, the substantial temperature of the seasoning solution was measured with a sensor thermometer placed in the container to adjust the heating temperature and the period, and heat pasteurization was conducted by setting the conditions to achieve the aimed Fo value. In Table 8D, the Fo values to which the seasoning solutions were subjected and the pasteurization temperatures and the periods corresponding to the pasteurization values of the Fo values are shown.

8-2. Sensory Evaluation Method

In the same manner as in 5-2 above and the like, sensory evaluation of the test seasoning solutions subjected to the heat pasteurization was conducted by panelists (three panelists of A to C) who were excellent in evaluating the flavors and the aromas of soy sauces such as a heat-deteriorated smell. On this occasion, as the evaluation criteria, the score of the control test seasoning solution 8-1, which was heat-pasteurized under the heating conditions of Fo value=0.000078 (80°C, 1 minute), was presented as "5", and the score of the control test seasoning solution 8-1, which was heat-pasteurized under the heating conditions of Fo value=10 (121.1°C, 10 minutes), was presented as "1". The test seasoning solution 8-1, which was heat-pasteurized under the heating conditions of Fo value=10 (121.1°C, 10 minutes), was presented as "3".

8-3. Results of Sensory Evaluation

The results of the sensory evaluation of the test seasoning solutions are shown in Table 8D. As shown in Table 8D, the soy sauce generated a heat-deteriorated smell under heating conditions of Fo value=0.37 (110°C, 4.8 minutes) or more, and the heat-deteriorated smell of the soy sauce became remarkable under heating conditions of Fo value=0.51 (110°C, 6.5 minutes) or more.

It was found that, when the Fo value is 10 or less, the heat-deteriorated smell of a soy sauce generated by heat pasteurization can be generally suppressed by adding γ-nonalactone at a content of more than 28.1 ppb.

[Table 8D]

| | | Control Test Seasoning Solution 8-1 | Test Seasoning Solution 8-1 | Test Seasoning Solution 8-2 | Test Seasoning Solution 8-3 | Test Seasoning Solution 8-4 | Test Seasoning Solution 8-5 | Test Seasoning Solution 8-6 |
|---|---|---|---|---|---|---|---|---|
| Component | Soy Sauce | 100 g | 100 g | 100 g | 100 g | 100 g | 100 g | 100 g |
| | γ-Nonalactone Solution | 0 μl | 100 μl | 100 μl | 100 μl | 100 μl | 100 μl | 100 μl |
| | Water | 100 μl | 0 μl | 0 μl | 0 μl | 0 μl | 0 μl | 0 μl |
| | Total | 100 g | 100 g | 100 g | 100 g | 100 g | 100 g | 100 g |
| | γ-Nonalactone Concentration (based on soy sauce) | 0 ppb | 5 ppb | 10 ppb | 20 ppb | 100 ppb | 1000 ppb | 3000 ppb |
| γ-Nonalactone Concentration Contained in Soy Sauce | | 8.1 ppb | 8.1 ppb | 8.1 ppb | 8.1 ppb | 8.1 ppb | 8.1 ppb | 8.1 ppb |
| Total γ-Nonalactone Concentration in Test Seasoning Solution | | 8.1 ppb | 13.1 ppb | 18.1 ppb | 28.1 ppb | 108.1 ppb | 1008.1 ppb | 3008.1 ppb |
| Sensory Evaluation (Heat-Deteriorated Smell) Fo value = 0.000078 (80°C, 1 min) | Panelist A | 5 | 5 | 5 | 5 | 5 | 5 | 5 |
| | Panelist B | 5 | 5 | 5 | 5 | 5 | 5 | 5 |
| | Panelist C | 5 | 5 | 5 | 5 | 5 | 5 | 5 |
| | Average | 15 | 15 | 15 | 15 | 15 | 15 | 15 |
| | Evaluation | ++ | ++ | ++ | ++ | ++ | ++ | ++ |
| Fo value = 0.0012 (85°C, 5 min) | Panelist A | 4 | 5 | 5 | 5 | 5 | 5 | 5 |
| | Panelist B | 5 | 5 | 5 | 5 | 5 | 5 | 5 |
| | Panelist C | 5 | 5 | 5 | 5 | 5 | 5 | 5 |
| | Total | 14 | 15 | 15 | 15 | 15 | 15 | 15 |
| | Evaluation | ++ | ++ | ++ | ++ | ++ | ++ | ++ |
| Fo value = 0.0077 (90°C, 10 min) | Panelist A | 4 | 5 | 5 | 5 | 5 | 5 | 5 |
| | Panelist B | 5 | 5 | 5 | 5 | 5 | 5 | 5 |
| | Panelist C | 5 | 5 | 5 | 5 | 5 | 5 | 5 |
| | Total | 14 | 15 | 15 | 15 | 15 | 15 | 15 |
| | Evaluation | ++ | ++ | ++ | ++ | ++ | ++ | ++ |
| Fo value = 0.37 (110°C, 4.6 min) | Panelist A | 3 | 3 | 4 | 5 | 5 | 5 | 5 |
| | Panelist B | 4 | 4 | 5 | 5 | 5 | 5 | 5 |
| | Panelist C | 4 | 4 | 4 | 5 | 5 | 5 | 5 |
| | Total | 11 | 11 | 13 | 15 | 15 | 15 | 15 |
| | Evaluation | +- | +- | + | ++ | ++ | ++ | ++ |
| Fo value = 0.51 (110°C, 6.5 min) | Panelist A | 3 | 3 | 4 | 4 | 5 | 5 | 5 |
| | Panelist B | 4 | 4 | 5 | 5 | 5 | 5 | 5 |
| | Panelist C | 3 | 4 | 4 | 5 | 5 | 5 | 5 |
| | Total | 10 | 11 | 13 | 14 | 15 | 15 | 15 |
| | Evaluation | +- | +- | + | ++ | ++ | ++ | ++ |
| Fo value = 0.70 (110°C, 9.0 min) | Panelist A | 3 | 3 | 4 | 4 | 4 | 5 | 5 |
| | Panelist B | 3 | 4 | 4 | 5 | 5 | 5 | 5 |
| | Panelist C | 3 | 4 | 4 | 5 | 5 | 5 | 5 |
| | Total | 9 | 11 | 12 | 14 | 14 | 15 | 15 |
| | Evaluation | +- | +- | + | ++ | ++ | ++ | ++ |
| Fo value = 1.78 (110°C, 23 min) | Panelist A | 2 | 3 | 4 | 4 | 4 | 5 | 5 |
| | Panelist B | 3 | 3 | 4 | 5 | 5 | 5 | 5 |
| | Panelist C | 3 | 4 | 4 | 4 | 5 | 5 | 5 |
| | Total | 8 | 10 | 12 | 13 | 14 | 15 | 15 |
| | Evaluation | - | +- | + | + | ++ | ++ | ++ |
| Fo value = 3.7 (121.1°C, 3.7 min) | Panelist A | 2 | 3 | 4 | 4 | 4 | 5 | 5 |
| | Panelist B | 2 | 3 | 4 | 5 | 5 | 5 | 5 |
| | Panelist C | 2 | 3 | 4 | 4 | 5 | 5 | 5 |
| | Total | 6 | 9 | 12 | 13 | 14 | 15 | 15 |
| | Evaluation | - | +- | + | + | ++ | ++ | ++ |
| Fo value = 10 (121.1°C, 10 min) | Panelist A | 1 | 3 | 3 | 4 | 4 | 5 | 5 |
| | Panelist B | 1 | 3 | 4 | 5 | 5 | 5 | 5 |
| | Panelist C | 1 | 3 | 4 | 4 | 5 | 5 | 5 |
| | Total | 3 | 9 | 11 | 13 | 14 | 15 | 15 |
| | Evaluation | - | +- | +- | + | ++ | ++ | ++ |
| Fo value = 30 (121.1°C, 30 min) | Panelist A | 1 | 1 | 3 | 3 | 3 | 4 | 4 |
| | Panelist B | 1 | 1 | 3 | 3 | 3 | 4 | 4 |
| | Panelist C | 1 | 2 | 3 | 3 | 4 | 4 | 4 |
| | Total | 3 | 4 | 9 | 9 | 10 | 12 | 12 |
| | Evaluation | - | - | +- | +- | +- | + | + |

[9. Evaluation of Heat-Deteriorated Smell-Suppressing Effects and Flavor-Improving Effects of -γ-Lactones on Soy Sauce]

9-1. Preparation of Test Seasoning Solutions

In the same manner as in 2-1 above and the like, an undiluted γ-nonalactone solution and γ-nonalactone solutions were prepared. Similarly, using γ-valerolactone (manufactured by Kanto Chemical Co., Inc.), γ-hexanolactone (manufactured by Tokyo Chemical Industry Co., Ltd.), γ-heptanolactone (manufactured by Tokyo Chemical Industry Co., Ltd.), γ-octanolactone (manufactured by Tokyo Chemical Industry Co., Ltd.), γ-decanolactone (manufactured by Alfa Aesar), γ-undecanolactone (manufactured by Tokyo Chemical Industry Co., Ltd.) and γ-dodecanolactone (manufactured by FUJIFILM Wako Pure Chemical Corporation) having a purity of 96% or more, undiluted γ-lactone solutions and γ-lactone solutions were prepared.

In the same manner as in 2-1 above and the like, as shown in Table 9D below, a soy sauce, water and the γ-lactone solutions were mixed, and test seasoning solutions were thus prepared, packed and sealed in aluminum pouches and then subjected to heat pasteurization.

9-2. Sensory Evaluation Method

In the same manner as in 5-2 above and the like, sensory evaluation of the test seasoning solutions subjected to the heat pasteurization was conducted by panelists (three panelists of A to C) who were excellent in evaluating the flavors and the aromas of soy sauces such as a heat-deteriorated smell, a soy sauce aroma and a harsh taste. On this occasion, as the evaluation criteria, the score of the control test seasoning solution 9-1 was presented as "5", and the score of the control test seasoning solution 9-2 was presented as "1". The test seasoning solution 9-1 obtained by adding 5 ppb of γ-nonalactone to a soy sauce containing about 8 ppb of γ-nonalactone, was presented as "3".

9-3. Results of Sensory Evaluation

The results of the sensory evaluation of the test seasoning solutions are shown in Table 9D. As shown in Table 9D, when γ-lactones from γ-heptanolactone having seven carbon atoms in total (C7) to γ-undecanolactone of C11 were added to a soy sauce at a total γ-lactone content of 28.1 ppb or more, followed by heat pasteurization, all the γ-lactones had an effect of suppressing generation of a heat-deteriorated smell and a harsh taste and deterioration of a soy sauce aroma due to heat pasteurization.

[Table 9D]

| | | | Control Test Seasoning Solution 9-1 | Control Test Seasoning Solution 9-2 | Test Seasoning Solution 9-1 | Test Seasoning Solution 9-2 | Test Seasoning Solution 9-3 | Test Seasoning Solution 9-4 | Test Seasoning Solution 9-5 | Test Seasoning Solution 9-6 | Test Seasoning Solution 9-7 | Test Seasoning Solution 9-8 |
|---|---|---|---|---|---|---|---|---|---|---|---|---|
| Component | | Soy Sauce | 100 g | 100 g | 100 g | 100 g | 100 g | 100 g | 100 g | 100 g | 100 g | 100 g |
| | | γ-Valerolactone Solution (C5) | 0 µl | 0 µl | 0 µl | 100 µl | 100 µl | 0 µl | 0 µl | 0 µl | 0 µl | 0 µl |
| | | γ-Hexanolactone Solution (C6) | 0 µl | 0 µl | 0 µl | 0 µl | 0 µl | 100 µl | 100 µl | 0 µl | 0 µl | 0 µl |
| | | γ-Heptalactone Solution (C7) | 0 µl | 0 µl | 0 µl | 0 µl | 0 µl | 0 µl | 0 µl | 100 µl | 100 µl | 0 µl |
| | | γ-Octalactone Solution (C8) | 0 µl | 0 µl | 0 µl | 0 µl | 0 µl | 0 µl | 0 µl | 0 µl | 0 µl | 100 µl |
| | | γ-Nonalactone Solution (C9) | 0 µl | 0 µl | 100 µl | 0 µl | 0 µl | 0 µl | 0 µl | 0 µl | 0 µl | 0 µl |
| | | γ-Decanolactone Solution (C10) | 0 µl | 0 µl | 0 µl | 0 µl | 0 µl | 0 µl | 0 µl | 0 µl | 0 µl | 0 µl |
| | | γ-Undecanolactone Solution (C11) | 0 µl | 0 µl | 0 µl | 0 µl | 0 µl | 0 µl | 0 µl | 0 µl | 0 µl | 0 µl |
| | | γ-Dodecanolactone Solution (C12) | 0 µl | 0 µl | 0 µl | 0 µl | 0 µl | 0 µl | 0 µl | 0 µl | 0 µl | 0 µl |
| | | Water | 100 µl | 100 µl | 0 µl | 0 µl | 0 µl | 0 µl | 0 µl | 0 µl | 0 µl | 0 µl |
| | | Total | 100 g | 100 g | 100 g | 100 g | 100 g | 100 g | 100 g | 100 g | 100 g | 100 g |
| γ-Lactone Concentration (based on soy sauce, excluding γ-nonalactone) | | | 0 ppb | 0 ppb | 5 ppb | 20 ppb | 100 ppb | 20 ppb | 100 ppb | 20 ppb | 100 ppb | 20 ppb |
| γ-Nonalactone Concentration Contained in Soy Sauce | | | 8.1 ppb | 8.1 ppb | 8.1 ppb | 8.1 ppb | 8.1 ppb | 8.1 ppb | 8.1 ppb | 8.1 ppb | 8.1 ppb | 8.1 ppb |
| Total γ-Nonalactone Concentration in Test Seasoning Solution | | | 8.1 ppb | 8.1 ppb | 13.1 ppb | 8.1 ppb | 8.1 ppb | 8.1 ppb | 8.1 ppb | 8.1 ppb | 8.1 ppb | 8.1 ppb |
| Heat Treatment Conditions | | 120°C, 10 minutes | - | + | + | + | + | + | + | + | + | + |
| | | 85°C, 5 minutes | + | - | - | - | - | - | - | - | - | - |
| Results of Sensory Evaluation | Heat-Deteriorated Smell | Panelist A | 5 | 1 | 3 | 3 | 3 | 3 | 3 | 4 | 4 | 4 |
| | | Panelist B | 5 | 1 | 3 | 3 | 3 | 3 | 3 | 4 | 5 | 4 |
| | | Panelist C | 5 | 1 | 3 | 3 | 3 | 3 | 4 | 4 | 5 | 5 |
| | | Total | 15 | 3 | 9 | 9 | 9 | 9 | 10 | 12 | 14 | 13 |
| | | Evaluation | ++ | - | +- | +- | +- | +- | +- | + | ++ | + |
| | Soy Sauce Aroma | Panelist A | 5 | 1 | 3 | 2 | 3 | 3 | 3 | 4 | 4 | 4 |
| | | Panelist B | 5 | 1 | 3 | 3 | 3 | 3 | 4 | 4 | 4 | 4 |
| | | Panelist C | 5 | 1 | 3 | 3 | 3 | 3 | 3 | 4 | 4 | 4 |
| | | Total | 15 | 3 | 9 | 8 | 9 | 9 | 10 | 12 | 12 | 12 |
| | | Evaluation | ++ | - | +- | - | +- | +- | +- | + | + | + |
| | Harsh Taste | Panelist A | 5 | 1 | 3 | 3 | 3 | 3 | 3 | 4 | 4 | 4 |
| | | Panelist B | 5 | 1 | 3 | 3 | 3 | 3 | 4 | 4 | 4 | 4 |
| | | Panelist C | 5 | 1 | 3 | 3 | 3 | 4 | 3 | 4 | 4 | 4 |
| | | Total | 15 | 3 | 9 | 9 | 9 | 10 | 10 | 12 | 12 | 12 |
| | | Evaluation | ++ | - | - | +- | +- | +- | +- | + | + | + |

[Table 9D (continued)]

| | | Test Seasoning Solution 9-9 | Test Seasoning Solution 9-10 | Test Seasoning Solution 9-11 | Test Seasoning Solution 9-12 | Test Seasoning Solution 9-13 | Test Seasoning Solution 9-14 | Test Seasoning Solution 9-15 | Test Seasoning Solution 9-16 | Test Seasoning Solution 9-17 |
|---|---|---|---|---|---|---|---|---|---|---|
| Component | Soy Sauce | 100 g | 100 g | 100 g | 100 g | 100 g | 100 g | 100 g | 100 g | 100 g |
| | γ-Valerolactone Solution (C5) | 0 μl | 0 μl | 0 μl | 0 μl | 0 μl | 0 μl | 0 μl | 0 μl | 0 μl |
| | γ-Hexanolactone Solution (C6) | 0 μl | 0 μl | 0 μl | 0 μl | 0 μl | 0 μl | 0 μl | 0 μl | 0 μl |
| | γ-Heptalactone Solution (C7) | 0 μl | 0 μl | 0 μl | 0 μl | 0 μl | 0 μl | 0 μl | 0 μl | 0 μl |
| | γ-Octalactone Solution (C8) | 100 μl | 0 μl | 0 μl | 0 μl | 0 μl | 0 μl | 0 μl | 0 μl | 0 μl |
| | γ-Nonalactone Solution (C9) | 0 μl | 100 μl | 100 μl | 0 μl | 0 μl | 0 μl | 0 μl | 0 μl | 0 μl |
| | γ-Decanolactone Solution (C10) | 0 μl | 0 μl | 0 μl | 100 μl | 100 μl | 0 μl | 0 μl | 0 μl | 0 μl |
| | γ-Undecanolactone Solution (C11) | 0 μl | 0 μl | 0 μl | 0 μl | 0 μl | 100 μl | 100 μl | 0 μl | 0 μl |
| | γ-Dodecanolactone Solution (C12) | 0 μl | 0 μl | 0 μl | 0 μl | 0 μl | 0 μl | 0 μl | 100 μl | 100 μl |
| | Water | 0 μl | 0 μl | 0 μl | 0 μl | 0 μl | 0 μl | 0 μl | 0 μl | 0 μl |
| | Total | 100 g | 100 g | 100 g | 100 g | 100 g | 100 g | 100 g | 100 g | 100 g |
| γ-Lactone Concentration (based on soy sauce, excluding γ-nonalactone) | | 100 ppb | 20 ppb | 100 ppb | 20 ppb | 100 ppb | 20 ppb | 100 ppb | 20 ppb | 100 ppb |
| γ-Nonalactone Concentration Contained in Soy Sauce | | 8.1 ppb | 8.1 ppb | 8.1 ppb | 8.1 ppb | 8.1 ppb | 8.1 ppb | 8.1 ppb | 8.1 ppb | 8.1 ppb |
| Total γ-Nonalactone Concentration in Test Seasoning Solution | | 8.1 ppb | 28.1 ppb | 108.1 ppb | 8.1 ppb | 8.1 ppb | 8.1 ppb | 8.1 ppb | 8.1 ppb | 8.1 ppb |
| Heat Treatment Conditions | 120°C, 10 minutes | + | + | + | + | + | + | + | + | + |
| | 85°C, 5 minutes | - | - | - | - | - | - | - | - | - |
| Results of Sensory Evaluation — Heat-Deteriorated Smell | Panelist A | 4 | 4 | 5 | 4 | 5 | 4 | 4 | 3 | 4 |
| | Panelist B | 5 | 5 | 5 | 4 | 5 | 4 | 5 | 3 | 3 |
| | Panelist C | 5 | 4 | 5 | 5 | 5 | 4 | 5 | 4 | 4 |
| | Total | 14 | 13 | 15 | 13 | 15 | 12 | 14 | 10 | 11 |
| | Evaluation | ++ | + | ++ | + | ++ | + | ++ | +- | +- |
| Soy Sauce Aroma | Panelist A | 4 | 4 | 4 | 4 | 4 | 4 | 4 | 3 | 3 |
| | Panelist B | 4 | 5 | 5 | 4 | 4 | 4 | 4 | 3 | 4 |
| | Panelist C | 4 | 4 | 4 | 4 | 4 | 4 | 4 | 3 | 3 |
| | Total | 12 | 13 | 13 | 12 | 12 | 12 | 12 | 9 | 10 |
| | Evaluation | + | + | + | + | + | + | + | +- | +- |
| Harsh Taste | Panelist A | 4 | 4 | 4 | 4 | 4 | 4 | 4 | 3 | 3 |
| | Panelist B | 4 | 5 | 5 | 4 | 4 | 4 | 4 | 3 | 4 |
| | Panelist C | 4 | 4 | 4 | 4 | 4 | 4 | 4 | 4 | 4 |
| | Total | 12 | 13 | 13 | 12 | 12 | 12 | 12 | 10 | 11 |
| | Evaluation | + | + | + | + | + | + | + | +- | +- |

## [10. Evaluation of Heat-Deteriorated Smell-Suppressing Effect of γ-Nonalactone on Seasoning Solutions Containing Food Ingredients and Soy Sauce]

### 10-1. Preparation of Test Seasoning Solutions

In the same manner as in 2-1 above and the like, an undiluted γ-nonalactone solution and γ-nonalactone solutions were prepared.

In the same manner as in 2-1 above and the like, as shown in Table 10D below, ingredients such as a carrot (15 mm × 15 mm × 15 mm), lean meat of tuna (20 mm × 20 mm × 3 mm), chicken (20 mm × 20 mm × 20 mm) and soy protein ("New *Soimi* F 2010" (manufactured by The Nisshin OilliO Group, Ltd.)), fermented seasonings such as a soy sauce and soybean paste, table sugar, a *kombu* extract and the γ-nonalactone solutions were mixed, and the total amount was adjusted to 100 g with water. Test seasoning solutions were thus prepared, packed and sealed in aluminum pouches and then subjected to heat pasteurization.

### 10-2. Sensory Evaluation Method

In the same manner as in 5-2 above and the like, sensory evaluation of the test seasoning solutions subjected to the heat pasteurization was conducted by panelists (three panelists of A to C) who were excellent in evaluating the flavors and the aromas of cooked products of ingredients such as a heat-deteriorated smell. On this occasion, as the evaluation criteria, for each ingredient, the score of the control test seasoning solution containing the ingredient or the fermented seasoning which was heat-pasteurized at 85°C for five minutes was presented as "5", and the score of the control test seasoning solution that did not contain γ-nonalactone and that contained the ingredient or the fermented seasoning which was heat-pasteurized at 120°C for 10 minutes was presented as "1". Here, the indicators of the scores of the heat-deteriorated smells of the ingredients are as follows.

<Carrot>

The unpleasant flavors such as an earthy smell, a potato-like smell, a steamed smell and a musty unpleasant flavor generated by the heat pasteurization were comprehensively evaluated as the heat-deteriorated smell of the carrot.

1: Felt extremely strongly (control test seasoning solution 10-1-2)

2: Felt
3: Felt slightly
4: Hardly felt
5: Not felt (control test seasoning solution 10-1-1)

<Lean Meat of Tuna>

The unpleasant flavors such as a fishy smell, a steamed smell, an oxidized oil smell and a harsh taste generated by the heat pasteurization were comprehensively evaluated as the heat-deteriorated smell of the lean meat of tuna.

1: Felt extremely strongly (control test seasoning solution 10-2-2)
2: Felt
3: Felt slightly
4: Hardly felt
5: Not felt (control test seasoning solution 10-2-1)

<Chicken>

The unpleasant flavors such as a meat smell, a raw meat smell, a steamed smell and a harsh taste generated by the heat pasteurization were comprehensively evaluated as the heat-deteriorated smell of the chicken.

1: Felt extremely strongly (control test seasoning solution 10-3-2)
2: Felt
3: Felt slightly
4: Hardly felt
5: Not felt (control test seasoning solution 10-3-1)

<Soy Protein>

The unpleasant flavors such as a steamed smell, a grassy smell of soybeans and a soybean flour-like strange taste generated by the heat pasteurization were comprehensively evaluated as the heat-deteriorated smell of the soy protein.

1: Felt extremely strongly (control test seasoning solution 10-4-2)
2: Felt
3: Felt slightly
4: Hardly felt
5: Not felt (control test seasoning solution 10-4-1)

<Soybean Paste>

The unpleasant flavors such as a caramel-like burnt sweet smell, a steamed smell of soybeans, an acid taste and a harsh taste generated by the heat pasteurization were comprehensively evaluated as the heat-deteriorated smell of the soybean paste.

1: Felt extremely strongly (control test seasoning solution 10-5-2)
2: Felt
3: Felt slightly
4: Hardly felt
5: Not felt (control test seasoning solution 10-5-1)

<Soy Sauce and Soybean Paste>

The heat-deteriorated smell of the soy sauce and the heat-deteriorated smell of the soybean paste generated by the heat pasteurization were comprehensively evaluated.

1: Felt extremely strongly (control test seasoning solution 10-6-2)
2: Felt

3: Felt slightly
4: Hardly felt
5: Not felt (control test seasoning solution 10-6-1)

10-3. Results of Sensory Evaluation

The results of the sensory evaluation of the test seasoning solutions are shown in Table 10D. As shown in Table 10D, it was found that the heat-deteriorated smell-suppressing effect of γ-nonalactone at a content of 100 ppb or more is effective not only on the heat-deteriorated smell due to a soy sauce but also on the heat-deteriorated smells due to ingredients such as a vegetable and fish contained in the seasoning solution, in seasoning solutions containing a soy sauce containing a food ingredient. It was also found that the heat-deteriorated smell-suppressing effect of 100 ppb or more of γ-nonalactone is effective not only on a soy sauce but also on another fermented seasoning such as soybean paste.

That is, by adding γ-nonalactone at 100 ppb or more, the following results were obtained: the seasoning solution containing the carrot did not have the heat-deteriorated smell even after the heat pasteurization but rather had a sweet flavor of fresh carrot; the seasoning solution containing the lean meat of tuna did not have the heat-deteriorated smell even after the heat pasteurization but rather had enhanced *umami* of fish; the seasoning solution containing the chicken did not have the heat-deteriorated smell even after the heat pasteurization but rather had enhanced *umami* of chicken; the seasoning solution containing the soy protein did not have the heat-deteriorated smell even after the heat pasteurization; and the seasoning solution containing the soybean paste did not have the heat-deteriorated smell even after the heat pasteurization but had a flavor of fresh soybean paste.

[Table 10D]

| | | Control Test Seasoning Solution 10-1-1 | Control Test Seasoning Solution 10-1-2 | Test Seasoning Solution 10-1-1 | Control test Seasoning Solution 10-2-1 | Control Test Seasoning Solution 10-2-2 | Test Seasoning Solution 10-2-1 | Control Test Seasoning Solution 10-3-1 | Control Test Seasoning Solution 10-3-2 | Test Seasoning Solution 10-3-1 |
|---|---|---|---|---|---|---|---|---|---|---|
| Ingredient | Carrot | 20 g | 20 g | 20 g | 0 g | 0 g | 0 g | 0 g | 0 g | 0 g |
| | Lean Meat of Tuna | 0 g | 0 g | 0 g | 35 g | 35 g | 35 g | 0 g | 0 g | 0 g |
| | Chicken | 0 g | 0 g | 0 g | 0 g | 0 g | 0 g | 30 g | 30 g | 30 g |
| | Sov Protein | 0 g | 0 g | 0 g | 0 g | 0 g | 0 g | 0 g | 0 g | 0 g |
| Fermented Seasoning | Soy Sauce | 10 g | 10g | 10 g | 10 g | 10 g | 10 g | 10 g | 10 g | 10 g |
| | Soybean Paste | 0 g | 0 g | 0 g | 0 g | 0 g | 0 g | 0 g | 0 g | 0 g |
| Other Component | Table Sugar | 5 g | 5 g | 5 g | 5g | 5g | 5g | 5 g | 5 g | 5 g |
| | *Kombu* Extract | 0.1 g | 0.1 g | 0.1 g | 0.1 g | 0.1 g | 0.1 g | 0.1 g | 0.1 g | 0.1 g |
| | γ-Nonalactone Solution | 0 μl | 0 μl | 100 μl | 0 μl | 0 μl | 100 μl | 0 μl | 0 μl | 100 μl |
| | Water | Balance | Balance | Balance | Balance | Balance | Balance | Balance | Balance | Balance |
| | Total | 100 g | 100 g | 100 g | 100 g | 100 g | 100 g | 100 g | 100 g | 100 g |
| | γ-Lactone Concentration (based on seasoning solution) | 0 ppb | 0 ppb | 100 ppb | 0 ppb | 0 ppb | 100 ppb | 0 ppb | 0 ppb | 100 ppb |
| γ-Nonalactone Concentration Contained in Soy Sauce | | 0.81 ppb | 0.81 ppb | 0.81 | 0.81 ppb | 0.81 ppb | 0.81 ppt | 0.81 ppb | 0.81 ppb | 0.81 ppb |
| Total γ-Nonalactone Concentration in Test Seasonins Solution | | 0.81 ppb ppb | 0.81 ppb ppb | 100.81 1 ppb | 0.81 ppb | 0.81 ppb | 100.81 ppb | 0.81 ppb | 0.81 ppb | 100.81 ppb |
| Heat Treatment Conditions | 120°C, 10 minutes | - | + | + | - | + | + | - | + | - |
| | 85°C, 5 minutes | + | - | - | + | - | - | + | - | - |

(continued)

| | | | Control Test Seasoning Solution 10-1-1 | Control Test Seasoning Solution 10-1-2 | Test Seasoning Solution 10-1-1 | Control test Seasoning Solution 10-2-1 | Control Test Seasoning Solution 10-2-2 | Test Seasoning Solution 10-2-1 | Control Test Seasoning Solution 10-3-1 | Control Test Seasoning Solution 10-3-2 | Test Seasoning Solution 10-3-1 |
|---|---|---|---|---|---|---|---|---|---|---|---|
| Results of Sensory Evaluation | Heat-Deteriorated Smell | Panelist A | 5 | 1 | 4 | 5 | 1 | 4 | 5 | 1 | 5 |
| | | Panelist B | 5 | 1 | 5 | 5 | 1 | 5 | 5 | 1 | 5 |
| | | Panelist C | 5 | 1 | 4 | 5 | 1 | 5 | 5 | 1 | 5 |
| | | Total | 15 | 3 | 13 | 15 | 3 | 14 | 15 | 3 | 15 |
| | | Evaluation | ++ | - | + | ++ | - | ++ | ++ | - | ++ |
| | | | Control Test Seasoning Solution 10-4-1 | Control Test Seasoning Solution 10-4-2 | Test Seasoning Solution 10-4-1 | Control Test Seasoning Solution 10-5-1 | Control Test Seasoning Solution 10-5-2 | Test Seasoning Solution 10-5-1 | Control Test Seasoning Solution 10-6-1 | Control Test Seasoning Solution 10-6-2 | Test Seasoning Solution 10-6-1 |
| Ingredient | | Carrot | 0 g | 0 g | 0 g | 0 g | 0 g | 0 g | 0 g | 0 g | 0 g |
| | | Lean Meat of Tuna | 0 g | 0 g | 0 g | 0 g | 0 g | 0 g | 0 g | 0 g | 0 g |
| | | Chicken | 0 g | 0 g | 0 g | 0 g | 0 g | 0 g | 0 g | 0 g | 0g |
| | | Sov Protein | 15 g | 15 g | 15 g | 0 g | 0 g | 0 g | 0 g | 0 g | 0 g |
| Fermented Seasoning | | Soy Sauce | 10 g | 10 g | 10 g | 0g | 0 g | 0 g | 10g | 10g | 10g |
| | | Soybean Paste | 0 g | 0 g | 0g | 20 g | 20 g | 20 g | 10 g | 10 g | 10 g |
| Other Component | | Table Sugar | 5 g | 5 g | 5 g | 5g | 5g | 5g 5 g | 5 g | 5 g | 5 g |
| | | *Kombu* Extract | 0.1 g | 0.1 g | 0.1 g | 0.1 g | 0.1 g | 0.1 g | 0.1 g | 0.1 g | 0.1 g |
| | | γ-Nonalactone Solution | 0 μl | 0 μl, | 100 μl | 0 μl | 0 μl | 100 μl | 0 μl | 0 μl | 100 μl |
| | | Water | Balance | Balance | Balance | Balance | Balance | Balance | Balance | Balance | Balance |
| | | Total | 100 g | 100 g | 100 g | 100 g | 100 g | 100 g | 100 g | 100 g | 100 g |
| | | γ-Lactone Concentration (based on seasoning solution) | 0 ppb | 0 ppb | 100 ppb | 0 ppb | 0 ppb | 100 ppb | 0 ppb | 0 ppb | 100 ppb |

(continued)

| | | | Control Test Seasoning Solution 10-4-1 | Control Test Seasoning Solution 10-4-2 | Test Seasoning Solution 10-4-1 | Control Test Seasoning Solution 10-5-1 | Control Test Seasoning Solution 10-5-2 | Test Seasoning Solution 10-5-1 | Control Test Seasoning Solution 10-6-1 | Control Test Seasoning Solution 10-6-2 | Test Seasoning Solution 10-6-1 |
|---|---|---|---|---|---|---|---|---|---|---|---|
| γ-Nonalactone Concentration Contained in Soy Sauce | | | 0.81 ppb | 0.81 ppb | 0.81 | - | - | - | 0.81 ppb | 0.81 ppb | 0.81 ppb |
| Total γ-Nonalactone Concentration in Test Seasoning Solution | | | 0.81 ppb | 0.81 ppb | 100.81 ppb | 0 ppb | 0 ppb | 100 ppt | 0.81 ppb | 0.81 ppb | 100.81 ppb |
| Heat Treatment Conditions | | 120°C, 10 minutes | - | + | + | - | + | + | - | + | + |
| | | 85°C, 5 minutes | + | - | - | + | - | - | + | - | - |
| Results of Sensory Evaluation | Heat-Deteriorated Smell | Panelist A | 5 | 1 | 5 | 5 | 1 | 5 | 5 | 1 | 5 |
| | | Panelist B | 5 | 1 | 5 | 5 | 1 | 4 | 5 | 1 | 5 |
| | | Panelist C | 5 | 1 | 5 | 5 | 1 | 4 | 5 | 1 | 5 |
| | | Total | 15 | 3 | 15 | 15 | 3 | 13 | 15 | 3 | 15 |
| | | Evaluation | ++ | - | ++ | ++ | - | + | ++ | - | ++ |

[11. Evaluation of Heat-Deteriorated Smell-Suppressing Effect of γ-Nonalactone on Seasoning Solutions Containing Food Ingredients]

11-1. Preparation of Test Seasoning Solutions

In the same manner as in 2-1 above and the like, an undiluted γ-nonalactone solution and γ-nonalactonesolutions were prepared.

In the same manner as in 2-1 above and the like, as shown in Table 11D below, ingredients such as a carrot, lean meat of tuna, chicken and soy protein and the γ-nonalactone solutions were mixed, and the total amount was adjusted to 100 g with water. Test seasoning solutions were thus prepared, packed and sealed in aluminum pouches and then subjected to heat pasteurization.

11-2. Sensory Evaluation Method

In the same manner as in 5-2 above and the like, sensory evaluation of the test seasoning solutions subjected to the heat pasteurization was conducted by panelists (three panelists of A to C) who were excellent in evaluating the flavors and the aromas of cooked products of ingredients such as a heat-deteriorated smell. On this occasion, as the evaluation criteria, for each ingredient, the score of the control test seasoning solution containing the ingredient which was heat-pasteurized at 85°C for five minutes was presented as "5", and the score of the control test seasoning solution that did not contain γ-nonalactoneand that contained the ingredient which was heat-pasteurized at 120°C for 10 minutes was presented as "1".

11-3. Results of Sensory Evaluation

The results of the sensory evaluation of the test seasoning solutions are shown in Table 11D. As shown in Table 11D, it was found that the heat-deteriorated smell-suppressing effect of γ-nonalactone at a content of 100 ppb is effective on the heat-deteriorated smell due to not only ground beef but also ingredients such as a vegetable, fish and soy protein.

[Table 11D]

| | | Control Test Seasoning Solution 11-1-1 | Control Test Seasoning Solution 11-1-2 | Test Seasoning Solution 11-1-1 | Control Test Seasoning Solution 11-2-1 | Control Test Seasoning Solution 11-2-2 | Test Seasoning Solution 11-2-1 | Control Test Seasoning Solution 11-3-1 | Control Test Seasoning Solution 11-3-2 | Test Seasoning Solution 11-3-1 | Control Test Seasoning Solution 11-4-1 | Control Test Seasoning Solution 11-4-2 | Test Seasoning Solution 11-4-1 |
|---|---|---|---|---|---|---|---|---|---|---|---|---|---|
| Ingredient | Carrot | 20g | 20g | 20g | 0 g | 0 g | 0 g | 0 g | 0 g | 0 g | 0g | 0 g | 0 g |
| | Lean Meat of Tuna | 0g | 0 g | 0g | 35 g | 35 g | 35 g | 0 g | 0 g | 0 g | 0 g | 0 g | 0 g |
| | Chicken | 0g | 0g | 0g | 0 g | 0 g | 0g | 30 g | 30 g | 30 g | 0 g | 0 g | 0 g |
| | Sov Protein | 0 g | 0 g | 0 g | 0 g | 0 g | 0 g | 0 g | 0 g | 0 g | 15 g | 15 g | 15 g |
| | γ-Nonalactone Solution | 0 μl | 0 μl | 100 μl | 0 μl | 0 μl | 100 μl | 0 μl | 0 μl | 100 μl | 0 μl | 0 μl | 100 μl |
| | Water | Balance | Balance | Balance | Balance | Balance | Balance | Balance | Balance | Balance | Balance | Balance | Balance |
| | Total | 100 g | 100 g | 100 g | 100 g | 100 g | 100 g | 100 g | 100 g | 100 g | 100 g | 100 g | 100 g |
| | γ-Lactone Concentration (based on seasoning solution) | 0 ppb | 0 ppb | 100 ppb | 0 ppb | 0 ppb | 100 ppb | 0 ppb | 0 ppb | 100 ppb | 0 ppb | 0 ppb | 100 ppb |
| Heat Treatment Conditions | 120°C, 10 minutes | - | + | + | - | + | + | - | + | + | - | + | + |
| | 85°C, 5 minutes | + | - | - | + | - | - | + | - | - | + | - | - |
| Results of Sensory Evaluation — Heat-Deteriorated Smell | PanelistA | 5 | 1 | 4 | 5 | 1 | 4 | 5 | 1 | 5 | 5 | 1 | 5 |
| | Panelist B | 5 | 1 | 4 | 5 | 1 | 4 | 5 | 1 | 5 | 5 | 1 | 5 |
| | Panelist C | 5 | 1 | 4 | 5 | 1 | 5 | 5 | 1 | 4 | 5 | 1 | 5 |
| | Total | 15 | 3 | 12 | 15 | 3 | 13 | 15 | 3 | 14 | 15 | 3 | 15 |
| | Evaluation | ++ | - | + | ++ | - | + | ++ | - | ++ | ++ | - | ++ |

[12. Evaluation of γ-Nonalactone Contents of Seasoning Solutions after Heat Pasteurization]

12-1. Preparation of Test Seasoning Solutions

In the same manner as in 2-1 above and the like, an undiluted γ-nonalactone solution and γ-nonalactone solutions were prepared.

In the same manner as in 2-1 above and the like, as shown in Table 12D below, a soy sauce, water and the γ-nonalactone solutions were mixed, and test seasoning solutions were thus prepared, packed and sealed in aluminum pouches and then subjected to heat pasteurization.

12-2. Measurement Method of γ-Nonalactone

The method for measuring γ-nonalactone contained in the test seasoning solutions was the same method as that described in 1-1 above, and the measurement was made by GC-MS.

12-3. Measurement Results

The results showing the relative peak area values of the measurement samples based on the peak area value of the measurement sample of the control test seasoning solution 12-1 from the measurement results are shown in Table 12D. As shown in Table 12D, it was found that a certain amount of γ-nonalactone remains even after heat pasteurization at a high temperature.

[Table 12D]

| | | Control Test Seasoning Solution 12-1 | Control Test Seasoning Solution 12-2 | Test Seasoning Solution 12-1 | Test Seasoning Solution 12-2 |
|---|---|---|---|---|---|
| Component | Soy Sauce | 100 g | 100 g | 100 g | 100 g |
| | γ-Nonalactone Solution | 0 μl | 100 μl | 100 μl | 100 μl |
| | Water | 100 μl | 0 μl | 0 μl | 0 μl |
| | Total | 100 g | 100 g | 100 g | 100 g |
| γ-Nonalactone Concentration (based on soy sauce) (note) | | 0 ppb | 1000 ppb | 1000 ppb | 1000 ppb |
| Heat Treatment Conditions | Fo value = 10 (121.1°C, 10 minutes) | - | - | - | + |
| | Fo value = 0.37 (110°C, 4.8 minutes) | - | - | + | - |
| | Peak Area Ratio | 0.009 | 1.000 | 0.574 | 0.430 |
| (Note: γ-Nonalactone derived from the soy sauce is 0.81 ppb.) | | | | | |

[13. Evaluation of Heat-Deteriorated Smell-Suppressing Effect of γ-Nonalactone Generated by Fermentation]

13-1. γ-Nonalactone and Measurement Method

The contents of γ-nonanolactone and a 1-pentanol solution used as the internal standard material contained in the liquid fermented seasonings were measured by GC-MS using liquid extracts obtained by subjecting to the following extraction treatment using ethyl acetate.

<Extraction Treatment of γ-Nonalactone>

To 5.0 g of a test fermented seasoning solution to which 2.0 g of sodium chloride and 100 μL of a 1-pentanol solution (30 ppm) were added, 1.0 mL of ethyl acetate was added. After vigorously stirring for five minutes, the organic

solvent layer was extracted. This operation was repeated three times, and the obtained organic solvent layer was dehydrated with anhydrous sodium sulfate. A measurement sample was thus obtained.
The obtained measurement samples were introduced to and analyzed with GC-MS "6890GC/5973MSD" (manufactured by Agilent Technologies) under the following conditions. The analysis was conducted with n=2.

<Measurement of γ-Nonalactone: GC-MS Conditions>

Measurement Mode: SIM
Column: DB-FFAP (length of 60 m, inter diameter of 0.25 mm, film thickness of 0.25 μm) (J&W)
Inlet Temperature: 250°C
Temperature Conditions: programing from 40°C (3 min hold time) to 250°C at a rate of 6°C/min and keeping 250°C for 15 min
Carrier: high-purity helium, linear velocity mode
Linear flow rate: 30 cm/second
Pressure: 121.088 kpa
Ionization Mode: EI

As described above, the peak areas of γ-nonanolactone in the test fermented seasoning solutions and the peak areas of the internal standard material were measured by GC-MS. The peak areas were determined for γ-nonalactone and 1-pentanol as the internal standard material using the m/z below.

γ-Nonalactone: m/z 85
1-Pentanol: m/z 42

The peak area values were standardized with the internal standard material, and the γ-nonalactone contents (concentrations) of the test fermented seasoning solutions were calculated.

13-2. Production of γ-Lactone-Containing Liquid Fermented Seasoning

A seed starter of *Aspergillus sojae* was inoculated into a mixture of steamed soybeans and crushed roasted wheat mixed at a ratio of 5:5, and by *koji*-producing at 15°C to 25°C for 43 hours by an ordinary method, a soy sauce *koji* was obtained.
Hundred parts by mass of the obtained soy sauce *koji* was put into 94 parts by mass of a saline solution (sodium chloride concentration of 24% (w/v)), and further, a soy sauce lactic acid bacterium (*Tetragenococcus halophilus*) was added thereto. Lactic acid fermentation of the resultant was conducted at 15°C to 25°C for 20 days according to an ordinary method while appropriately stirring. The soy sauce *moromi* after the completion of the lactic acid fermentation was subjected to solid-liquid separation, and the soup was treated with a UF membrane. Thus, a permeate solution (a lactic acid fermentation soup) was obtained. In a 1-L DURAN screw-top bottle, a salt-tolerant yeast (*Zygosaccharomyces rouxii*) was added to the obtained lactic acid fermentation soup, and yeast fermentation was conducted at 20°C to 30°C for about 60 days with a stopper without stirring. The obtained yeast fermented product was subjected to pasteurization, filtration and a bacterial removal treatment according to ordinary methods, and thus a liquid fermented seasoning A was obtained.

13-3. Preparation of Test Seasoning Solutions

In the same manner as in 2-1 above and the like, as shown in Table 13D below, the liquid fermented seasoning A, a soy sauce, table sugar and a *kombu* extract were mixed, and the total amount was adjusted to 100 g with water. Test seasoning solutions were thus prepared, packed and sealed in aluminum pouches and then subjected to heat pasteurization.

13-4. Sensory Evaluation Method

In the same manner as in 5-2 above and the like, sensory evaluation of the test seasoning solutions subjected to the heat pasteurization was conducted by panelists (three panelists of A to C) who were excellent in evaluating the flavors and the aromas of soy sauces such as a heat-deteriorated smell. On this occasion, as the evaluation criteria, the score of the control test seasoning solution 13-1-1 was presented as "5", and the score of the test seasoning solution

13-4-2 was presented as "1".

13-5. Results of Sensory Evaluation

The results of the sensory evaluation of the test seasoning solutions are shown in Table 13D. As shown in Table 13D, it was found that the heat-deteriorated smell due to heat pasteurization is suppressed in a test seasoning solution as a liquid fermented seasoning containing γ-nonalactone itself and also in a test seasoning solution to which a liquid fermented seasoning containing γ-nonalactone has been added. That is, it was found that γ-nonalactone has a heat-deteriorated smell-suppressing effect regardless of the form of the supply source thereof.

[Table 13D]

| | | Control Test Seasoning Solution 13-1-1 | Test Seasoning Solution 13-1-1 | Control Test Seasoning Solution 13-2-1 | Test Seasoning Solution 13-2-1 | Control Test Seasoning Solution 13-3-1 | Test Seasoning Solution 13-3-1 | Control Test Seasoning Solution 13-4-1 | Test Seasoning Solution 13-4-1 | Test Seasoning Solution 13-4-2 |
|---|---|---|---|---|---|---|---|---|---|---|
| Component | Liquid Fermented Seasoning A | 100 g | 100 g | 0 g | 0 g | 10 g | 10 g | 5 g | 5 g | 0 g |
| | Soy Sauce | 0 g | 0 g | 100 g | 100 g | 5 g | 5 g | 5 g | 5 g | 5 g |
| | Table Sugar | 0 g | 0 g | 0 g | 0 g | 5g | 5g | 5 g | 5g | 5 g |
| | *Kombu* Extract | 0.0 g | 0.0 g | 0.0 g | 0.0 g | 0.1 g | 0.1 g | 0.1 g | 0.1 g | 0.1 g |
| | Water | 0 g | 0 g | 0 g | 0 g | Balance | Balance | Balance | Balance | Balance |
| | Total | 100 g | 100 g | 100 g | 100 g | 100 g | 100 g | 100 g | 100 g | 100 g |
| γ-Nonalactone Concentration Contained in Soy Sauce | | 0 ppb | 0 ppb | 8.1 ppb | 8.1 ppb | 0.41 ppb | 0.41 ppb | 0.41 ppb | 0.41 ppb | 0.41 ppb |
| γ-Nonalactone Concentration Contained in Liquid Fermented Seasoning A | | 1410 ppb | 1410 ppb | 0 ppb | 0 ppb | 141 ppb | 141 ppb | 70.5 ppb | 70.5 ppb | 0 ppb |
| Total γ-Nonalactone Concentration in Test Seasoning Solution | | 1410 b | 1410 b | 8.1 ppb | 8.1 ppb | 141.41 ppb | 141.41 ppb | 70.91 ppb | 70.91 ppb | 0.41 ppb |
| Heat Treatment Conditions | 121.1°C, 10 minutes | - | + | - | + | - | + | - | + | + |
| | 85°C, 5 minutes | + | - | - | - | + | - | - | - | - |
| Results of Sensory Evaluation — Heat-Deteriorated Smell | Panelist A | 5 | 5 | 5 | 1 | 5 | 5 | 5 | 5 | 1 |
| | Panelist B | 5 | 5 | 5 | 1 | 5 | 4 | 5 | 4 | 1 |
| | Panelist C | 5 | 5 | 5 | 1 | 5 | 5 | 5 | 4 | 1 |
| | Total | 15 | 15 | 15 | 3 | 15 | 14 | 15 | 13 | 3 |
| | Evaluation | ++ | ++ | ++ | - | ++ | ++ | ++ | + | - |

INDUSTRIAL APPLICABILITY

The soy sauce and the soy sauce-like seasoning of one embodiment of the invention are expected to be used for adding a sweet fruity aroma like a tropical fruit in addition to a flavor inherent in a soy sauce by applying to various foods and drinks and seasonings.

The composition of one embodiment of the invention is a processed food with high palatability having a desired excellent flavor without adding a heat-deteriorated smell due to a food material to be felt by heat pasteurization or can be used for cooking the processed food, and thus the composition can widely contribute to the health of people from the nutrients derived from the food material of a food which are suitable for the human body. Moreover, the method of one embodiment of the invention can be used for producing the composition of one embodiment of the invention in an industrial scale. The processed food obtained using the method and the composition of one embodiment of the invention can be provided in restaurants and thus is useful as a food used in various scenes.

CROSS REFERENCE TO RELATED APPLICATIONS

The present application claims priorities of all of Japanese Patent Application No. 2021-25285 filed on February 19, 2021, Japanese Patent Application No. 2021-51167 filed on March 25, 2021 and Japanese Patent Application No. 2021-51168 filed on March 25, 2021, the entire contents of which are incorporated herein as disclosure.

BRIEF DESCRIPTION OF DRAWINGS

[Fig. 1A] Fig. 1A is the Table of Carbon Dioxide Absorption Coefficients described as the third table in National Tax Agency JAPAN, supplement "Analysis Method Specified by National Tax Agency", Item "8 Beer".
[Fig. 1B] Fig. 1B is the Table of Carbon Dioxide Absorption Coefficients described as the third table in National Tax Agency JAPAN, supplement "Analysis Method Specified by National Tax Agency", Item "8 Beer".

## Claims

**1.** A soy sauce or a soy sauce-like seasoning in which the content of at least one kind of γ-lactone selected from the group consisting of γ-lactones represented by the following general formula (I)

[Chem. 1]

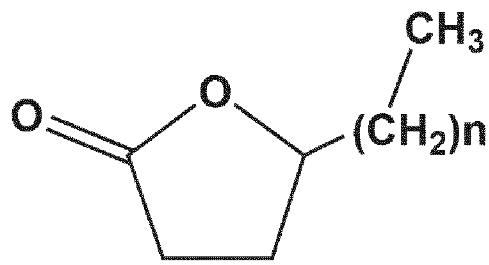

(I)

(in the formula, n represents an integer of 2 to 6)
is 100 ppb to 60,000 ppb.

**2.** A method for producing a γ-nonalactone-containing soy sauce including

a step of obtaining a soy sauce *moromi* soup by subjecting a soy sauce *moromi,* obtainable by subjecting a soy sauce *koji* to lactic acid fermentation by a soy sauce lactic acid bacterium, to a solid-liquid separation treatment and
a step of obtaining a γ-nonalactone-containing soy sauce by subjecting the soy sauce *moromi* soup to yeast fermentation by a soy sauce yeast in a sealed system.

3. The method according to claim 2, wherein the yeast fermentation is yeast fermentation by the soy sauce yeast in a sealed system under a non-stirring condition.

4. The method according to any one of claims 2 to 3, wherein the yeast fermentation is yeast fermentation conducted in such a manner that the carbon dioxide volume of the fermented solution is 1 GV to 10 GV.

5. The method according to any one of claims 2 to 4, wherein the γ-nonalactone-containing soy sauce is a γ-nonalactone-containing soy sauce having a γ-nonalactone content of 100 ppb to 20,000 ppb.

6. A method for suppressing a heat-deteriorated smell including
a step of suppressing a heat-deteriorated smell due to a food material by heating a container-packed composition containing the food material and at least one kind of γ-lactone selected from the group consisting of γ-lactones represented by the following general formula (I)

[Chem. 2]

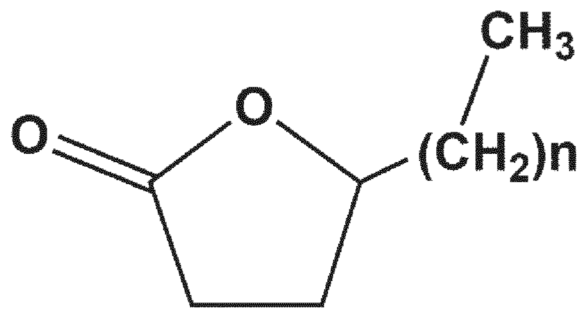

(I)

(in the formula, n represents an integer of 2 to 6).

7. A method for producing a heated container-packed composition including
a step of obtaining a container-packed composition in which a heat-deteriorated smell due to a food material is suppressed by heating a container-packed composition containing the food material and at least one kind of γ-lactone selected from the group consisting of γ-lactones represented by the following general formula (I)

[Chem. 3]

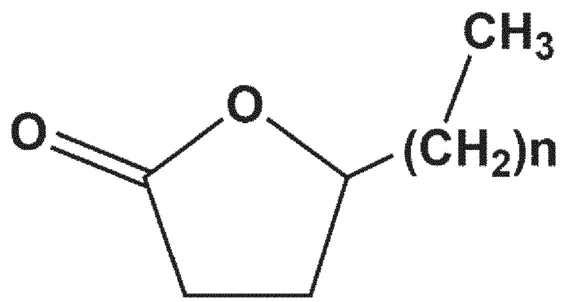

(I)

(in the formula, n represents an integer of 2 to 6).

8. The method according to any one of claims 6 to 7, wherein the γ-lactone content is 30 ppb to 3,000 ppb.

9. The method according to any one of claims 6 to 8, wherein the food material is at least one kind of food material selected from the group consisting of a seasoning component, a vegetable, meat, seafood and a processed food.

**10.** The method according to any one of claims 6 to 8, wherein the food material is at least one kind of food material selected from the group consisting of a soy sauce, soybean paste, a carrot, beef, pork, chicken, fish and soy protein.

**11.** The method according to any one of claims 6 to 10, wherein the container-packed composition is a container-packed composition for seasoning or a container-packed processed food.

**12.** A heated container-packed composition

containing a food material and at least one kind of γ-lactone selected from the group consisting of γ-lactones represented by the following general formula (I)

[Chem. 4]

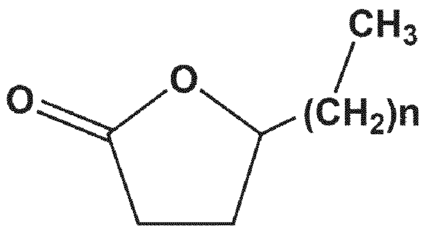

(I)

(in the formula, n represents an integer of 2 to 6),
wherein a heat-deteriorated smell due to the food material is suppressed more than that of a heated container-packed composition that contains the food material and that does not substantially contain the γ-lactone.

**13.** A composition for suppressing a heat-deteriorated smell due to a food material,

wherein the composition contains at least one kind of γ-lactone selected from the group consisting of γ-lactones represented by the following general formula (I)

[Chem. 5]

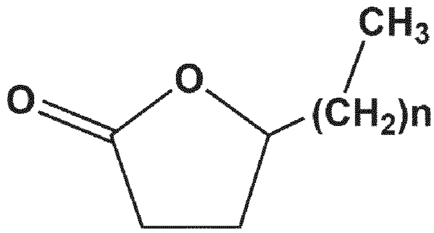

(I)

(in the formula, n represents an integer of 2 to 6) and
the composition is used by packing in a container with a food material before heating to be heated.

**14.** The composition according to any one of claims 12 to 13, wherein the γ-lactone content is 30 ppb to 3,000 ppb.

**15.** The composition according to any one of claims 12 to 14, wherein the food material is at least one kind of food material selected from the group consisting of a seasoning component, a vegetable, meat and seafood.

**16.** The composition according to any one of claims 12 to 14, wherein the food material is at least one kind of food material selected from the group consisting of a soy sauce, beef, pork, chicken, fish and soy protein.

**17.** The composition according to any one of claims 12 and 14 to 16, wherein the container-packed composition is a container-packed composition for seasoning or a container-packed processed food.

# FIG. 1A

THIRD TABLE: TABLE OF CARBON DIOXIDE ABSORPTION COEFFICIENTS (BOTTLE INTERNAL PRESSURE CORRECTION TABLE)

| MPa | 0.00 | 0.01 | 0.02 | 0.03 | 0.04 | 0.05 | 0.06 | 0.07 | 0.08 | 0.09 | 0.10 | 0.11 | 0.12 | 0.13 | 0.14 | 0.15 | 0.16 | 0.17 | 0.18 | 0.19 | 0.20 | 0.21 | 0.22 | 0.23 | 0.24 | 0.25 |
|---|---|---|---|---|---|---|---|---|---|---|---|---|---|---|---|---|---|---|---|---|---|---|---|---|---|---|
| $kg/cm^2$ | 0.000 | 0.102 | 0.204 | 0.306 | 0.408 | 0.510 | 0.612 | 0.714 | 0.816 | 0.918 | 1.020 | 1.122 | 1.224 | 1.326 | 1.428 | 1.530 | 1.632 | 1.734 | 1.835 | 1.937 | 2.039 | 2.141 | 2.243 | 2.345 | 2.447 | 2.549 |
| ℃ | | | | | | | | | | | | | | | | | | | | | | | | | | |
| 0 | 1.713 | 1.882 | 2.051 | 2.220 | 2.389 | 2.559 | 2.728 | 2.897 | 3.066 | 3.235 | 3.404 | 3.573 | 3.742 | 3.911 | 4.080 | 4.250 | 4.419 | 4.588 | 4.755 | 4.924 | 5.093 | 5.263 | 5.432 | 5.601 | 5.770 | 5.939 |
| 1 | 1.646 | 1.808 | 1.971 | 2.133 | 2.296 | 2.458 | 2.621 | 2.783 | 2.946 | 3.108 | 3.271 | 3.433 | 3.596 | 3.758 | 3.921 | 4.083 | 4.246 | 4.408 | 4.569 | 4.732 | 4.894 | 5.057 | 5.219 | 5.382 | 5.544 | 5.707 |
| 2 | 1.584 | 1.740 | 1.897 | 2.053 | 2.209 | 2.366 | 2.522 | 2.679 | 2.835 | 2.991 | 3.148 | 3.304 | 3.460 | 3.617 | 3.773 | 3.930 | 4.086 | 4.242 | 4.397 | 4.554 | 4.710 | 4.866 | 5.023 | 5.179 | 5.335 | 5.492 |
| 3 | 1.527 | 1.678 | 1.828 | 1.979 | 2.130 | 2.281 | 2.431 | 2.582 | 2.733 | 2.884 | 3.034 | 3.185 | 3.336 | 3.487 | 3.637 | 3.788 | 3.939 | 4.090 | 4.239 | 4.390 | 4.540 | 4.691 | 4.842 | 4.993 | 5.143 | 5.294 |
| 4 | 1.473 | 1.618 | 1.764 | 1.909 | 2.055 | 2.200 | 2.345 | 2.491 | 2.636 | 2.782 | 2.927 | 3.073 | 3.218 | 3.363 | 3.509 | 3.654 | 3.800 | 3.945 | 4.089 | 4.234 | 4.380 | 4.525 | 4.671 | 4.816 | 4.962 | 5.107 |
| 5 | 1.424 | 1.565 | 1.705 | 1.846 | 1.986 | 2.127 | 2.267 | 2.408 | 2.549 | 2.689 | 2.830 | 2.970 | 3.111 | 3.252 | 3.392 | 3.533 | 3.673 | 3.814 | 3.953 | 4.094 | 4.234 | 4.375 | 4.515 | 4.656 | 4.796 | 4.937 |
| 6 | 1.377 | 1.513 | 1.649 | 1.785 | 1.921 | 2.057 | 2.193 | 2.329 | 2.464 | 2.600 | 2.736 | 2.872 | 3.008 | 3.144 | 3.280 | 3.416 | 3.552 | 3.688 | 3.823 | 3.958 | 4.094 | 4.230 | 4.366 | 4.502 | 4.638 | 4.774 |
| 7 | 1.331 | 1.462 | 1.594 | 1.725 | 1.857 | 1.988 | 2.119 | 2.251 | 2.382 | 2.514 | 2.645 | 2.776 | 2.908 | 3.039 | 3.171 | 3.302 | 3.433 | 3.565 | 3.695 | 3.826 | 3.958 | 4.089 | 4.220 | 4.352 | 4.483 | 4.615 |
| 8 | 1.282 | 1.409 | 1.535 | 1.662 | 1.788 | 1.915 | 2.041 | 2.168 | 2.294 | 2.421 | 2.548 | 2.674 | 2.801 | 2.927 | 3.054 | 3.180 | 3.307 | 3.434 | 3.559 | 3.685 | 3.812 | 3.938 | 4.065 | 4.192 | 4.318 | 4.445 |
| 9 | 1.237 | 1.359 | 1.481 | 1.603 | 1.725 | 1.848 | 1.970 | 2.092 | 2.214 | 2.336 | 2.458 | 2.580 | 2.702 | 2.825 | 2.947 | 3.069 | 3.191 | 3.313 | 3.434 | 3.556 | 3.678 | 3.800 | 3.922 | 4.044 | 4.167 | 4.289 |
| 10 | 1.194 | 1.312 | 1.430 | 1.548 | 1.665 | 1.783 | 1.901 | 2.019 | 2.137 | 2.255 | 2.373 | 2.491 | 2.608 | 2.726 | 2.844 | 2.962 | 3.080 | 3.198 | 3.315 | 3.432 | 3.550 | 3.668 | 3.786 | 3.904 | 4.022 | 4.140 |
| 11 | 1.154 | 1.268 | 1.382 | 1.496 | 1.610 | 1.724 | 1.838 | 1.951 | 2.065 | 2.179 | 2.293 | 2.407 | 2.521 | 2.635 | 2.749 | 2.863 | 2.977 | 3.091 | 3.203 | 3.317 | 3.431 | 3.545 | 3.659 | 3.773 | 3.887 | 4.001 |
| 12 | 1.117 | 1.227 | 1.338 | 1.448 | 1.558 | 1.668 | 1.779 | 1.889 | 1.999 | 2.109 | 2.220 | 2.330 | 2.440 | 2.551 | 2.661 | 2.771 | 2.881 | 2.992 | 3.101 | 3.211 | 3.321 | 3.432 | 3.542 | 3.652 | 3.762 | 3.873 |
| 13 | 1.083 | 1.190 | 1.297 | 1.404 | 1.511 | 1.618 | 1.724 | 1.831 | 1.938 | 2.045 | 2.152 | 2.259 | 2.366 | 2.473 | 2.580 | 2.687 | 2.794 | 2.901 | 3.006 | 3.113 | 3.220 | 3.327 | 3.434 | 3.541 | 3.648 | 3.755 |
| 14 | 1.050 | 1.154 | 1.257 | 1.361 | 1.465 | 1.568 | 1.672 | 1.776 | 1.879 | 1.983 | 2.087 | 2.190 | 2.294 | 2.398 | 2.501 | 2.605 | 2.708 | 2.812 | 2.915 | 3.018 | 3.122 | 3.226 | 3.329 | 3.433 | 3.537 | 3.640 |
| 15 | 1.019 | 1.120 | 1.220 | 1.321 | 1.421 | 1.522 | 1.623 | 1.723 | 1.824 | 1.924 | 2.025 | 2.126 | 2.226 | 2.327 | 2.427 | 2.528 | 2.629 | 2.729 | 2.829 | 2.929 | 3.030 | 3.131 | 3.231 | 3.332 | 3.432 | 3.533 |
| 16 | 0.985 | 1.082 | 1.179 | 1.277 | 1.374 | 1.471 | 1.568 | 1.666 | 1.763 | 1.860 | 1.957 | 2.055 | 2.152 | 2.249 | 2.346 | 2.444 | 2.541 | 2.638 | 2.734 | 2.832 | 2.929 | 3.026 | 3.123 | 3.221 | 3.318 | 3.415 |
| 17 | 0.956 | 1.050 | 1.145 | 1.239 | 1.334 | 1.428 | 1.522 | 1.617 | 1.711 | 1.805 | 1.900 | 1.994 | 2.089 | 2.183 | 2.277 | 2.372 | 2.466 | 2.560 | 2.654 | 2.748 | 2.843 | 2.937 | 3.031 | 3.126 | 3.220 | 3.314 |
| 18 | 0.928 | 1.020 | 1.111 | 1.203 | 1.294 | 1.386 | 1.478 | 1.569 | 1.661 | 1.753 | 1.844 | 1.936 | 2.027 | 2.119 | 2.211 | 2.302 | 2.394 | 2.485 | 2.576 | 2.668 | 2.759 | 2.851 | 2.943 | 3.034 | 3.126 | 3.217 |
| 19 | 0.902 | 0.991 | 1.080 | 1.169 | 1.258 | 1.347 | 1.436 | 1.525 | 1.614 | 1.703 | 1.792 | 1.881 | 1.971 | 2.060 | 2.149 | 2.238 | 2.327 | 2.416 | 2.504 | 2.593 | 2.682 | 2.771 | 2.860 | 2.949 | 3.038 | 3.127 |
| 20 | 0.878 | 0.965 | 1.051 | 1.138 | 1.225 | 1.311 | 1.398 | 1.485 | 1.571 | 1.658 | 1.745 | 1.831 | 1.918 | 2.005 | 2.091 | 2.178 | 2.265 | 2.351 | 2.437 | 2.524 | 2.611 | 2.697 | 2.784 | 2.871 | 2.957 | 3.044 |
| 21 | 0.854 | 0.938 | 1.023 | 1.107 | 1.191 | 1.276 | 1.360 | 1.444 | 1.528 | 1.613 | 1.697 | 1.781 | 1.866 | 1.950 | 2.034 | 2.119 | 2.203 | 2.287 | 2.371 | 2.455 | 2.539 | 2.624 | 2.708 | 2.792 | 2.877 | 2.961 |
| 22 | 0.829 | 0.911 | 0.993 | 1.075 | 1.156 | 1.238 | 1.320 | 1.402 | 1.484 | 1.566 | 1.647 | 1.729 | 1.811 | 1.893 | 1.975 | 2.057 | 2.138 | 2.220 | 2.301 | 2.383 | 2.465 | 2.547 | 2.629 | 2.710 | 2.792 | 2.874 |
| 23 | 0.804 | 0.883 | 0.963 | 1.042 | 1.121 | 1.201 | 1.280 | 1.360 | 1.439 | 1.518 | 1.598 | 1.677 | 1.756 | 1.836 | 1.915 | 1.995 | 2.074 | 2.153 | 2.232 | 2.311 | 2.391 | 2.470 | 2.549 | 2.629 | 2.708 | 2.787 |
| 24 | 0.781 | 0.858 | 0.935 | 1.012 | 1.089 | 1.167 | 1.244 | 1.321 | 1.398 | 1.475 | 1.552 | 1.629 | 1.706 | 1.783 | 1.860 | 1.938 | 2.015 | 2.092 | 2.168 | 2.245 | 2.322 | 2.399 | 2.476 | 2.554 | 2.631 | 2.708 |
| 25 | 0.759 | 0.834 | 0.909 | 0.984 | 1.059 | 1.134 | 1.209 | 1.283 | 1.358 | 1.433 | 1.508 | 1.583 | 1.658 | 1.733 | 1.808 | 1.883 | 1.958 | 2.033 | 2.107 | 2.182 | 2.257 | 2.332 | 2.407 | 2.482 | 2.557 | 2.631 |

(1) The carbon dioxide absorption coefficient refers to the gas volume.

(2) To use this table as a bottle internal pressure correction table, for example, a gas volume of 4.729 is obtained from the intersection of the column line of 0.30 MPa and the row line of 10°C when the internal pressure of the bottle is 0.30 MPa at a liquid temperature of 10°C, and to correct this based on the standard temperature of 20°C, it is found that the location is in the middle of 4.691 and 4.778 when the value closest to 4.729 is searched in the row of 20°C. When the internal pressure of the bottle is determined in the column line here, 0.445 MPa is obtained.

# FIG. 1B

| M Pa | 0.26 | 0.27 | 0.28 | 0.29 | 0.30 | 0.31 | 0.32 | 0.33 | 0.34 | 0.35 | 0.36 | 0.37 | 0.38 | 0.39 | 0.40 | 0.41 | 0.42 | 0.43 | 0.44 | 0.45 | 0.46 | 0.47 | 0.48 | 0.49 | 0.50 |
|---|---|---|---|---|---|---|---|---|---|---|---|---|---|---|---|---|---|---|---|---|---|---|---|---|---|
| $kg/cm^2$ | 2.651 | 2.753 | 2.855 | 2.957 | 3.059 | 3.161 | 3.263 | 3.365 | 3.467 | 3.569 | 3.671 | 3.773 | 3.875 | 3.977 | 4.079 | 4.181 | 4.283 | 4.385 | 4.487 | 4.589 | 4.691 | 4.793 | 4.895 | 4.997 | 5.099 |
| ℃ | | | | | | | | | | | | | | | | | | | | | | | | | |
| 0 | 6.108 | 6.277 | 6.446 | 6.615 | 6.785 | 6.954 | 7.123 | 7.292 | 7.461 | 7.630 | 7.799 | 7.968 | 8.137 | 8.307 | 8.476 | 8.645 | 8.814 | 8.983 | 9.152 | 9.321 | 9.490 | 9.659 | 9.828 | 9.998 | 10.167 |
| 1 | 5.869 | 6.032 | 6.194 | 6.357 | 6.519 | 6.682 | 6.844 | 7.007 | 7.169 | 7.332 | 7.494 | 7.657 | 7.819 | 7.982 | 8.144 | 8.307 | 8.469 | 8.632 | 8.794 | 8.957 | 9.119 | 9.282 | 9.444 | 9.607 | 9.769 |
| 2 | 5.648 | 5.805 | 5.961 | 6.117 | 6.274 | 6.430 | 6.586 | 6.743 | 6.899 | 7.055 | 7.212 | 7.368 | 7.525 | 7.681 | 7.837 | 7.994 | 8.150 | 8.306 | 8.463 | 8.619 | 8.776 | 8.932 | 9.088 | 9.245 | 9.401 |
| 3 | 5.445 | 5.596 | 5.746 | 5.897 | 6.048 | 6.199 | 6.349 | 6.500 | 6.651 | 6.802 | 6.952 | 7.103 | 7.254 | 7.405 | 7.555 | 7.706 | 7.857 | 8.008 | 8.158 | 8.309 | 8.460 | 8.611 | 8.761 | 8.912 | 9.063 |
| 4 | 5.252 | 5.398 | 5.543 | 5.689 | 5.834 | 5.979 | 6.125 | 6.270 | 6.416 | 6.561 | 6.706 | 6.852 | 6.997 | 7.143 | 7.288 | 7.434 | 7.579 | 7.724 | 7.870 | 8.015 | 8.161 | 8.306 | 8.451 | 8.597 | 8.742 |
| 5 | 5.078 | 5.218 | 5.359 | 5.499 | 5.640 | 5.781 | 5.921 | 6.062 | 6.202 | 6.343 | 6.483 | 6.624 | 6.765 | 6.905 | 7.046 | 7.186 | 7.327 | 7.467 | 7.608 | 7.749 | 7.889 | 8.030 | 8.170 | 8.311 | 8.451 |
| 6 | 4.910 | 5.046 | 5.182 | 5.318 | 5.454 | 5.590 | 5.726 | 5.862 | 5.998 | 6.133 | 6.269 | 6.405 | 6.541 | 6.677 | 6.813 | 6.949 | 7.085 | 7.221 | 7.357 | 7.493 | 7.629 | 7.765 | 7.901 | 8.037 | 8.173 |
| 7 | 4.746 | 4.877 | 5.009 | 5.140 | 5.272 | 5.403 | 5.534 | 5.666 | 5.797 | 5.929 | 6.060 | 6.191 | 6.323 | 6.454 | 6.586 | 6.717 | 6.848 | 6.980 | 7.111 | 7.243 | 7.374 | 7.505 | 7.637 | 7.768 | 7.900 |
| 8 | 4.571 | 4.698 | 4.824 | 4.951 | 5.078 | 5.204 | 5.331 | 5.457 | 5.584 | 5.710 | 5.837 | 5.963 | 6.090 | 6.217 | 6.343 | 6.470 | 6.596 | 6.723 | 6.849 | 6.976 | 7.102 | 7.229 | 7.356 | 7.482 | 7.609 |
| 9 | 4.411 | 4.533 | 4.655 | 4.777 | 4.899 | 5.021 | 5.144 | 5.266 | 5.388 | 5.510 | 5.632 | 5.754 | 5.876 | 5.998 | 6.120 | 6.243 | 6.365 | 6.487 | 6.609 | 6.731 | 6.853 | 6.975 | 7.097 | 7.220 | 7.342 |
| 10 | 4.258 | 4.375 | 4.493 | 4.611 | 4.729 | 4.847 | 4.965 | 5.083 | 5.200 | 5.318 | 5.436 | 5.554 | 5.672 | 5.790 | 5.908 | 6.026 | 6.143 | 6.261 | 6.379 | 6.497 | 6.615 | 6.733 | 6.851 | 6.969 | 7.086 |
| 11 | 4.115 | 4.229 | 4.343 | 4.457 | 4.571 | 4.684 | 4.798 | 4.912 | 5.026 | 5.140 | 5.254 | 5.368 | 5.482 | 5.596 | 5.710 | 5.824 | 5.938 | 6.052 | 6.165 | 6.279 | 6.393 | 6.507 | 6.621 | 6.735 | 6.849 |
| 12 | 3.983 | 4.093 | 4.203 | 4.314 | 4.424 | 4.534 | 4.645 | 4.755 | 4.865 | 4.975 | 5.086 | 5.196 | 5.306 | 5.416 | 5.527 | 5.637 | 5.747 | 5.858 | 5.968 | 6.078 | 6.188 | 6.299 | 6.409 | 6.519 | 6.629 |
| 13 | 3.862 | 3.969 | 4.076 | 4.182 | 4.289 | 4.396 | 4.503 | 4.610 | 4.717 | 4.824 | 4.931 | 5.038 | 5.145 | 5.252 | 5.358 | 5.465 | 5.572 | 5.679 | 5.786 | 5.893 | 6.000 | 6.107 | 6.214 | 6.321 | 6.428 |
| 14 | 3.744 | 3.848 | 3.951 | 4.055 | 4.159 | 4.262 | 4.366 | 4.470 | 4.573 | 4.677 | 4.781 | 4.884 | 4.988 | 5.092 | 5.195 | 5.299 | 5.403 | 5.506 | 5.610 | 5.713 | 5.817 | 5.921 | 6.024 | 6.128 | 6.232 |
| 15 | 3.633 | 3.734 | 3.835 | 3.935 | 4.036 | 4.136 | 4.237 | 4.338 | 4.438 | 4.539 | 4.639 | 4.740 | 4.841 | 4.941 | 5.042 | 5.142 | 5.243 | 5.344 | 5.444 | 5.545 | 5.645 | 5.746 | 5.847 | 5.947 | 6.048 |
| 16 | 3.512 | 3.610 | 3.707 | 3.804 | 3.901 | 3.998 | 4.096 | 4.193 | 4.290 | 4.387 | 4.485 | 4.582 | 4.679 | 4.776 | 4.874 | 4.971 | 5.068 | 5.165 | 5.263 | 5.360 | 5.457 | 5.554 | 5.652 | 5.749 | 5.846 |
| 17 | 3.409 | 3.503 | 3.598 | 3.692 | 3.786 | 3.881 | 3.975 | 4.069 | 4.164 | 4.258 | 4.353 | 4.447 | 4.541 | 4.636 | 4.730 | 4.824 | 4.919 | 5.013 | 5.108 | 5.202 | 5.296 | 5.391 | 5.485 | 5.580 | 5.674 |
| 18 | 3.309 | 3.401 | 3.492 | 3.584 | 3.675 | 3.767 | 3.859 | 3.950 | 4.042 | 4.134 | 4.225 | 4.317 | 4.408 | 4.500 | 4.592 | 4.683 | 4.775 | 4.866 | 4.958 | 5.050 | 5.141 | 5.233 | 5.324 | 5.416 | 5.508 |
| 19 | 3.216 | 3.305 | 3.394 | 3.483 | 3.572 | 3.662 | 3.751 | 3.840 | 3.929 | 4.018 | 4.107 | 4.196 | 4.285 | 4.374 | 4.463 | 4.552 | 4.641 | 4.730 | 4.819 | 4.908 | 4.997 | 5.086 | 5.175 | 5.264 | 5.353 |
| 20 | 3.131 | 3.217 | 3.304 | 3.391 | 3.477 | 3.564 | 3.651 | 3.737 | 3.824 | 3.911 | 3.997 | 4.084 | 4.171 | 4.258 | 4.344 | 4.431 | 4.518 | 4.604 | 4.691 | 4.778 | 4.864 | 4.951 | 5.038 | 5.124 | 5.211 |
| 21 | 3.045 | 3.129 | 3.214 | 3.298 | 3.382 | 3.467 | 3.551 | 3.635 | 3.720 | 3.804 | 3.888 | 3.973 | 4.057 | 4.141 | 4.225 | 4.310 | 4.394 | 4.478 | 4.563 | 4.647 | 4.731 | 4.816 | 4.900 | 4.984 | 5.069 |
| 22 | 2.956 | 3.038 | 3.120 | 3.202 | 3.283 | 3.365 | 3.447 | 3.529 | 3.611 | 3.693 | 3.774 | 3.856 | 3.938 | 4.020 | 4.102 | 4.184 | 4.265 | 4.347 | 4.429 | 4.511 | 4.593 | 4.675 | 4.756 | 4.838 | 4.920 |
| 23 | 2.867 | 2.946 | 3.026 | 3.105 | 3.184 | 3.264 | 3.343 | 3.422 | 3.502 | 3.581 | 3.661 | 3.740 | 3.819 | 3.899 | 3.978 | 4.057 | 4.137 | 4.216 | 4.296 | 4.375 | 4.454 | 4.534 | 4.613 | 4.692 | 4.772 |
| 24 | 2.785 | 2.862 | 2.939 | 3.016 | 3.093 | 3.170 | 3.247 | 3.325 | 3.402 | 3.479 | 3.556 | 3.633 | 3.710 | 3.787 | 3.864 | 3.941 | 4.018 | 4.096 | 4.173 | 4.250 | 4.327 | 4.404 | 4.481 | 4.558 | 4.635 |
| 25 | 2.706 | 2.781 | 2.856 | 2.931 | 3.006 | 3.081 | 3.156 | 3.231 | 3.306 | 3.381 | 3.456 | 3.531 | 3.606 | 3.680 | 3.755 | 3.830 | 3.905 | 3.980 | 4.055 | 4.130 | 4.205 | 4.280 | 4.355 | 4.430 | 4.505 |

## INTERNATIONAL SEARCH REPORT

International application No.
**PCT/JP2022/006657**

**A. CLASSIFICATION OF SUBJECT MATTER**

***A23L 27/00***(2016.01)i; ***A23L 27/50***(2016.01)i; ***A23L 5/10***(2016.01)i
FI: A23L27/50 A; A23L27/50 E; A23L27/50 103Z; A23L5/10 Z; A23L27/00 Z

According to International Patent Classification (IPC) or to both national classification and IPC

**B. FIELDS SEARCHED**

Minimum documentation searched (classification system followed by classification symbols)

A23L5/10; A23L27/00; A23L27/50

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII); CAplus/FSTA/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WRIGHT, J. γ-Nonalactone. Perfumer & Flavorist. 2017, vol. 42, pp. 18-20<br>p. 18, right column, paragraph [0002] from the bottom, p. 19, left column, the last paragraph to middle column, paragraph [0001] | 1, 7-12, 14-17 |
| X | JP 2016-93108 A (AKAGI NYUGYO CO LTD) 26 May 2016 (2016-05-26)<br>claims, paragraph [0007], examples | 6-7, 9, 11-13, 15, 17 |
| X | JP 59-39242 A (MORINAGA SEIKA KK) 03 March 1984 (1984-03-03)<br>claims, examples | 7, 9, 11-12, 15, 17 |
| A | JP 2020-137531 A (KIKKOMAN CORP) 03 September 2020 (2020-09-03)<br>claims, paragraph [0112], examples | 1-17 |
| A | LEE, S. M. et al. Determination of key volatile compounds related to long-term fermentation of soy sauce. Journal of Food Science. 2019, vol. 84, pp. 2758-2776<br>abstract, table 3 | 1-17 |
| A | JP 2014-83028 A (OGAWA & CO LTD) 12 May 2014 (2014-05-12)<br>claims | 1-17 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 April 2022** | **19 April 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

## INTERNATIONAL SEARCH REPORT

International application No.
**PCT/JP2022/006657**

**C. DOCUMENTS CONSIDERED TO BE RELEVANT**

| Category* | Citation of document, with indication, where appropriate, of the relevant passages | Relevant to claim No. |
|---|---|---|
| A | JP 2016-59339 A (KIKKOMAN CORP) 25 April 2016 (2016-04-25) claims | 1-17 |

Form PCT/ISA/210 (second sheet) (January 2015)

INTERNATIONAL SEARCH REPORT

International application No.
PCT/JP2022/006657

**Box No. III Observations where unity of invention is lacking (Continuation of item 3 of first sheet)**

This International Searching Authority found multiple inventions in this international application, as follows:

(Invention 1) Claim 1

Claim 1 has the special technical feature of a soy sauce or soy sauce-like seasoning in which the content of at least one γ-lactone selected from the group consisting of γ-lactones represented by general formula (I) is 100-60,000 ppb, and is thus classified as invention 1.

(Invention 2) Claims 2-5

Claims 2-5 have the common technical feature relating to a soy sauce containing γ-lactone with claim 1 classified as invention 1. However, said technical feature does not make a contribution over the prior art in light of the disclosure of documents 5-7, and thus cannot be said to be a special technical feature. Furthermore, there are no other same or corresponding special technical features between these inventions.

In addition, claims 2-5 are not dependent on claim 1. Furthermore, claims 2-5 are not substantially identical to or similarly closely related to any of the claims classified as invention 1.

Therefore, claims 2-5 cannot be classified as invention 1.

In addition, claims 2-5 has the special technical feature of a method for producing γ-nonalactone-containing soy sauce, the method comprising: a step for providing unrefined soy sauce obtained by providing soy sauce koji to lactic acid fermentation by means of soy sauce lactic acid bacteria to solid-liquid separation treatment to obtain unrefined soy sauce liquid; and a step for providing the unrefined soy sauce liquid to yeast fermentation by means of soy sauce yeast in a closed system to obtain γ-nonalactone-containing soy sauce, and are thus classified as invention 2.

(Invention 3) Claims 6-17

Claims 6-17 share the common technical feature relating to a food containing γ-lactone with claim 1 classified as invention 1 and claims 2-5 classified as invention 2. However, said technical feature does not make a contribution over the prior art in light of the disclosure of documents 1-3 and 5-7, and thus cannot be said to be a special technical feature. Furthermore, there are no other same or corresponding special technical features between these inventions.

In addition, claims 6-17 are not dependent on claims 1 and 2. Furthermore, claims 6-17 are not substantially identical to or similarly closely related to any of the claims classified as invention 1 or 2.

Therefore, claims 6-17 cannot be classified as either invention 1 or 2.

In addition, claim 6-17 have the special technical feature of relating to a composition contained in a heated container including a food material and at least one γ-lactone selected from the group consisting of γ-lactones represented by general formula (I), and are thus classified as invention 3.

Form PCT/ISA/210 (continuation of first sheet) (January 2015)

## INTERNATIONAL SEARCH REPORT

International application No.
**PCT/JP2022/006657**

**Box No. III Observations where unity of invention is lacking (Continuation of item 3 of first sheet)**

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/006657**

| Patent document cited in search report | Publication date (day/month/year) | Patent family member(s) | Publication date (day/month/year) |
|---|---|---|---|
| JP 2016-93108 A | 26 May 2016 | (Family: none) | |
| JP 59-39242 A | 03 March 1984 | (Family: none) | |
| JP 2020-137531 A | 03 September 2020 | US 2020/0281240 A1<br>claims, paragraph [0215], examples<br>WO 2019/083041 A1<br>EP 3701807 A1<br>CN 111278299 A<br>CA 3080106 A<br>RU 2021100082 A<br>JP 2019-80494 A<br>JP 2020-137530 A<br>JP 2021-35351 A | |
| JP 2014-83028 A | 12 May 2014 | (Family: none) | |
| JP 2016-59339 A | 25 April 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016140321 A
- JP 2014083028 A
- JP 6343710 B
- JP 6479380 B
- JP 4939464 B
- JP 2021025285 A
- JP 2021051167 A
- JP 2021051168 A